# EUROPEAN PATENT APPLICATION

(11) **EP 4 068 884 A1**
(43) Date of publication of application: **05.10.2022**
(21) Application number: 20893614.6
(22) Date of filing: 20.11.2020
(51) Int. Cl.: H04W 72/04, H04W 92/18, H04W 4/40, H04W 88/04

(54) **COMMUNICATION SYSTEM, COMMUNICATION TERMINAL, AND BASE STATION**

(30) Priority: 26.11.2019 JP 2019213347
(71) Applicant: MITSUBISHI ELECTRIC CORPORATION, Chiyoda-ku Tokyo 100-8310 (JP)
(72) Inventor: MOCHIZUKI Mitsuru, Tokyo 100-8310 (JP); SHIMODA Tadahiro, Tokyo 100-8310 (JP); IWAYAMA Naofumi, Tokyo 100-8310 (JP); HASEGAWA Fumiki, Tokyo 100-8310 (JP); NAKAZAWA Masayuki, Tokyo 100-8310 (JP)
(74) Representative: Sajda, Wolf E.
(86) International application number: PCT/JP2020/043308
(87) International publication number: WO 2021/106761

(57) **Abstract**

In the SL communication, the QoS required for each service is maintained, and the reliability of the service is enhanced. A communication system includes a base station, and a plurality of communication terminals configured to perform communication with the base station and perform Device-to-Device communication. A first communication terminal transmits, to a third communication terminal, a scheduling request for performing the Device-to-Device communication with a second communication terminal. The third communication terminal transmits, to the base station, the scheduling request received from the first communication terminal. In response to the scheduling request received from the third communication terminal, the base station generates scheduling information on the Device-to-Device communication between the first communication terminal and the second communication terminal, and transmits the scheduling information to the third communication terminal. The third communication terminal transmits, to the first communication terminal, the scheduling information received from the base station.

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

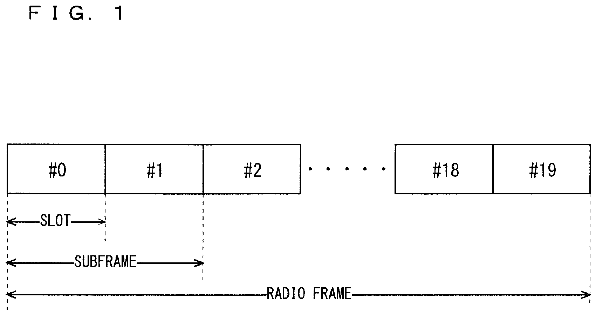

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgment (Ack) / negative acknowledgment (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a data demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions validly by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211 V15.7.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Furthermore, several new technologies have been studied in 3GPP. For example, supporting services using sidelink (SL) communication not only in the EPS but also in the 5G core system has been studied (Non-Patent Documents 1, 20, 21, and 22). Examples of the services using the SL communication include V2X services and proximity services.

### Prior-Art Documents

### Non-Patent Documents

Non-Patent Document 1: 3GPP TS 36.300 V15.7.0
Non-Patent Document 2: 3GPP S1-083461
Non-Patent Document 3: 3GPP TR 36.814 V9.2.0
Non-Patent Document 4: 3GPP TR 36.912 V15.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.2.0
Non-Patent Document 9: 3GPP TR 38.804 V14.0.0
Non-Patent Document 10: 3GPP TR 38.912 V15.0.0
Non-Patent Document 11: 3GPP RP-172115
Non-Patent Document 12: 3GPP TS 37.340 V15.7.0
Non-Patent Document 13: 3GPP TS 38.211 V15.7.0
Non-Patent Document 14: 3GPP TS 38.213 V15.7.0
Non-Patent Document 15: 3GPP TS 38.214 V15.7.0
Non-Patent Document 16: 3GPP TS 38.300 V15.7.0
Non-Patent Document 17: 3GPP TS 38.321 V15.7.0
Non-Patent Document 18: 3GPP TS 38.212 V15.7.0
Non-Patent Document 19: 3GPP RP-161266
Non-Patent Document 20: 3GPP TS 23.285 V16.1.0
Non-Patent Document 21: 3GPP TS 23.287 V16.0.0
Non-Patent Document 22: 3GPP TS 23.303 V15.1.0
Non-Patent Document 23: 3GPP TR 38.885 V16.0.0
Non-Patent Document 24: 3GPP TR 23.703 V12.0.0
Non-Patent Document 25: 3GPP R2-1904275
Non-Patent Document 26: 3GPP TS 38.331 V15.7.0

### Summary

### Problems to be Solved by the Invention

Supporting various services using the SL communication (also referred to as the PC5 communication) not only in the EPS but also in the 5G core system has been studied (Non-Patent Documents 1, 20, 21, and 22). Communication is performed between devices in the SL communication. A proposal is made on scheduling the SL communication by a device different from a device that performs the Device-to-Device communication in the SL communication (Non-Patent Document 23). Another proposal is made on the indirect communication via a relay as well as the direct communication between devices in the SL communication (Non-Patent Document 24). In the SL communication using not only the devices performing the SL communication but also other devices, how to satisfy the QoS required for each of the services and how to enhance the reliability of the service are problems.

In view of the problems, one of the objects of the present invention is to provide a technology for maintaining the QoS required for each of the services and enhancing the reliability of the service in the SL communication.

### Means to Solve the Problems

A communication system according to the present invention is a communication system including a base station, and a plurality of communication terminals configured to perform communication with the base station and perform Device-to-Device communication, wherein a first communication terminal transmits, to a third communication terminal, a scheduling request for performing the Device-to-Device communication with a second communication terminal, the first, second, and third communication terminals being included in the plurality of communication terminals, the third communication terminal transmits, to the base station, the scheduling request received from the first communication terminal, in response to the scheduling request received from the third communication terminal, the base station generates scheduling information on the Device-to-Device communication between the first communication terminal and the second communication terminal, and transmits the scheduling information to the third communication terminal, and the third communication terminal transmits, to the first communication terminal, the scheduling information received from the base station.

A communication terminal according to the present invention is a communication terminal configured to perform communication with a base station and perform Device-to-Device communication, wherein the communication terminal transmits, to another communication terminal, a scheduling request for performing the Device-to-Device communication, and the communication terminal receives, from the other communication terminal, scheduling information generated in response to the scheduling request.

A communication terminal according to the present invention is a communication terminal configured to perform communication with a base station and perform Device-to-Device communication, wherein the communication terminal receives, from another communication terminal, a scheduling request for performing the Device-to-Device communication with the other communication terminal, and transmits the scheduling request to the base station, and the communication terminal receives, from the base station, scheduling information generated by the base station in response to the scheduling request, and transmits the scheduling information to the other communication terminal.

A base station according to the present invention is a base station configured to perform communication with communication terminals, wherein the base station receives, from a third communication terminal, a scheduling request for performing Device-to-Device communication between a first communication terminal and a second communication terminal, in response to the scheduling request, the base station generates scheduling information on the Device-to-Device communication between the first communication terminal and the second communication terminal, and the base station transmits the scheduling information to the third communication terminal.

### Effects of the Invention

The present invention can maintain the QoS required for each of the services and enhance the reliability of the service in the SL communication.

The object, features, aspects and advantages of the present invention will become more apparent from the following detailed description and the accompanying drawings of the present invention.

### Brief Description of Drawings

FIG. 1 is a diagram illustrating the configuration of a radio frame for use in an LTE communication system.
FIG. 2 is a block diagram showing the overall configuration of an LTE communication system 200 under discussion of 3GPP.
FIG. 3 is a block diagram illustrating an overall configuration of a NR communication system 210 that has been discussed in 3GPP.
FIG. 4 illustrates a structure of the DC to be performed by an eNB and a gNB that are connected to the EPC.
FIG. 5 illustrates a structure of the DC to be performed by gNBs that are connected to the NG core.
FIG. 6 illustrates a structure of the DC to be performed by the eNB and the gNB that are connected to the NG core.
FIG. 7 illustrates a structure of the DC to be performed by the eNB and the gNB that are connected to the NG core.
FIG. 8 is a block diagram showing the configuration of a user equipment 202 shown in FIG. 2.
FIG. 9 is a block diagram showing the configuration of a base station 203 shown in FIG. 2.
FIG. 10 is a block diagram showing the configuration of an MME
FIG. 11 is a block diagram illustrating a configuration of the 5GC.
FIG. 12 is a flowchart showing an outline from a cell search to an idle state operation performed by a communication terminal (UE) in LTE communication system.
FIG. 13 illustrates an example structure of a cell in an NR system.
FIG. 14 is a sequence diagram illustrating an example where the gNB schedules the SL communication between UEs according to the first embodiment.
FIG. 15 is a sequence diagram illustrating the example where the gNB schedules the SL communication between UEs according to the first embodiment.
FIG. 16 is a sequence diagram illustrating an example where the S-UE schedules the SL communication between other UEs according to the first modification of the first embodiment.
FIG. 17 is a sequence diagram illustrating the example where the S-UE schedules the SL communication between other UEs according to the first modification of the first embodiment.
FIG. 18 is a sequence diagram illustrating an example where the S-UE schedules the SL communication between other UEs according to the second modification of the first embodiment.
FIG. 19 is a sequence diagram illustrating the example where the S-UE schedules the SL communication between other UEs according to the second modification of the first embodiment.
FIG. 20 is a sequence diagram illustrating an example where the S-UE schedules the SL communication between other UEs according to the third modification of the first embodiment.
FIG. 21 illustrates example preemption processes performed by the S-UE according to the second embodiment.
FIG. 22 illustrates an example method for transmitting the PI from the UE-TX 1 to the UE-RX 1 according to the second embodiment.
FIG. 23 illustrates an example method for transmitting the PI from the UE-TX 1 to the UE-RX 1 according to the first modification of the second embodiment.
FIG. 24 is a conceptual diagram illustrating a conventional example of the unicast communication between the UE-TX and the UE-RX through a relay UE.
FIG. 25 is a conceptual diagram illustrating an example of the groupcast communication between the UE-TX and a plurality of UE-RXs through a relay UE according to the third embodiment.
FIG. 26 is a sequence diagram illustrating an example of the groupcast communication between the UE-TX and a plurality of UE-RXs through the relay UE according to the third embodiment.
FIG. 27 is a sequence diagram illustrating the example of the groupcast communication between the UE-TX and a plurality of UE-RXs through the relay UE according to the third embodiment.
FIG. 28 is a sequence diagram illustrating another example of the groupcast communication between the UE-TX and a plurality of UE-RXs through the relay UE according to the third embodiment.
FIG. 29 is a conceptual diagram illustrating an example of the groupcast communication between the UE-TX and a plurality of UE-RXs through relay UEs according to the first modification of the third embodiment.
FIG. 30 is a sequence diagram illustrating an example of the groupcast communication between the UE-TX and a plurality of UE-RXs through relay UEs according to the first modification of the third embodiment.
FIG. 31 is a sequence diagram illustrating the example of the groupcast communication between the UE-TX and a plurality of UE-RXs through relay UEs according to the first modification of the third embodiment.
FIG. 32 is a sequence diagram illustrating another example of the groupcast communication between the UE-TX and a plurality of UE-RXs through relay UEs according to the first modification of the third embodiment.
FIG. 33 is a sequence diagram illustrating another example of the groupcast communication between the UE-TX and a plurality of UE-RXs through relay UEs according to the first modification of the third embodiment.
FIG. 34 is a conceptual diagram illustrating an example of the groupcast communication between the UE-TX and a plurality of UE-RXs through relay UEs according to the second modification of the third embodiment.
FIG. 35 is a sequence diagram illustrating an example of the groupcast communication between the UE-TX and a plurality of UE-RXs through relay UEs according to the second modification of the third embodiment.
FIG. 36 illustrates an example protocol configuration of each node in performing the UE-to-UE indirect communication through a relay UE in the SL according to the fourth embodiment.
FIG. 37 illustrates an example where the configuration of the RLC bearer between the UE-TX and the relay UE is consistent with that between the relay UE and the UE-RX according to the fourth embodiment.
FIG. 38 illustrates another example protocol configuration of each node in performing the UE-to-UE indirect communication through a relay UE in the SL according to the fourth embodiment.
FIG. 39 is a conceptual diagram illustrating packet duplication in performing the indirect communication through relay UEs in the SL communication according to the first modification of the fourth embodiment.
FIG. 40 illustrates an example protocol configuration for the packet duplication in performing the indirect communication through relay UEs in the SL communication according to the first modification of the fourth embodiment.
FIG. 41 illustrates another example protocol configuration for the packet duplication in performing the indirect communication through relay UEs in the SL communication according to the first modification of the fourth embodiment.
FIG. 42 is a conceptual diagram illustrating an example where the relay UE concatenates pieces of data and relays the concatenated data in the SL communication according to the second modification of the fourth embodiment.
FIG. 43 illustrates the first example protocol configuration for the relay UE to concatenate the pieces of data and relay the concatenated data in the SL communication according to the second modification of the fourth embodiment.
FIG. 44 illustrates the second example protocol configuration for the relay UE to concatenate the pieces of data and relay the concatenated data in the SL communication according to the second modification of the fourth embodiment.
FIG. 45 illustrates the third example protocol configuration for the relay UE to concatenate the pieces of data and relay the concatenated data in the SL communication according to the second modification of the fourth embodiment.
FIG. 46 illustrates an example of assigning a plurality of system information area IDs to one cell according to the fifth embodiment.
FIG. 47 illustrates an example of providing, in one SIB including pieces of information of the same kind, a plurality of SIBs with one or more different pieces of information in the SIB according to the fifth embodiment.
FIG. 48 illustrates the first example configuration of a different piece of information for each system information area ID in one SIB according to the fifth embodiment.
FIG. 49 illustrates the second example configuration of a different piece of information for each system information area ID in one SIB according to the fifth embodiment.

### Description of Embodiments

### The First Embodiment

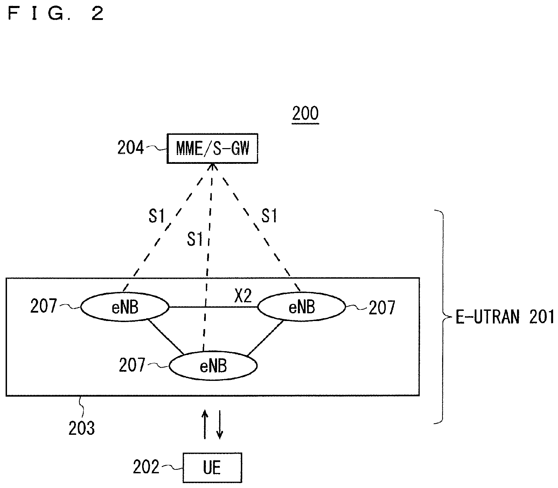

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC_IDLE and RRC_CONNECTED.

In RRC_IDLE, public land mobile network (PLMN) selection, system information (SI) broadcast, paging, cell reselection, mobility, and the like are performed. In RRC_CONNECTED, the user equipment has RRC connection and is capable of transmitting and receiving data to and from a network. In RRC _CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

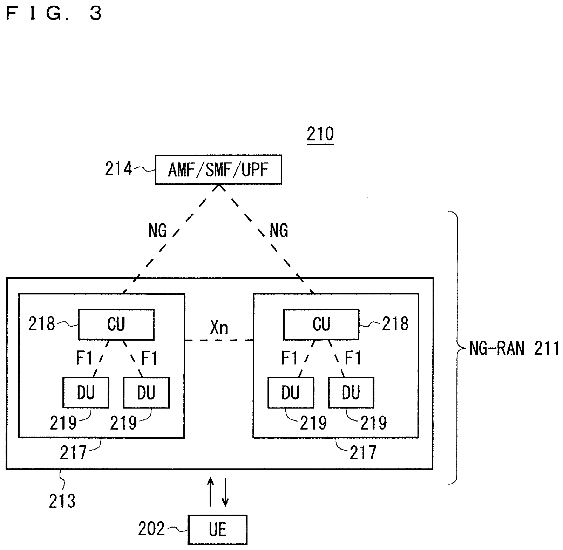

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NR base station (NG-RAN NodeB (gNB))") 213, and transmits and receives signals to and from the NR base station 213 via radio communication. Furthermore, the core network is referred to as a 5G Core (5GC).

When control protocols for the UE 202, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC _CONNECTED, and RRC INACTIVE.

RRC_IDLE and RRC_CONNECTED are identical to those in LTE. In RRC_INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

The 5G communication system may include the Unified Data Management (UDM) function and the Policy Control Function (PCF) described in 3GPP TS23.501 V16.1.0. The UDM and/or the PCF may be included in the 5GC unit in FIG. 3.

The 5G communication system may include the Non-3GPP Interworking Function (N3IWF) described in 3GPP TS23.501 V16.1.0. The N3IWF may terminate an Access Network (AN) with the UE in a non-3GPP access with the UE.

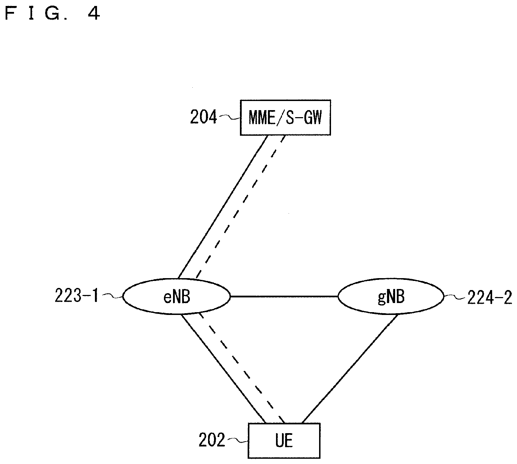

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

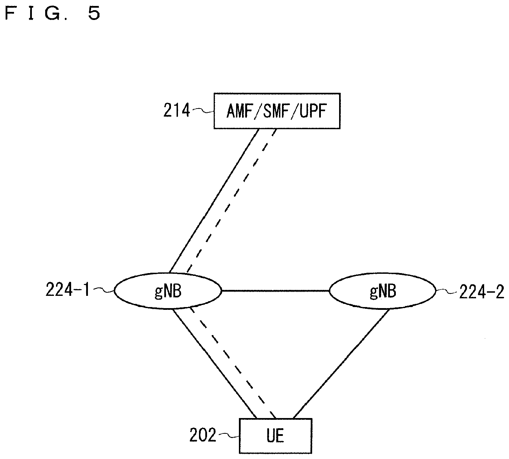

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

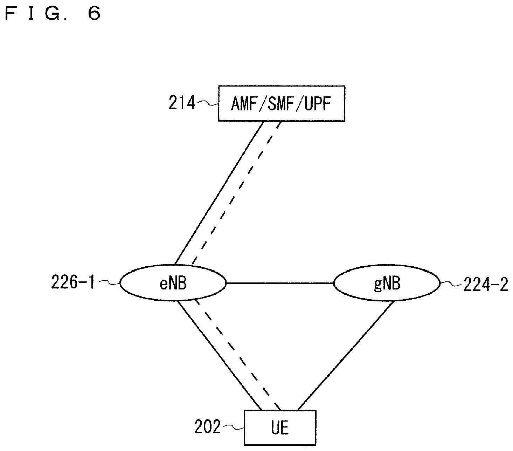

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

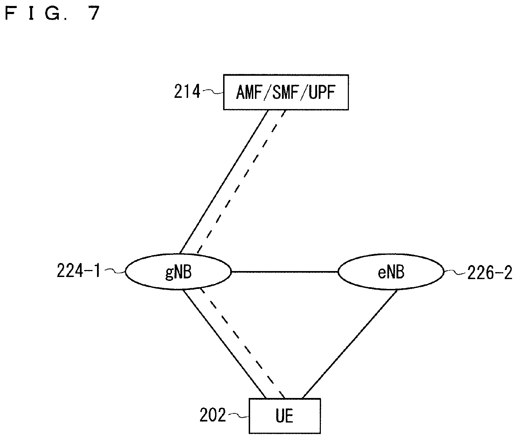

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

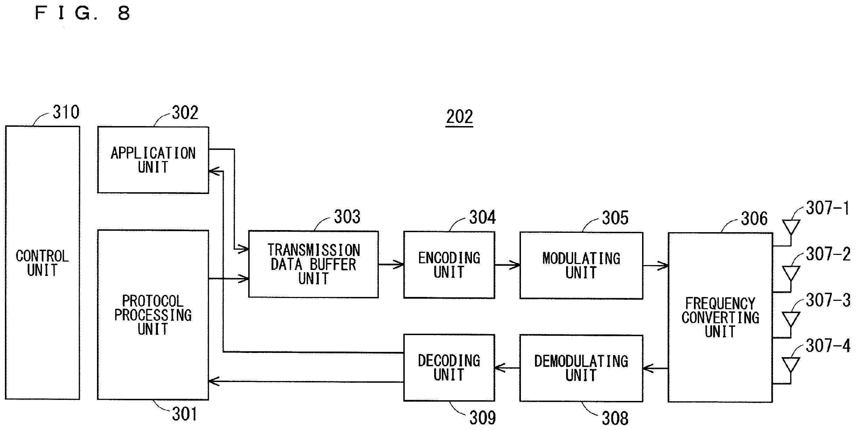

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process.

The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction.

Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

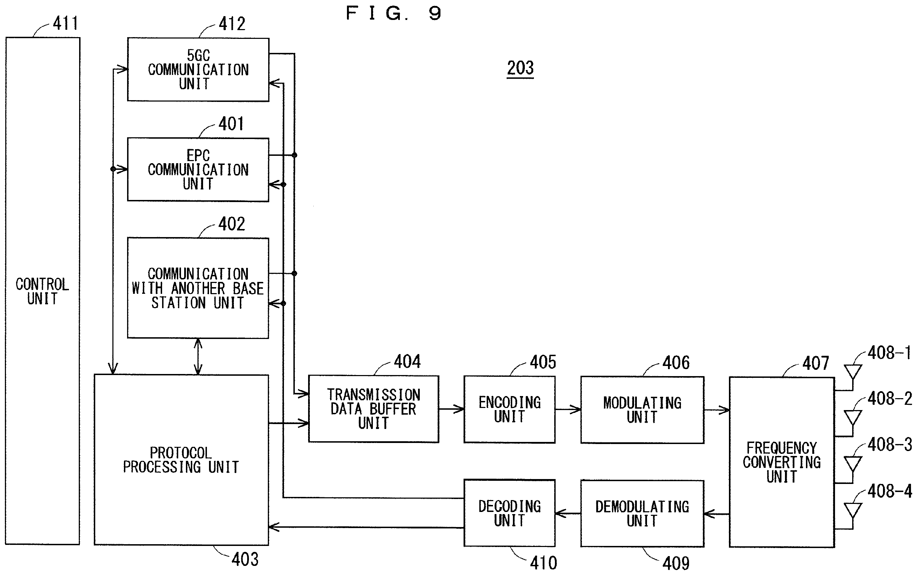

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station. The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction.

Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401, and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

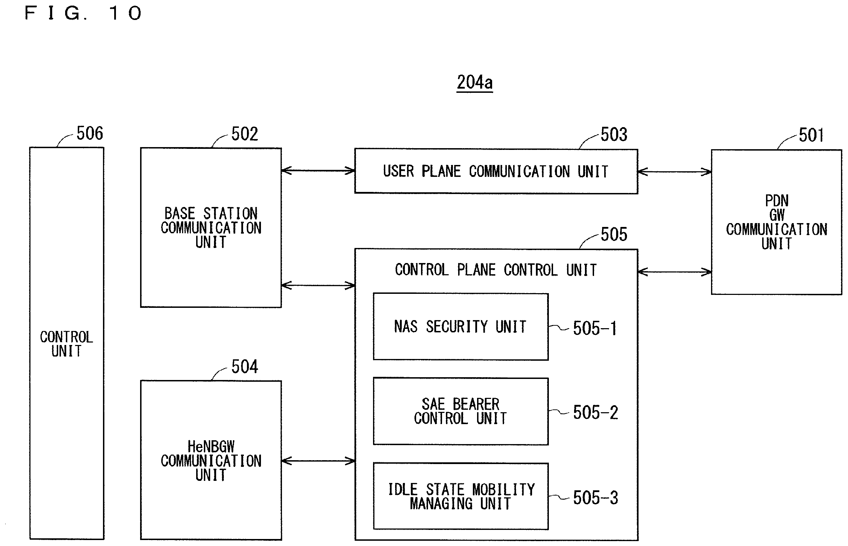

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface.

In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility managing unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer. The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the eNBs 207 to be connected to the MME 204a, CSG IDs, and a whitelist.

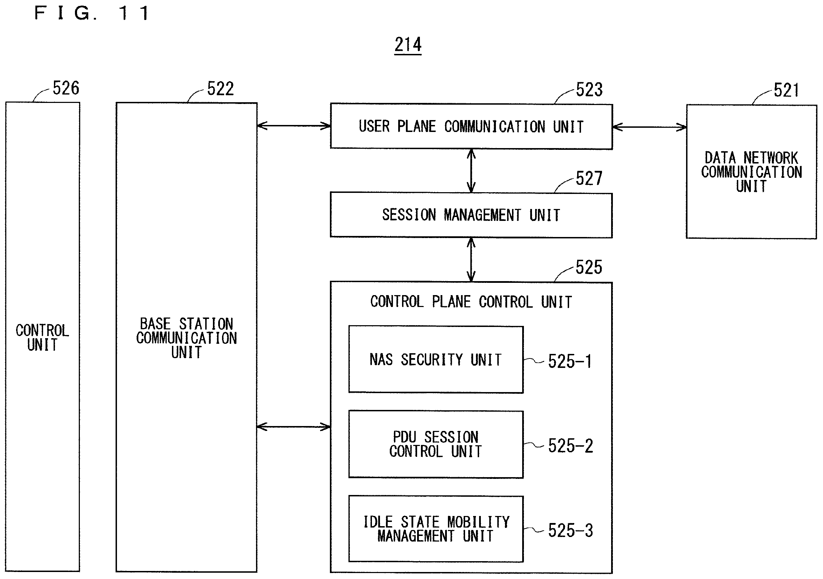

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213.

When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data to a session management unit 527 through the user plane control unit 523. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility managing unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility managing unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

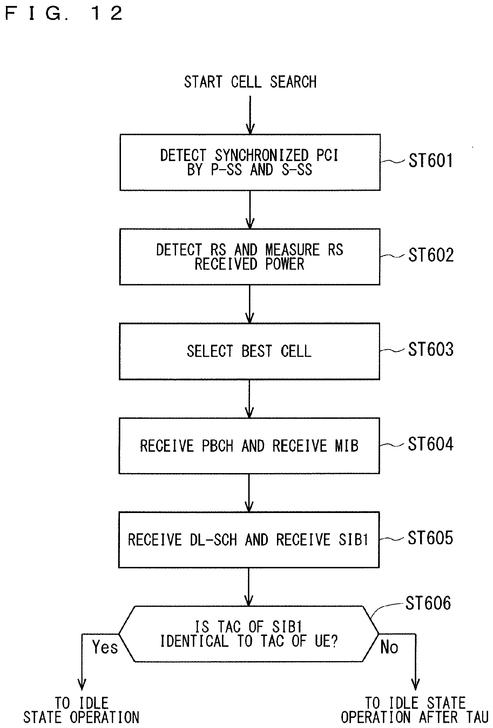

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP) for the synchronized cells. The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

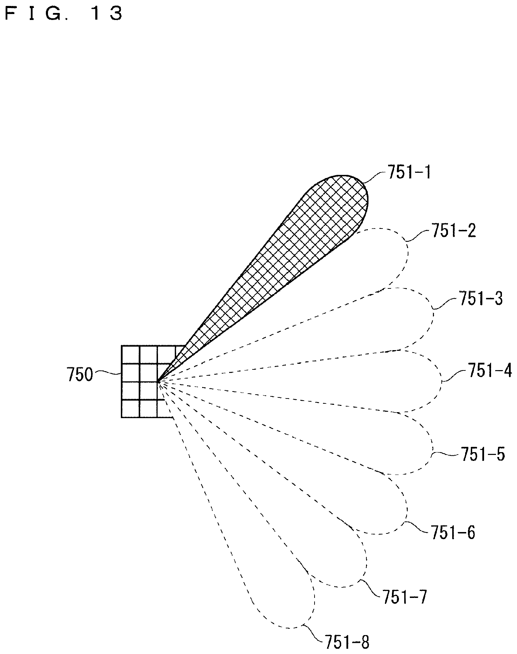

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

In 3GPP, the Side Link (SL) is supported for the Device-to-Device (D2D) communication and the Vehicle-to-vehicle (V2V) communication (see Non-Patent Document 1). The SL is defined by a PC5 interface.

The physical channels (see Non-Patent Document 1) to be used for the SL are described. A physical sidelink broadcast channel (PSBCH) carries information related to systems and synchronization, and is transmitted from the UE.

A physical sidelink discovery channel (PSDCH) carries a sidelink discovery message from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

The transport channels to be used for the SL (see Non-Patent Document 1) are described. A sidelink broadcast channel (SL-BCH) has a predetermined transport format, and is mapped to the PSBCH that is a physical channel.

A sidelink discovery channel (SL-DCH) has periodic broadcast transmission of a fixed size and a predetermined format. The SL-DCH supports both of the UE autonomous resource selection and the resource allocation scheduled by the eNB. The SL-DCH has a collision risk in the UE autonomous resource selection. The SL-DCH has no collision when the eNB allocates dedicated resources to the UE. Although the SL-DCH supports the HARQ combining, it does not support the HARQ feedback. The SL-DCH is mapped to the PSDCH that is a physical channel.

A sidelink shared channel (SL-SCH) supports broadcast transmission. The SL-SCH supports both of the UE autonomous resource selection and the resource allocation scheduled by the eNB. The SL-SCH has a collision risk in the UE autonomous resource selection. The SL-SCH has no collision when the eNB allocates dedicated resources to the UE. Although the SL-SCH supports the HARQ combining, it does not support the HARQ feedback. The SL-SCH supports dynamic link adaptation by varying the transmission power, modulation, and coding. The SL-SCH is mapped to the PSSCH that is a physical channel.

The logical channels to be used for the SL (see Non-Patent Document 1) are described. A Sidelink Broadcast Control Channel (SBCCH) is a sidelink channel for broadcasting sidelink system information from one UE to other UEs. The SBCCH is mapped to the SL-BCH that is a transport channel.

A Sidelink Traffic Channel (STCH) is a point-to-multipoint sidelink traffic channel for transmitting user information from one UE to other UEs. This STCH is used only by sidelink communication capable UEs and V2X sidelink communication capable UEs. Point-to-point communication between two sidelink communication capable UEs is realized with the STCH. The STCH is mapped to the SL-SCH that is a transport channel.

Supporting the V2X communication also in NR has been studied in 3GPP. Study of the V2X communication in NR has been pursued based on the LTE system and the LTE-A system. There are changes and additions from the LTE system and the LTE-A system in the following points.

In LTE, the SL communication relies only on broadcasts. Support of not only broadcasts but also unicasts and groupcasts in the SL communication in NR has been studied (see Non-Patent Document 21 (TS23.287)).

Support of, for example, the HARQ feedback (Ack/Nack) or the CSI report in the unicast communication or the groupcast communication has been studied.

Support of the PC5-S signaling has been studied to support not only broadcasts but also unicasts and groupcasts in the SL communication (see Non-Patent Document 21 (TS23.287)). For example, the PC5-S signaling is performed for establishing the SL or a link for performing the PC5 communication. The link is implemented by the V2X layer, and is also referred to as a Layer-2 link.

Supporting the RRC signaling in the SL communication has also been studied (see Non-Patent Document 21 (TS23.287)). The RRC signaling in the SL communication is also referred to as PC5 RRC signaling. Example proposals include notifying, between the UEs performing the PC5 communication, the UE capability or configuration of the AS layer for performing the V2X communication using the PC5 communication.

Conventionally, the sidelink communication (SL communication) between a transmission UE (referred to as a UE-TX) and a reception UE (referred to as a UE-RX) is scheduled by the gNB serving the UE-TX or by the UE-TX itself in the SL communication. The mode in which the gNB serving the UE-TX performs the scheduling is referred to as a mode-1, whereas the mode in which the UE-TX itself performs the scheduling is referred to as a mode-2 (see Non-Patent Document 23).

For example, the gNB or the UE-TX itself schedules the SL communication in the V2X service using the SL communication. When the gNB schedules the SL communication, the CN provides the gNB with the V2X policy/parameter of the V2X service to be implemented between the UE-TX and the UE-RX using the SL communication, in response to a request for providing the V2X policy/parameter from the UE-TX to the CN (see Non-Patent Document 21). When the UE-TX itself schedules the SL communication, the CN provides the UE-TX with the V2X policy/parameter in response to a request for providing the V2X policy/parameter from the UE-TX to the CN (see Non-Patent Document 21).

Subdividing the mode-2 that is a scheduling method performed by the UE-TX itself has been proposed in 3GPP. The proposed subdividing methods include a method for the UE to select resources for the SL communication for other UEs (a mode-2(b)) and a method for the UE to schedule the SL communication for other UEs (a mode-2(d)) (see Non-Patent Document 23).

In the methods such as the mode-2(b) and the mode-2(d), the UE that selects resources or performs the scheduling (hereinafter referred to as a scheduling UE (S-UE)) needs to recognize the V2X policy/parameter between the UE-TX and the UE-RX which actually implement the V2X service using the SL communication. However, the S-UE is neither the gNB nor the UE that actually performs the SL communication for the V2X service. Thus, the V2X policy/parameter is not provided to the S-UE in the conventional methods.

Consequently, the S-UE has a problem of failing to perform the scheduling appropriate for the V2X policy/parameter for the SL communication between the UE-TX and the UE-RX. This causes a problem of unsatisfactory QoS required for the V2X service to be implemented between the UE-TX and the UE-RX.

The first embodiment discloses a method for solving such problems.

The UE-TX performs a V2X policy/parameter providing process with the CN through a RAN node such as the gNB in advance. The UE-TX requests, through the gNB, the CN to provide the V2X policy/parameter in the V2X policy/parameter providing process. Upon receipt of the request, the CN provides the gNB with the V2X policy/parameter. Upon receipt of the request, the CN may provide the UE-TX with the V2X policy/parameter. The V2X policy or the V2X parameter may be, for example, a V2X policy or a V2X parameter in the PC5 (also referred to as a PC5 reference point). Examples of the V2X parameter include a QoS parameter.

A node of the CN may be the PCF. The PCF may provide the gNB with the V2X policy/parameter through the AMF. Alternatively, the CN node may be the AMF. This is valid when the AMF stores, in advance, the V2X policy/parameter of the UE-TX which has been obtained from the PCF.

The UE-TX being served by the gNB should perform the V2X policy/parameter providing process. The gNB may obtain the V2X policies/parameters of a plurality of UE-TXs being served thereby. This enables the gNB to obtain the V2X policy/parameter of the UE-TX from the CN.

The gNB may store the V2X policy/parameter of the UE-TX which has been obtained from the CN. The gNB may associate the V2X policy/parameter with an identifier of the UE-TX and/or information for identifying the V2X service, and store the V2X policy/parameter. The gNB can recognize for which UE-TX and for which V2X service the V2X policy/parameter is.

The gNB schedules the SL communication for the UE-TX. In this Description, selecting and/or scheduling resources is sometimes simply referred to as scheduling.

A method for the gNB to schedule the SL communication for the UE-TX is disclosed. The UE-TX is connected to the S-UE during the SL communication, and is not directly connected to the gNB. Thus, how the gNB performs the scheduling for the UE-TX is a problem. Here, a method for the gNB to schedule the SL communication for the UE-TX is disclosed.

The UE-TX transmits, to the S-UE, a request for scheduling the SL communication. Upon receipt of the request for scheduling the SL communication from the UE-TX, the S-UE may determine whether its own S-UE can be or is being connected to the gNB. For example, when the S-UE is located within a coverage of the gNB, the SUE can be or is being connected to the gNB. When the S-UE is located outside the coverage of the gNB, the S-UE is neither connected nor can be connected to the gNB. When the S-UE can be connected to the gNB, the S-UE performs a connection process with the gNB, and transmits, to the gNB, a request for scheduling the SL communication for the UE-TX. When the S-UE is being connected to the gNB, the S-UE transmits, to the gNB, the request for scheduling the SL communication for the UE-TX. The connection state may be the RRC connection.

When the S-UE is neither connected nor can be connected to the gNB, the S-UE may schedule the SL communication for the UE-TX. For example, the methods disclosed in the second and third modifications of the first embodiment may be applied to this method.

Upon receipt of the request for scheduling the SL communication for the UE-TX from the S-UE, the gNB schedules the SL communication for the UE-TX. Here, the gNB should use the V2X policy/parameter of the UE-TX which has been obtained from the CN and stored in the gNB. The gNB performs the SL scheduling using the V2X policy/parameter of the UE-TX. This enables the SL scheduling so that the QoS required for the V2X service to be implemented by the UE-TX using the SL communication is satisfied.

The gNB notifies, through the S-UE, the UE-TX of scheduling information for the SL communication for the UE-TX. The UE-TX performs the SL communication with the UE-RX, using the scheduling information for the SL communication received through the S-UE. This enables the gNB that is not directly connected to the UE-TX to schedule the SL communication for the UE-TX.

The following (1) to (10) are disclosed as specific examples of information to be included in a scheduling request notified from the UE-TX to the S-UE.
(1) Information indicating the scheduling request
(2) Information for identifying a source UE
(3) Information for identifying a target UE
(4) The V2X capability
(5) The V2X service information
(6) The application layer information
(7) The PC5 link information
(8) The PC5 QoS flow information
(9) The SL bearer information
(10) Combinations of (1) to (9) above

The information (1) should be, for example, information indicating a request for allocating resources or scheduling for the SL communication to be performed by the UE-TX.

The information (2) may be, for example, a UE identifier. The information (2) may be a layer 2 ID (L2 ID) to be used by the UE-TX in the SL communication. This enables the S-UE to recognize from which UE-TX the scheduling request has been issued.

The information (3) may be, for example, a UE identifier. The information (3) may be a layer 2 ID (L2 ID) to be used by the UE-RX that performs the SL communication with the UE-TX. This enables the S-UE to recognize for the SL communication with which UE-RX the scheduling request has been issued.

The information (4) may be, for example, information indicating whether the UE-TX has the V2X capability. The information (4) may be information indicating whether the UE-TX has the PC5 capability. This enables the S-UE to recognize whether the UE-TX can perform the SL communication.

The information (5) may be, for example, a V2X service identifier. The information (5) may be a Provider Service Identifier (PSID) or an Intelligent Transport Systems Application Identifier (ITS-AID). This enables the S-UE to recognize for which V2X service the scheduling request has been issued.

The information (6) may be, for example, an application layer identifier. The information (6) may be an identifier corresponding to an object on which the UE-TX is mounted. Examples of the object on which the UE-TX is mounted may include a vehicle and a pedestrian. The identifier for identifying the object on which the UE-TX is mounted may be used as an identifier for identifying the UE-TX. This enables the S-UE to recognize for which application the scheduling request has been issued.

The information (7) may be, for example, a PC5 link identifier. The information (7) may be a PC5 link identifier assigned by the UE-TX to perform the SL communication. When the SL communication to be performed is unicast communication, the information (7) may be a PC5 unicast link identifier. This enables the S-UE to recognize for which PC5 link the scheduling request has been issued.

The information (8) may be, for example, a PC5 QoS flow identifier. This enables the S-UE to recognize for which PC5 QoS flow the scheduling request has been issued.

The information (9) may be, for example, an ID of a bearer to be used in the SL communication between the UE-TX and the UE-RX. Examples of the ID of the bearer may include an ID of a DRB and an ID of an SRB. This enables the S-UE to recognize for which SL bearer the scheduling request has been issued.

The signaling indicating the scheduling request may be newly provided in the PC5 link. A distinction with other signalings can reduce erroneous reception operations in the S-UE.

A method for transmitting the scheduling request from the UE-TX to the S-UE is disclosed. The PC5 link (an upper layer link) is established between the UE-TX and the SUE in advance. Alternatively, when a V2X service using the SL communication has been generated in the UE-TX, the UE-TX may establish the PC5 link with the S-UE. Alternatively, when the UE-TX has established, with the UE-RX, the PC5 link for the V2X service using the SL communication, the UE-TX may establish the PC5 link with the S-UE.

The UE-TX may transmit the scheduling request to the S-UE using the signaling via which the PC5 link has been established. This enables the S-UE to receive the scheduling request from the UE-TX earlier, and transmit, to the gNB, the scheduling request received from the UE-TX earlier.

As another method, the UE-TX may transmit the scheduling request to the S-UE via the SL RRC signaling. This is valid, for example, when the UE-TX transmits the V2X capability information of the AS layer or the SL bearer information to the S-UE.

As another method, the UE-TX may transmit the scheduling request to the S-UE via the SL MAC signaling. The UE-TX may include the aforementioned information in a MAC CE, and notify the information. The UE-TX may notify the scheduling request using the PSSCH. For example, when the V2X service using the SL communication has been generated in the UE-TX with the PC5 link (upper layer link) being established between the UE-TX and the S-UE in advance, the UE-TX can notify the scheduling request to the S-UE earlier. The S-UE can transmit, to the gNB, the scheduling request received from the UE-TX earlier.

As another method, the UE-TX may include the scheduling request in the SCI, and transmit the scheduling request to the S-UE. The UE-TX may notify the scheduling request using the PSCCH. The S-UE can receive the scheduling request without receiving the PSSCH. The S-UE can transmit, to the gNB, the scheduling request received from the UE-TX much earlier.

As another method, a signal for the scheduling request may be provided. For example, a signal to which a certain code is assigned is provided. Examples of the certain code include an orthogonal code and a Zadoff-Chu (ZC) sequence. The S-UE may dedicatedly assign the certain code to the UE-TX. This enables the S-UE to recognize from which UE-TX the signal for the scheduling request has been transmitted. The S-UE may notify the UE-TX of the signal for the scheduling request in advance. The UE-TX transmits, to the S-UE, the signal for the scheduling request. The S-UE receives the scheduling request from the UE-TX. This can reduce the amount of resources to be used for the scheduling request. Thus, the communication capacity can be increased, and the scheduling can be promptly performed.

The resources to be used for transmitting the scheduling request from the UE-TX to the S-UE may be cyclically reserved. The cycle may be notified between the S-UE and the UE-TX in advance. For example, the S-UE may configure the cycle, and notify the UE-TX of the cycle. Alternatively, the UE-TX may configure the cycle, and notify the SUE of the cycle. The cycle may be preconfigured in the UE-TX, and stored in, for example, the SIM. The cycle may be notified when, for example, the PC5 link or the RRC connection is established.

This enables the UE-TX and the S-UE to transmit and receive the scheduling request. Since the S-UE can recognize the timing with which the UE-TX transmits the scheduling request, the S-UE can efficiently receive the scheduling request. The power consumption of the S-UE can be reduced.

The information to be included in the scheduling request notified from the S-UE to the gNB may be a part or the entirety of the information to be included in the scheduling request notified from the UE-TX to the S-UE. In addition, the scheduling request may include information for identifying the S-UE. The information for identifying the S-UE may be, for example, a UE identifier. The UE identifier may be a UE identifier assigned by the gNB. This enables the gNB to recognize the scheduling request from which S-UE.

The signaling to be used for the scheduling request notified from the S-UE to the gNB is disclosed. The RRC connection is established between the S-UE and the gNB in advance. Alternatively, upon receipt of the request for scheduling the SL communication from the UE-TX, the S-UE may establish the RRC connection with the gNB.

The S-UE may transmit the scheduling request to the gNB via the signaling for an RRC connection establishment process. This enables the gNB to receive the scheduling request from the S-UE earlier, and perform the scheduling for the UE-TX earlier.

As another method, the S-UE may transmit the scheduling request to the gNB via the RRC signaling. This is valid, for example, when the S-UE establishes the RRC connection and then transmits the scheduling request.

As another method, the S-UE may transmit the scheduling request to the gNB via the MAC signaling. The S-UE may include the aforementioned information in a MAC CE, and notify the information. The S-UE may notify the scheduling request using the PUSCH. For example, upon receipt of the request for scheduling the SL communication from the UE-TX with the RRC connection being established between the S-UE and the gNB in advance, the S-UE can notify the scheduling request to the gNB earlier. The gNB can perform the scheduling for the UE-TX earlier.

As another method, the S-UE may include the scheduling request in the UCI, and transmit the scheduling request to the gNB. The S-UE may notify the scheduling request using the PUCCH. The gNB can perform the scheduling for the UE-TX much earlier.

The S-UE may notify the gNB of information on the UE-TX to which the S-UE is connected. Alternatively, the S-UE may notify the gNB of information on the UE-TX for which the scheduling is performed. The information on the UE-TX may be information for identifying the UE-TX. The S-UE may notify the information on the UE-TX via the signaling for the RRC connection establishment process with the gNB. Alternatively, the S-UE may notify the information on the UE-TX after establishing the RRC connection. The S-UE may notify the information on the UE-TX via the RRC signaling. The S-UE may notify the information separately from the scheduling request to the gNB.

This enables the gNB to recognize the UE-TX to which the S-UE being served thereby is connected or for which the scheduling is performed. Upon receipt of the information, the gNB can determine whether its own gNB has obtained information on the V2X policy/parameter of the UE-TX to which the S-UE being served thereby is connected or for which the scheduling is performed.

The gNB may establish an SL bearer configuration to be used for the V2X service of the UE-TX to which the S-UE is connected or for which the scheduling is performed. The gNB may establish the SL bearer configuration to be used for the V2X service of the UE-TX, using the obtained V2X policy/parameter of the UE-TX. The gNB notifies the UE-TX of the SL bearer configuration of the UE-TX through the S-UE.

The gNB may configure the SL SDAP to be used for the V2X service of the UE-TX to which the S-UE is connected or for which the scheduling is performed. The gNB may configure the SL SDAP to be used for the V2X service of the UE-TX, using the obtained V2X policy/parameter of the UE-TX. Examples of the SDAP configuration include mapping of the PC5 QoS flow to the SL bearer. The gNB notifies the UE-TX of the SDAP configuration of the UE-TX through the S-UE.

The gNB may establish an SR configuration of the UE-TX to which the S-UE is connected or for which the scheduling is performed. The gNB may associate the SR configuration with the LCID and establish the SR configuration. The gNB may also associate the SR configuration with the UE-TX and establish the SR configuration. Alternatively, the SR for the UE-TX may be provided. This can differentiate between the SR for the SL communication to be performed by the S-UE itself and the SR for the SL communication to be performed by the UE-TX and scheduled by the S-UE.

The gNB notifies the S-UE of the established SR configuration. The gNB may notify the SR configuration via the signaling for the RRC connection establishment process to be performed by the S-UE with the gNB. Alternatively, the gNB may notify the SR configuration after establishing the RRC connection. The gNB may notify the SR configuration via the RRC signaling. This enables the gNB to notify the S-UE of the SL bearer configuration to be used for the V2X service of the UE-TX to which the S-UE is connected or for which the scheduling is performed.

The S-UE may include, in the SR, the scheduling request to be transmitted to the gNB, and transmit the scheduling request. The S-UE may transmit the SR using the PUCCH.

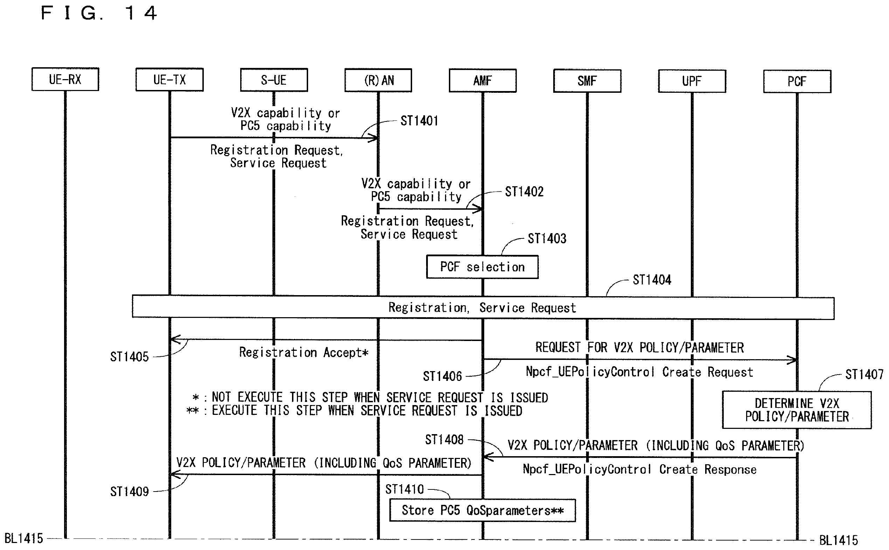

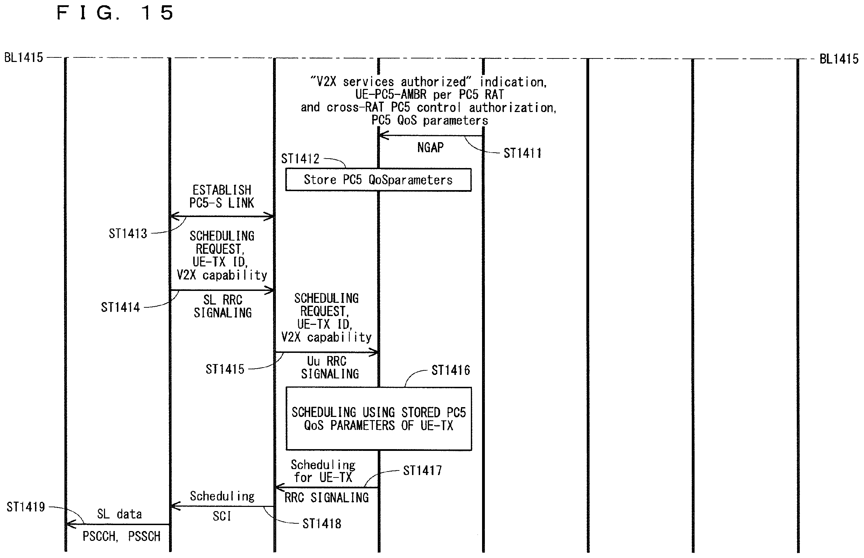

FIGS. 14 and 15 are sequence diagrams illustrating an example where the gNB schedules the SL communication between UEs according to the first embodiment. FIGS. 14 and 15 are connected across a location of a border BL1415. The SL communication is performed between the UE-TX and the UE-RX. The UE-TX performs the V2X policy/parameter providing process with a CN through the gNB that is a RAN node. In Step ST1401, the UE-TX notifies the gNB of a request for the V2X policy/parameter. The UE-TX may request the V2X policy/parameter, using a registration request to be transmitted for position registration or a service request to be transmitted for performing services.

The UE-TX may, for example, include information on the V2X service in the request for the V2X policy/parameter, and notify the information. The UE-TX may include the V2X capability in the request for the V2X policy/parameter, and notify the V2X capability. When specializing in the SL communication, the UE-TX may notify the PC5 capability. Upon receipt of the V2X capability, the gNB can determine that the UE-TX can perform the SL communication, and performs the V2X policy/parameter providing process with the CN.

In Step ST1402, the gNB notifies the AMF of the request for the V2X policy/parameter. The gNB may also request the V2X policy/parameter, using a registration request to be transmitted for position registration or a service request to be transmitted for performing services. The gNB may include an identifier of the source UE-TX in the request for the V2X policy/parameter. The AMF can determine that the UE-TX can perform the SL communication, and performs the V2X policy/parameter providing process with a PCF.

In Step ST1403, the AMF selects a PCF having information on the policy/parameter of the V2X service. When the registration request or the service request is used, a registration process or a service request process is performed in Step ST1404. When the registration request is used, the AMF notifies the UE-TX of the registration acceptance in Step ST1405.

The AMF that has selected the PCF in Step ST1403 notifies the PCF of the request for the V2X policy/parameter in Step ST1406. The AMF may give the notification using, for example, the UE policy control creating request (Npcf UEPolicyControl Create Request) that is signaling between the AMF and the PCF. Upon receipt of the request for the V2X policy/parameter, the PCF determines, in Step ST1407, the V2X policy/parameter to be provided to the UE-TX.

The PCF that has determined the V2X policy/parameter to be provided to the UE-TX provides the gNB with the V2X policy/parameter. The PCF may also provide the UE-TX with the V2X policy/parameter. In Step ST1408, the PCF notifies the AMF of the V2X policy/parameter of the UE-TX. The V2X policy/parameter may include, for example, a QoS parameter of the SL communication (PC5 QoS parameter). The V2X policy/parameter may be the V2X policy/parameter disclosed in Non-Patent Document 21. The PCF may give the notification using, for example, the UE policy control creating response (Npcf_UEPolicyControl Create Response) that is signaling between the AMF and the PCF.

In Step ST1410, the AMF stores the V2X policy/parameter of the UE-TX that has been received from the PCF. In Step ST1411, the AMF notifies the gNB of the V2X policy/parameter of the UE-TX. The AMF may notify information on the service authentication of the UE-TX. The information may be information indicating that the UE-TX has been authenticated for the V2X service. Upon receipt of the V2X policy/parameter of the UE-TX from the AMF, the gNB can recognize the V2X policy/parameter of the UE-TX.

Since the AMF stores the V2X policy/parameter of the UE-TX received from the PCF, for example, the AMF can notify the gNB of the V2X policy/parameter of the UE-TX stored in its own AMF upon receipt of the request for the V2X policy/parameter of the UE-TX from the gNB after this storing process. The gNB may be any gNB served by the AMF.

In Step ST1409, the AMF may notify the UE-TX of the V2X policy/parameter of the UE-TX. The AMF should notify the UE-TX of the parameter through the gNB. This enables the UE-TX to recognize the V2X policy/parameter. The UE-TX may update the V2X policy/parameter when entering the coverage of the gNB. The UE-TX may perform the V2X policy/parameter providing process to update the V2X policy/parameter as described above. This enables the UE-TX to update the V2X policy/parameter as necessary.

In Step ST1412, the gNB stores the V2X policy/parameter of the UE-TX that has been received from the AMF. The gNB may store information on the service authentication of the UE-TX as well. The gNB may store a part or the entirety of these pieces of information. This can reduce the storage capacity as necessary. The gNB may store V2X policies/parameters of a plurality of UE-TXs for which the V2X policy/parameter providing process has been performed. The gNB should associate the UE-TXs with the V2X policies/parameters, and store them.

In Step ST1413, the UE-TX establishes the PC5 link with the S-UE to obtain, from the S-UE, the scheduling information for the SL communication with the UE-RX. The UE-TX in which the V2X service data using the SL communication has been generated notifies the S-UE of a request for scheduling the SL communication in Step ST1414. The UE-TX includes, in the request, the aforementioned information, for example, the V2X capability (may be PC5 capability) or an identifier of its own UE-TX. The UE-TX may notify the request via, for example, the SL RRC signaling. The UE-TX may perform a process of establishing the SL RRC connection with the S-UE before the SL RRC signaling.

Upon receipt of the scheduling request from the UE-TX in Step ST1414, the SUE transmits, to the gNB, the scheduling request for the UE-TX in Step ST1415. The SUE includes, in the request, for example, the aforementioned information including the V2X service, the V2X capability (may be PC5 capability), and an identifier of the UE requesting the scheduling (an identifier of the UE-TX). The S-UE may notify the request via, for example, the Uu RRC signaling. The S-UE may perform a process of establishing the Uu RRC connection with the gNB before the Uu RRC signaling.

This enables the gNB to receive the scheduling request for the UE-TX that performs the SL communication. Upon receipt of the scheduling request for the UE-TX from the S-UE, the gNB calculates, in Step ST1416, the V2X policy/parameter of the UE-TX that has issued the scheduling request, from the V2X policy/parameter stored in Step ST1412. The gNB schedules the SL communication for the UE-TX, using the V2X policy/parameter. Consequently, the gNB performs the scheduling appropriate for the V2X policy/parameter for the UE-TX.

In Step ST1417, the gNB transmits, to the S-UE, the scheduling information for the SL communication of the UE-TX. The gNB may transmit the information, for example, via the RRC signaling. In Step ST1418, the S-UE notifies the UE-TX of the scheduling information for the SL communication of the UE-TX which has been received from the gNB. The gNB may, for example, include the information in the SCI and transmit the information in the PSCCH. The UE-TX performs the SL communication with the UE-RX, using the scheduling information received from the S-UE. Before performing the SL communication with the UE-RX, the UE-TX may establish the PC5 link, establish the RRC connection, or notify the necessary RRC signaling.

Thus, the scheduling is implemented using the V2X policy/parameter of the V2X service using the SL communication, in the SL communication between the UE-TX and the UE-RX. Thus, the scheduling corresponding to the QoS desired for the V2X service becomes possible.

What is disclosed is inclusion of information indicating for the SL communication for which UE-TX the scheduling request has been issued, in the scheduling request from the S-UE to the gNB. The gNB may determine whether stored PC5 QoS parameters include a PC5 QoS parameter for the UE-TX, using the information. When the PC5 QoS parameter for the UE-TX exists, the gNB performs the scheduling for the S-UE, using the PC5 QoS parameter for the UE-TX.

When the PC5 QoS parameter for the UE-TX does not exist, the gNB may request, of the PCF, the V2X policy/parameter of the UE-TX. The gNB may request the V2X policy/parameter of the UE-TX through the AMF. In such a case, upon receipt of the request for the V2X policy/parameter of the UE-TX from the gNB, the AMF requests, of the PCF, the V2X policy/parameter of the UE-TX. Upon receipt of the request for the V2X policy/parameter of the UE-TX, the PCF notifies the gNB of the V2X policy/parameter of the UE-TX. The PCF may give the notification through the AMF.

The AMF may store the V2X policy/parameter of the UE-TX that has been received from the PCF. The gNB may store the V2X policy/parameter of the UE-TX that has been received from the PCF. The AMF and the gNB may store a part or the entirety of these pieces of information. This can reduce the storage capacity as necessary.

When storing the V2X policy/parameter of the UE-TX, the AMF may provide the gNB with the V2X policy/parameter of the UE-TX. When the AMF does not store the V2X policy/parameter of the UE-TX, the AMF may notify the PCF of a request for the V2X policy/parameter of the UE-TX. This sometimes saves the PCF from being signaled for a request for the V2X policy/parameter and from signaling the V2X policy/parameter. Thus, the signaling load and the latency time are reduced.

The gNB may request, of an adjacent gNB, the V2X policy/parameter of the UE-TX. The gNB may include, in the request for the V2X policy/parameter, information for identifying the target UE-TX and/or information for identifying the source gNB. The gNB may transmit, to the adjacent gNB, the V2X policy/parameter of the UE-TX. The gNB may transmit, together with the V2X policy/parameter, the information for identifying the target UE-TX and/or the information for identifying the source gNB. When storing the V2X policy/parameter of the UE-TX, the gNB that has received the request for the V2X policy/parameter may transmit the V2X policy/parameter of the UE-TX to the requesting gNB. The gNB may transmit, together with the V2X policy/parameter, the information for identifying the target UE-TX, the information for identifying the source gNB, and/or information for identifying the requesting gNB. Requesting the V2X policy/parameter of the UE-TX or transmitting the V2X policy/parameter between the gNBs may be performed via the Xn interface.

This enables the gNBs to share the V2X policy/parameter of the UE-TX. When one of the gNBs stores the PC5 QoS parameters except the V2X policy/parameter of the UE-TX, the gNB may perform a process of requesting the V2X policy/parameter of the UE-TX between the other gNB. This enables obtainment of the V2X policy/parameter of the UE-TX between the gNBs. Even when the gNB to which the S-UE is connected is different from the gNB with which the UE-TX performs the V2X policy/parameter providing process, the gNB can obtain the V2X policy/parameter of the UE-TX.

The method disclosed in the first embodiment enables the gNB to schedule the SL communication based on the QoS parameter required for the V2X service of the UE-TX. Moreover, the S-UE need not perform the scheduling or obtain the QoS parameter for the V2X service of the UE-TX. This can reduce the complexity in the processes and the signaling load.

### The First Modification of the First Embodiment

The first modification of the first embodiment discloses another method for solving the problem described in the first embodiment.

The UE-TX performs the V2X policy/parameter providing process with the CN through a RAN node such as the gNB in advance. The method disclosed in the first embodiment should be applied to this method. The gNB may store the V2X policy/parameter of the UE-TX which has been obtained from the CN. The method disclosed in the first embodiment should be also applied to this method.

The S-UE requests the gNB to provide the V2X policy/parameter of the UE-TX for which the scheduling is performed. The UE-TX may transmit, to the S-UE, a request for scheduling the SL communication. Upon receipt of the request for scheduling the SL communication from the UE-TX, the S-UE may request the gNB to provide the V2X policy/parameter of the UE-TX.

The following (1) to (7) are disclosed as specific examples of information to be included in the request for providing the V2X policy/parameter which is notified from the S-UE to the gNB.
(1) Information indicating the request for providing the V2X policy/parameter
(2) Information for identifying the UE-TX
(3) Information for identifying the S-UE
(4) The V2X capability of the UE-TX
(5) The V2X service information of the UE-TX
(6) The application layer information of the UE-TX
(7) Combinations of (1) to (6) above

The information (1) should be, for example, information indicating the request for providing the V2X policy/parameter for the SL communication to be performed by the UE-TX.

The information (2) may be, for example, a UE identifier. The information (2) may be an identifier of the UE-TX. The information (2) may be a layer 2 ID (L2 ID) to be used by the UE-TX in the SL communication. This enables the gNB to recognize from which UE-TX the request for providing the V2X policy/parameter has been issued.

The information (3) may be, for example, a UE identifier. The information (3) may be an identifier of the UE that performs the scheduling for the UE-TX. The information (3) may be a layer 2 ID (L2 ID) to be used by the S-UE. This enables the gNB to recognize which UE performs the scheduling for the UE-TX.

The information (4) may be, for example, information indicating whether the UE-TX has the V2X capability. The information (4) may be information indicating whether the UE-TX has the PC5 capability. This enables the gNB to recognize whether the UE-TX can perform the SL communication.

The information (5) may be, for example, a V2X service identifier. The information (5) may be a Provider Service Identifier (PSID) or an Intelligent Transport Systems Application Identifier (ITS-AID). This enables the gNB to recognize for which V2X service the request for providing the V2X policy/parameter has been issued.

The information (6) may be, for example, an application layer identifier. The information (6) may be an identifier corresponding to an object on which the UE-TX is mounted. Examples of the object on which the UE-TX is mounted may include a vehicle and a pedestrian. The identifier for identifying the object on which the UE-TX is mounted may be used as an identifier for identifying the UE-TX. This enables the gNB to recognize for which application the request for providing the V2X policy/parameter has been issued.

The method for notifying the scheduling request from the S-UE to the gNB, which is disclosed in the first embodiment, may be appropriately applied to a method for notifying the request for providing the V2X policy/parameter from the S-UE to the gNB. For example, the signaling for a scheduling request to be notified from the S-UE to the gNB may be appropriately applied.

The gNB notifies the S-UE of the V2X policy/parameter of the UE-TX which has been obtained from the CN. Upon receipt of the request for the V2X policy/parameter of the UE-TX, the gNB may notify the S-UE of the V2X policy/parameter of the UE-TX. This enables the S-UE to obtain the V2X policy/parameter of the UE-TX for which the scheduling is performed.

The gNB may notify the S-UE of a part or the entirety of the V2X policy/parameter of the UE-TX. The gNB may notify, for example, only the PC5 QoS parameter included in the V2X policy/parameter. This can reduce the amount of information to be notified from the gNB to the S-UE.

The gNB may notify the V2X policy/parameter of the UE-TX via the signaling for the RRC connection establishment process. Alternatively, the gNB may notify the V2X policy/parameter of the UE-TX after establishing the RRC connection. The gNB may notify the V2X policy/parameter of the UE-TX via the RRC signaling. This enables the gNB to notify the S-UE of the V2X policy/parameter of the UE-TX to which the S-UE is connected or for which the scheduling is performed.

The S-UE may store the V2X policy/parameter of the UE-TX which has been obtained from the gNB. The S-UE may associate the V2X policy/parameter with the identifier of the UE-TX and/or information for identifying the V2X service, and store the V2X policy/parameter. The S-UE can recognize for which UE-TX and for which V2X service the V2X policy/parameter is.

The S-UE schedules the SL communication for the UE-TX. A method for the SUE to schedule the SL communication for the UE-TX is disclosed. The UE-TX may transmit, to the S-UE, a request for scheduling the SL communication. The methods disclosed in the first embodiment should be appropriately applied to the specific examples of information to be included in the scheduling request to be notified from the UE-TX to the S-UE and to the method for transmitting the scheduling request from the UE-TX to the S-UE. Upon receipt of the scheduling request, the S-UE may perform the scheduling for the UE-TX.

Upon receipt of the request for scheduling the SL communication from the UE-TX, the S-UE determines whether the V2X policy/parameter of the UE-TX has been obtained from the gNB. When the S-UE has obtained the V2X policy/parameter of the UE-TX from the gNB, the S-UE performs the scheduling for the UE-TX, using the V2X policy/parameter of the UE-TX.

When the S-UE does not obtain the V2X policy/parameter of the UE-TX from the gNB, the S-UE may notify the gNB of a request for the V2X policy/parameter of the UE-TX as described above. Thereby, the gNB notifies the S-UE of the V2X policy/parameter of the UE-TX. The S-UE performs the scheduling for the UE-TX, using the obtained V2X policy/parameter of the UE-TX.

Upon receipt of the request for scheduling the SL communication from the UE-TX, the S-UE may determine whether its own S-UE can be or is being connected to the gNB. For example, when the S-UE is located within the coverage of the gNB, the S-UE can be or is being connected to the gNB. When the S-UE is located outside the coverage of the gNB, the S-UE is neither connected nor can be connected to the gNB. When the S-UE can be connected to the gNB, the S-UE should perform a connection process with the gNB, and transmit, to the gNB, a request for the V2X policy/parameter of the UE-TX. When the S-UE is being connected to the gNB, the S-UE should transmit, to the gNB, a request for the V2X policy/parameter of the UE-TX. The connection state may be the RRC connection.

The S-UE may configure a bearer for the SL communication of the UE-TX. The bearer for the SL communication is sometimes referred to as an SL bearer. When the S-UE has obtained the V2X policy/parameter of the UE-TX, the S-UE may configure the SL bearer for the UE-TX. The SL RRC of the S-UE may configure the SL bearer.

When the S-UE has established the PC5 link with the UE-TX, the S-UE may configure the SL bearer. The S-UE may configure the SL bearer according to the RRC connection establishment process with the UE-TX. Upon receipt of the RRC signaling such as the RRC connection request from the UE-TX, the S-UE may configure the SL bearer. The RRC signaling for requesting configuration of the SL bearer may be provided. The use of the RRC signaling enables the S-UE to perform, in the RRC layer, the signaling process and a process for configuring the SL bearer. In other words, the S-UE need not perform processes between layers.

Upon receipt of the request for scheduling the SL communication from the UE-TX, the S-UE may configure the bearer for the SL communication of the UE-TX. The request for scheduling the SL communication may include information on a request for configuring the SL bearer, for example, information indicating whether a request for configuring the SL bearer is issued. When the scheduling request includes information indicating the request for configuring the SL bearer, the S-UE may configure the SL bearer for the UE-TX. The aforementioned conditions for configuring the SL bearer may be appropriately applied in combinations.

The S-UE notifies the UE-TX of the configured SL bearer of the UE-TX. The SL RRC of the S-UE may configure the SL bearer. The S-UE may assign the LCID to each bearer in configuring the SL bearer. The S-UE may assign the LCID to each signaling bearer and each data communication bearer. The signaling for establishing the PC5 link or the RRC signaling may be used as the notification method. Since the S-UE configures a bearer to be used for the SL communication between other UEs, the S-UE can schedule the SL communication with other UEs, in association with the bearer.

The S-UE may configure the SL SDAP to be used for the V2X service of the UE-TX. The S-UE may configure the SDAP, using the obtained V2X policy/parameter of the UE-TX. Examples of the SDAP configuration include mapping of the PC5 QoS flow to the SL bearer. The S-UE notifies the UE-TX of the SDAP configuration.

When the S-UE has established the PC5 link with the UE-TX, the S-UE may configure the SDAP. When performing a process of establishing the PC5 link with the UE-TX, the S-UE may configure the SDAP. The S-UE may configure the SDAP according to the RRC connection establishment process with the UE-TX. Upon receipt of the RRC signaling such as the RRC connection request from the UE-TX, the S-UE may configure the SDAP. The signaling for requesting configuration of the SL SDAP may be provided. The signaling may be the PC5 signaling or the RRC signaling.

Upon receipt of the request for scheduling the SL communication from the UE-TX, the S-UE may configure the SDAP for the UE-TX. The request for scheduling the SL communication may include information on a request for configuring the SL SDAP, for example, information indicating whether a request for configuring the SL SDAP is issued. When the request includes information indicating the request for configuring the SDAP, the S-UE may configure the SL SDAP for the UE-TX.

The S-UE notifies the UE-TX of the configuration of the SL SDAP for the UE-TX. The SL SDAP of the S-UE may configure the SL SDAP for the UE-TX. The signaling for establishing the PC5 link or the RRC signaling may be used as the notification method. This enables the S-UE to configure the SL SDAP for the UE-TX.

An SL Scheduling Request (SR) may be provided. The SR may be a function of the SL MAC. The SR may be included in a MAC CE. The SL RRC may establish the SR configuration in advance. The SL SR may be associated with the LCID and configured. Alternatively, the SL SR may be associated with an RLC bearer and configured. The UE that performs scheduling may configure the SR. For example, the S-UE configures the SR when scheduling the SL communication between other UEs, whereas the UE-TX configures the SR when scheduling the SL communication. The configuration of the SL SR should be notified via the RRC signaling between the UEs. Alternatively, the configuration of the SL SR may be notified between the UEs when the PC5 link is established.

The SR configuration information may be included in the SL bearer configuration, and notified. For example, when the SL data has been generated in the UE-TX, the UE-TX may notify the S-UE of the SL SR as a scheduling request. The UE-TX may transmit the SL SR using the PSSCH. This enables the use of the SL SR for the scheduling request.

The SL SR may be used as one of the methods for transmitting the scheduling request from the UE-TX to the S-UE which are disclosed in the first embodiment. The S-UE may transmit the scheduling request of the UE-TX to the gNB, using the SL scheduling request. For example, the method may be regarded as a method for transmitting a scheduling request when data is dynamically generated in the UE-TX. This enables both of the gNB and the S-UE to use the SL SR in performing the scheduling. The processes for the scheduling request can be facilitated.

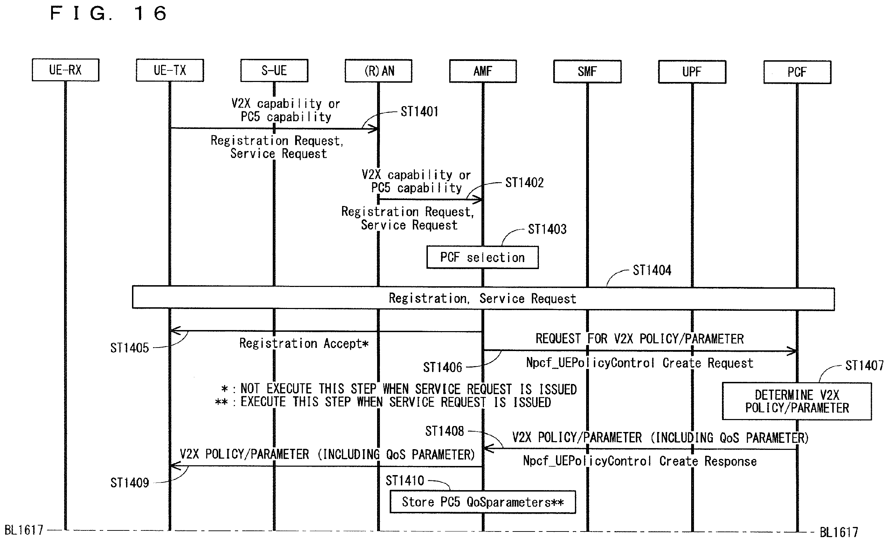

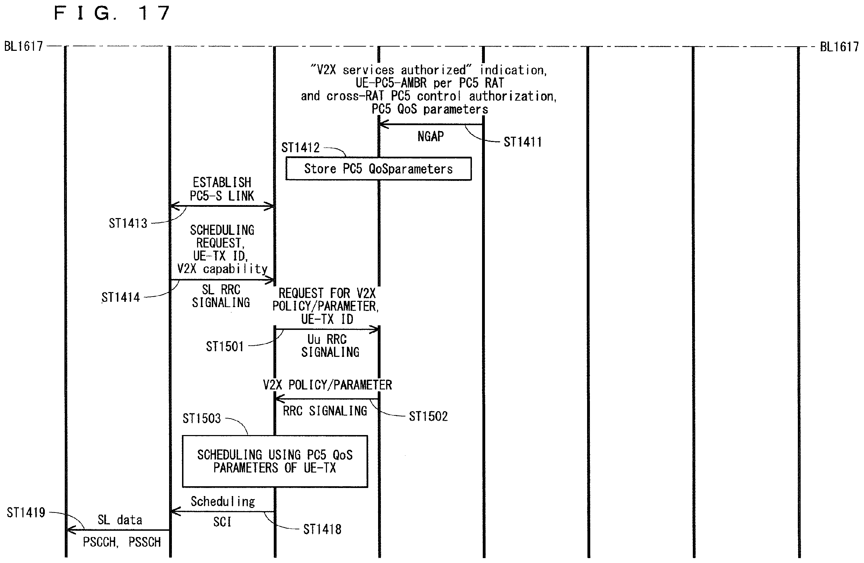

FIGS. 16 and 17 are sequence diagrams illustrating an example where the S-UE schedules the SL communication between other UEs according to the first modification of the first embodiment. FIGS. 16 and 17 are connected across a location of a border BL1617. In FIGS. 16 and 17, the same step numbers are applied to the steps common to those in FIGS. 14 and 15, and the common description thereof is omitted. The SL communication is performed between the UE-TX and the UE-RX. The UE-TX performs the V2X policy/parameter providing process with a CN through the gNB. The gNB stores the V2X policy/parameter of the UE-TX.

Upon receipt of the scheduling request from the UE-TX in Step ST1414, the S-UE transmits, to the gNB, a request for the V2X policy/parameter of the UE-TX in Step ST1501. The S-UE includes, in the request, for example, the aforementioned information including the V2X service, the V2X capability (may be PC5 capability), and an identifier of the UE requesting the V2X policy/parameter (an identifier of the UE-TX). The S-UE may notify the request via, for example, the Uu RRC signaling. The S-UE may perform the process of establishing the Uu RRC connection with the gNB before the Uu RRC signaling.

This enables the gNB to receive the request for the V2X policy/parameter of the UE-TX that performs the SL communication. Upon receipt of the request for the V2X policy/parameter of the UE-TX from the S-UE, the gNB calculates the V2X policy/parameter of the UE-TX that has requested the V2X policy/parameter, from the V2X policy/parameter stored in Step ST1412. In Step ST1502, the gNB notifies the S-UE of the V2X policy/parameter of the UE-TX. The gNB may give the notification, for example, via the RRC signaling.

In Step ST1503, the S-UE schedules the SL communication, using the V2X policy/parameter of the UE-TX which has been received from the gNB. Consequently, the S-UE performs the scheduling appropriate for the V2X policy/parameter for the UE-TX. The S-UE may store the V2X policy/parameter of the UE-TX which has been received from the gNB. The S-UE may store a part or the entirety of the information. This can reduce the storage capacity as necessary. In Step ST1418, the S-UE notifies the UE-TX of the scheduling information. For example, the S-UE may include the information in the SCI and transmit the information in the PSCCH. The UE-TX performs the SL communication with the UE-RX, using the scheduling information received from the S-UE.

Thus, the scheduling is implemented using the V2X policy/parameter of the V2X service using the SL communication, in the SL communication between the UE-TX and the UE-RX. Thus, the scheduling corresponding to the QoS desired for the V2X service becomes possible.

The gNB to which the S-UE has transmitted the request for providing the V2X policy/parameter of the UE-TX is sometimes different from the gNB with which the UE-TX has performed a V2X policy/parameter provision requesting process. This occurs, for example, when the UE-TX moves with the S-UE, and the S-UE is connected to the gNB different from the gNB with which the UE-TX has performed the V2X policy/parameter provision requesting process. In some cases, the gNB has not obtained the V2X policy/parameter of the UE-TX. A method for solving such a problem is disclosed.

What is disclosed is inclusion of information indicating for the SL communication for which UE-TX the request for providing the V2X policy/parameter of the UE-TX has been issued, in the request for providing the V2X policy/parameter from the S-UE to the gNB. The gNB may determine whether the stored PC5 QoS parameters include the PC5 QoS parameter for the UE-TX, using the information. When the PC5 QoS parameter for the UE-TX exists, the gNB transmits, to the S-UE, the PC5 QoS parameter for the UE-TX.

When the PC5 QoS parameter for the UE-TX does not exist, the gNB may request, of the PCF, the V2X policy/parameter of the UE-TX. The gNB may request the V2X policy/parameter of the UE-TX through the AMF. In such a case, upon receipt of the request for the V2X policy/parameter of the UE-TX from the gNB, the AMF requests, of the PCF, the V2X policy/parameter of the UE-TX. Upon receipt of the request for the V2X policy/parameter of the UE-TX, the PCF transmits, to the gNB, the V2X policy/parameter of the UE-TX. The PCF may give the notification through the AMF. Upon receipt of the V2X policy/parameter of the UE-TX, the gNB transmits, to the S-UE, the V2X policy/parameter of the UE-TX.

The AMF may store the V2X policy/parameter of the UE-TX which has been received from the PCF. The gNB may store the V2X policy/parameter of the UE-TX which has been received from the PCF. The S-UE may store the V2X policy/parameter of the UE-TX which has been received from the PCF. The AMF, the gNB, and the S-UE may store a part or the entirety of the information. This can reduce the storage capacity as necessary.

When storing the V2X policy/parameter of the UE-TX, the AMF may provide the gNB with the V2X policy/parameter of the UE-TX. The gNB transmits, to the S-UE, the V2X policy/parameter of the UE-TX. When the AMF does not store the V2X policy/parameter of the UE-TX, the AMF may notify the PCF of a request for the V2X policy/parameter of the UE-TX. This sometimes saves the PCF from being signaled for a request for the V2X policy/parameter and from signaling the V2X policy/parameter. Thus, the signaling load and the latency time are reduced.

The gNBs may share the V2X policy/parameter of the UE-TX. The method disclosed in the first embodiment should be appropriately applied to the method. Even when the S-UE requests the gNB different from the gNB with which the UE-TX has performed the V2X policy/parameter providing process to provide the V2X policy/parameter, the different gNB can obtain the V2X policy/parameter of the UE-TX and transmit the V2X policy/parameter of the UE-TX to the S-UE.

The method disclosed in the first modification of the first embodiment enables the S-UE to schedule the SL communication based on the QoS parameter required for the V2X service of the UE-TX. Thus, the S-UE can schedule the SL communication between UEs in a group or in a specific area. As such, enabling the S-UE to schedule the SL communication reduces the interference in the SL communication between other UEs, and the latency of the SL communication.

### The Second Modification of the First Embodiment

The second modification of the first embodiment discloses another method for solving the problem described in the first embodiment.

The UE-TX performs the V2X policy/parameter providing process with a CN through the S-UE. The UE-TX requests the CN to provide the V2X policy/parameter through the S-UE in the V2X policy/parameter providing process. The UE-TX may request, through the S-UE and the gNB, the CN to provide the V2X policy/parameter. For example, the UE-TX transmits, to the S-UE, a request for providing the V2X policy/parameter. Upon receipt of the request, the S-UE transmits, to the gNB, the request for providing the V2X policy/parameter of the UE-TX. Upon receipt of the request, the gNB transmits and notifies, to the CN, the request for providing the V2X policy/parameter.

The S-UE may request the CN to provide the V2X policy/parameter. The V2X policy/parameter requesting process to be performed from the UE-TX to the CN through the gNB, which is disclosed in the first embodiment, may be appropriately applied to a V2X policy/parameter requesting process to be performed from the S-UE to the CN. The request should include information indicating the process for requesting the V2X policy/parameter of the UE-TX. This enables the CN to recognize that the request is not the request for the V2X policy/parameter of the S-UE but the request for the V2X policy/parameter of the UE-TX. Consequently, the CN can provide the V2X policy/parameter of the UE-TX.

Upon receipt of the request, the CN provides the S-UE with the V2X policy/parameter. For example, the PCF may provide the S-UE with the V2X policy/parameter of the UE-TX through the AMF and the gNB. The AMF may notify the S-UE of the V2X policy/parameter of the UE-TX, for example, via the NAS signaling.

Upon receipt of the request, the CN may provide the UE-TX with the V2X policy/parameter. The CN may provide the UE-TX with the V2X policy/parameter through the gNB and the S-UE. For example, the CN transmits the V2X policy/parameter to the gNB. Upon receipt of the V2X policy/parameter, the gNB transmits, to the S-UE, the V2X policy/parameter of the UE-TX. The CN and/or the gNB may notify the S-UE of a part or the entirety of the V2X policy/parameter. The CN and/or the gNB may notify, for example, only the PC5 QoS parameter included in the V2X policy/parameter. This can reduce the amount of information to be notified. Upon receipt of the V2X policy/parameter, the S-UE may transmit, to the UE-TX, the V2X policy/parameter of the UE-TX. The CN, the gNB, and/or the S-UE may notify the UE-TX of a part or the entirety of the V2X policy/parameter. The CN, the gNB, and/or the S-UE may notify, for example, only the PC5 QoS parameter included in the V2X policy/parameter. This can reduce the amount of information to be notified.

Similarly to the first embodiment, the V2X policy or the V2X parameter may be, for example, a V2X policy or a V2X parameter in the PC5 (also referred to as the PC5 reference point). Examples of the V2X parameter include the QoS parameter.

A node of the CN may be the PCF. The PCF may provide the S-UE with the V2X policy/parameter through the AMF. Alternatively, the CN node may be the AMF. This is valid when the AMF stores, in advance, the V2X policy/parameter of the UE-TX which has been obtained from the PCF.

The UE-TX should be connected to the S-UE to perform the V2X policy/parameter providing process. The S-UE may obtain V2X policies/parameters of a plurality of UE-TXs for which the scheduling is performed. This enables the S-UE to obtain the V2X policy/parameter of the UE-TX from the CN.

The S-UE may store the V2X policy/parameter of the UE-TX obtained from the CN. The S-UE may associate the V2X policy/parameter with the identifier of the UE-TX and/or information for identifying the V2X service, and store the V2X policy/parameter. The S-UE can recognize for which UE-TX and for which V2X service the V2X policy/parameter is.

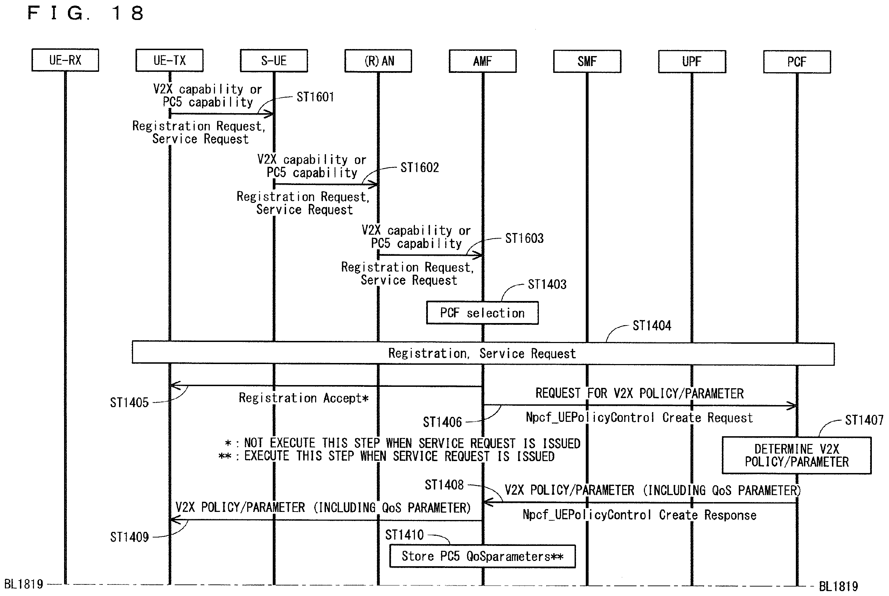

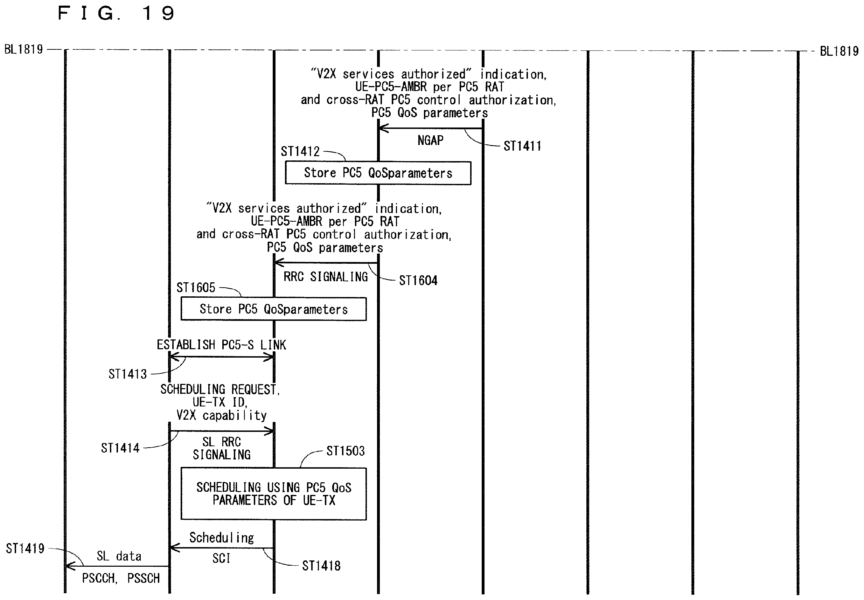

FIGS. 18 and 19 are sequence diagrams illustrating an example where the S-UE schedules the SL communication between other UEs according to the second modification of the first embodiment. FIGS. 18 and 19 are connected across a location of a border BL1819. In FIGS. 18 and 19, the same step numbers are applied to the steps common to those in FIGS. 16 and 17, and the common description thereof is omitted. The SL communication is performed between the UE-TX and the UE-RX. The UE-TX performs the V2X policy/parameter providing process with the CN through the S-UE. In Step ST1601, the UE-TX notifies the S-UE of a request for the V2X policy/parameter. The UE-TX may notify, through the S-UE, the CN side of a registration request to be transmitted for position registration or a service request to be transmitted for performing services. The UE-TX may request the V2X policy/parameter using the registration request or the service request.

The UE-TX may, for example, include information on the V2X service in the request for the V2X policy/parameter, and notify the information. The UE-TX may include the V2X capability in the request for the V2X policy/parameter, and notify the V2X capability. When specializing in the SL communication, the UE-TX may notify the PC5 capability. Upon receipt of the V2X capability, the S-UE can determine that the UE-TX can perform the SL communication, and performs the V2X policy/parameter providing process with the gNB.

In Step ST1602, the S-UE notifies the gNB of the request for the V2X policy/parameter. The S-UE may request the V2X policy/parameter, using a registration request to be transmitted for position registration or a service request to be transmitted for performing services as described above. The S-UE may include an identifier of the source UE-TX in the request for the V2X policy/parameter. The gNB can determine that the UE-TX can perform the SL communication, and performs the V2X policy/parameter providing process with the AMF

In Step ST1603, the gNB notifies the AMF of the request for the V2X policy/parameter. The gNB may request the V2X policy/parameter, using a registration request to be transmitted for position registration or a service request to be transmitted for performing services as described above. The gNB may include an identifier of the source UE-TX in the request for the V2X policy/parameter. The AMF can determine that the UE-TX can perform the SL communication, and performs the V2X policy/parameter providing process with the PCF.

The UE-TX may establish the PC5 link with the S-UE to transmit the request for the V2X policy/parameter to the S-UE in Step ST1601. Furthermore, the UE-TX may establish the SL RRC connection. The UE-TX may transmit the request via, for example, the SL RRC signaling.

The S-UE may establish the Uu RRC connection with the gNB to transmit the request for the V2X policy/parameter of the UE-TX to the gNB in Step ST1602. The S-UE may transmit the request via, for example, the Uu RRC signaling.

The signaling from the UE-TX to the AMF in Steps ST1601 to ST1603 may be transmitted via the NAS signaling. The signaling from the UE-TX to the AMF may be included in a message of the NAS layer, and transmitted via the NAS signaling. Information included in the NAS message from the UE-TX to the AMF may be included in an SL RRC message to the S-UE as container information, then transmitted via the RRC signaling, included in a Uu RRC message from the S-UE to the gNB, and then transmitted via the RRC signaling. Not only the request for the V2X policy/parameter but also the NAS message to be notified between the UE-TX and the AMF may be transmitted in the aforementioned method. Even when the S-UE is located between the UE-TX and the AMF, the NAS signaling can be notified.

Upon receipt of the request for the V2X policy/parameter of the UE-TX from the gNB in Step ST1603, the AMF performs the V2X policy/parameter providing process with the PCF. The PCF performs the V2X policy/parameter providing process with the gNB. The PCF may perform the V2X policy/parameter providing process with the UE-TX.

Upon receipt of the V2X policy/parameter of the UE-TX from the CN in Step ST1411, the gNB transmits, to the S-UE that has requested the V2X policy/parameter of the UE-TX, the V2X policy/parameter of the UE-TX in Step ST1604. The gNB may perform the transmission via the RRC signaling. The gNB may transmit, to the S-UE, information on the authentication of the UE-TX. This enables the S-UE to recognize the V2X policy/parameter of the UE-TX.

In Step ST1605, the S-UE stores the V2X policy/parameter of the UE-TX which has been received from the gNB. The S-UE may store information on the service authentication of the UE-TX as well. The S-UE may store a part or the entirety of these pieces of information. This can reduce the storage capacity as necessary. The S-UE may store V2X policies/parameters of a plurality of UE-TXs for which the V2X policy/parameter providing process has been performed. The S-UE should associate the UE-TXs with the V2X policies/parameters, and store them.

Upon receipt of the scheduling request from the UE-TX in Step ST1414, the SUE calculates, in Step ST1503, the V2X policy/parameter of the UE-TX requesting the V2X policy/parameter, from the V2X policy/parameter stored in Step ST1605. The S-UE schedules the SL communication, using the calculated V2X policy/parameter of the UE-TX. Consequently, the S-UE performs the scheduling appropriate for the V2X policy/parameter for the UE-TX.

In Step ST1418, the S-UE notifies the UE-TX of the scheduling information. The UE-TX performs the SL communication with the UE-RX, using the scheduling information received from the S-UE.

Thus, the scheduling is implemented using the V2X policy/parameter of the V2X service using the SL communication, in the SL communication between the UE-TX and the UE-RX. Thus, the scheduling corresponding to the QoS desired for the V2X service becomes possible.

The method disclosed in the second modification enables the S-UE to obtain the QoS parameter of the V2X service of the UE-TX. Even when the gNB does not obtain the QoS parameter of the V2X service of the UE-TX in advance, the S-UE can obtain the QoS parameter of the V2X service of the UE-TX. The S-UE can schedule the SL communication, based on the QoS parameter of the V2X service of the UE-TX. Scheduling the SL communication by the S-UE reduces the interference and the latency in the SL communication between UEs.

### The Third Modification of the First Embodiment

The third modification of the first embodiment discloses another method for solving the problem described in the first embodiment.

The UE-TX transmits, to the S-UE, the V2X policy/parameter held by its own UE-TX. The V2X policy/parameter held by its own UE-TX may be a V2X policy/parameter preconfigured in the UE, for example, a V2X policy/parameter preconfigured in the SIM of the UE. The S-UE may transmit a request for providing the V2X policy/parameter to the UE-TX. This enables the S-UE to obtain the V2X policy/parameter of the UE-TX even when the S-UE is located outside the coverage of the gNB. The S-UE can schedule the SL communication for the UE-TX, using the obtained V2X policy/parameter of the UE-TX.

When the UE-TX moves into the coverage of the gNB, the UE-TX may perform the V2X policy/parameter providing process with a CN through the gNB. In the V2X policy/parameter providing process, the CN provides the UE-TX with the V2X policy/parameter. The UE-TX may update the V2X policy/parameter held by its own UE-TX, using the V2X policy/parameter obtained from the CN through the gNB. This enables the UE-TX to update the V2X policy/parameter. The UE-TX may transmit the updated V2X policy/parameter to the S-UE. This enables the UE-TX to provide the S-UE with the updated V2X policy/parameter. The S-UE can perform the scheduling using the V2X policy/parameter for the UE-TX.

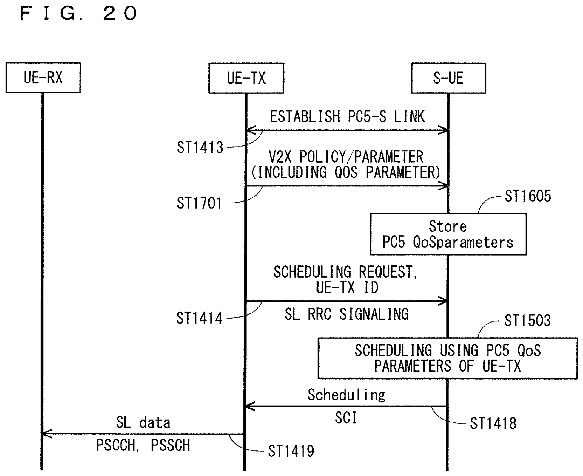

FIG. 20 is a sequence diagram illustrating an example where the S-UE schedules the SL communication between other UEs according to the third modification of the first embodiment. In FIG. 20, the same step numbers are applied to the steps common to those in FIGS. 18 and 19, and the common description thereof is omitted. The SL communication is performed between the UE-TX and the UE-RX. The UE-TX provides the S-UE with the V2X policy/parameter. In Step ST1701, the UE-TX transmits, to the S-UE, the V2X policy/parameter held by its own UE-TX.

When the UE-TX and the S-UE establish the PC5 link in Step ST1413, the UE-TX may transmit the V2X policy/parameter to the S-UE. Alternatively, when the UE-TX and the S-UE establish the RRC connection, the UE-TX may transmit the V2X policy/parameter to the S-UE. Alternatively, the UE-TX may transmit the V2X policy/parameter to the S-UE via the SL RRC signaling.

This enables the S-UE to obtain the V2X policy/parameter of the UE-TX. Upon receipt of the V2X policy/parameter from the UE-TX in Step ST1701, the S-UE stores the V2X policy/parameter of the UE-TX in Step ST1605.

Upon receipt of the scheduling request from the UE-TX in Step ST1414, the SUE calculates, in Step ST1503, the V2X policy/parameter of the UE-TX requesting the V2X policy/parameter, from the V2X policy/parameter stored in Step ST1605. The S-UE schedules the SL communication, using the calculated V2X policy/parameter of the UE-TX. Consequently, the S-UE performs the scheduling appropriate for the V2X policy/parameter for the UE-TX.

In Step ST1418, the S-UE notifies the UE-TX of the scheduling information. The UE-TX performs the SL communication with the UE-RX, using the scheduling information received from the S-UE.

Thus, the scheduling is implemented using the V2X policy/parameter of the V2X service using the SL communication, in the SL communication between the UE-TX and the UE-RX. Thus, the scheduling corresponding to the QoS desired for the V2X service becomes possible.

The method disclosed in the third modification enables the S-UE to obtain the QoS parameter of the V2X service of the UE-TX. Even when the S-UE is located outside the coverage of the gNB, the S-UE can obtain the QoS parameter of the V2X service of the UE-TX. The S-UE can schedule the SL communication, based on the QoS parameter of the V2X service of the UE-TX. Scheduling the SL communication by the S-UE reduces the interference and the latency in the SL communication between UEs.

The S-UE may determine whether the method disclosed in the second modification of the first embodiment or the method disclosed in the third modification of the first embodiment is used, based on whether its own S-UE can be connected or is being connected to the gNB. For example, when the S-UE is located within the coverage of the gNB, the S-UE can be or is being connected to the gNB. For example, when the S-UE is located within the coverage of the gNB, the method disclosed in the second modification of the first embodiment is used. The S-UE should perform a connection process with the gNB, and request the CN to provide the V2X policy/parameter of the UE-TX.

When the S-UE is located outside the coverage of the gNB, the method disclosed in the third modification of the first embodiment is used. The S-UE should request, of the UE-TX, the V2X policy/parameter of the UE-TX. This enables the S-UE to obtain the V2X policy/parameter of the UE-TX, according to its own position or a connection state with the gNB.

The S-UE may notify the UE-TX for which the scheduling is performed of information indicating whether its own S-UE is located within or outside the coverage of the gNB. The S-UE may notify the UE-TX for which the scheduling is performed of information indicating whether its own S-UE can be connected or is being connected to the gNB. This enables the UE-TX to determine whether the S-UE can be connected to the gNB.

The UE-TX may determine whether the method disclosed in the second modification of the first embodiment or the method disclosed in the third modification of the first embodiment is used, based on whether the S-UE can be connected or is being connected to the gNB. For example, when the S-UE is located within the coverage of the gNB, the method disclosed in the second modification of the first embodiment is used. The S-UE should perform a connection process with the gNB, and request the CN to provide the V2X policy/parameter of the UE-TX.

When the S-UE is located outside the coverage of the gNB, the method disclosed in the third modification of the first embodiment is used. The UE-TX should provide the SUE with the V2X policy/parameter of the UE-TX. This enables the S-UE to obtain the V2X policy/parameter of the UE-TX, according to its own position or a connection state with the gNB.

### The Second Embodiment

A proposal is made on applying the SL communication to not only vehicle-to-vehicle communication but also other services, for example, communication between wearable devices and communication between a robot and a control device in a factory, etc. In such a case, the SL communication between many UEs is performed. The SL communication requires detecting available resources from resources for the SL communication, and reserving the resources. However, the SL communication between many UEs creates congestion. Thus, even the V2X service requiring the low latency has a problem of increase in the latency time until the start of the SL communication, and a problem of disabling the SL communication.

Introduction of the preemption in the SL communication has been proposed as a method for solving such problems. The preemption is the technology for preempting the existing transmission of data to a UE with transmission to another UE requiring the low latency characteristics (see Non-Patent Document 16).

The second embodiment discloses another method for solving the problems.

The S-UE preempts the existing communication between UEs with communication between other UEs requiring the low latency characteristics. The S-UE applies the resources scheduled for the SL communication between certain UEs (for example, between a UE-TX 1 and a UE-RX 1) to the SL communication between other UEs (for example, between a UE-TX 2 and a UE-RX 2). The S-UE schedules the SL communication between the other UEs, with the resources scheduled for the SL communication between the certain UEs.

The S-UE notifies the UE-TX (the UE-TX 1) for which the resources have been scheduled earlier of information on the preemption. The S-UE notifies the UE-TX (the UE-TX 2) for which the resources have been scheduled later of the scheduling information. The information on the preemption that the S-UE notifies the UE-TX 1 may be information indicating that the scheduled resources are preempted. The information may include allocation information on the resources to be preempted. The information is sometimes referred to as preemption indication (PI).

The UE-TX 1 stops transmission with the resources notified from the S-UE by the PI. Alternatively, the UE-TX 1 may set the transmission power to zero or reduce the transmission power. The UE-TX 2 performs the SL communication, using the scheduling information notified from the S-UE. This enables the S-UE to apply the resources scheduled for the SL communication between the certain UEs to the SL communication between the other UEs.

When the resources scheduled for the SL communication between the UE-TX 1 and the UE-RX 1 are preempted and nothing is done, the UE-RX 1 erroneously receives data for the SL communication between the UE-TX 2 and the UE-RX 2. A method for solving such a problem is disclosed.

The UE-TX 1 notifies the UE-RX 1 of information on the preemption. The information on the preemption that the UE-TX 1 notifies the UE-RX 1 may be PI. Upon receipt of the PI notified from the UE-TX 1, the UE-RX 1 can recognize the resources preempted for the communication between the other UEs. Consequently, the UE-RX 1 cannot receive or decode data of the resources. Alternatively, the UE-RX 1 may discard the received data. This can avoid erroneous reception by the UE-RX 1.

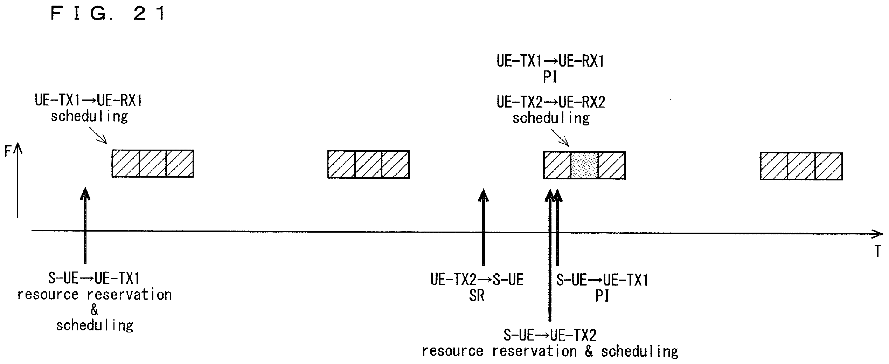

FIG. 21 illustrates example preemption processes performed by the S-UE according to the second embodiment. The horizontal axis represents the time, and the vertical axis represents the frequency. FIG. 21 illustrates that the S-UE schedules the resources scheduled for the SL communication between the UE-TX 1 and the UE-RX 1, for the SL communication between the UE-TX 2 and the UE-RX 2.

Upon receipt of a scheduling request from the UE-TX 1, the S-UE reserves and schedules resources for the UE-TX 1, and notifies the UE-TX 1 of the scheduling information. The UE-TX 1 schedules the SL communication for the UE-RX 1 according to the received scheduling information, and performs the SL communication. In FIG. 21, the hatch lines represent the resources scheduled for the SL communication between the UE-TX 1 and the UE-RX 1.

The S-UE receives a scheduling request from the UE-TX 2. Upon receipt of the scheduling request, the S-UE determines the priority of the SL communication between the UE-TX 2 and the UE-RX 2. The S-UE may determine the priority, based on the QoS of the service to be performed in the SL communication. When the S-UE determines that the priority of the SL communication between the UE-TX 2 and the UE-RX 2 is higher than that of the SL communication between the UE-TX 1 and the UE-RX 1 that has been scheduled earlier, the S-UE determines to schedule the resources scheduled for the SL communication between the UE-TX 1 and the UE-RX 1, for the SL communication between the UE-TX 2 and the UE-RX 2.

The S-UE determines the resources to be preempted for the UE-TX 2, performs the scheduling for the UE-TX 2, and notifies the UE-TX 2 of the scheduling information. Furthermore, the S-UE notifies the UE-TX 1 of information on the preemption indicating that the resources already scheduled are preempted.

Upon receipt of the information on the preemption from the S-UE, the UE-TX 1 stops transmission to the UE-RX 1 with the preempted resources. Furthermore, the UE-TX 1 notifies the UE-RX 1 of information on the preemption indicating that the resources are preempted. This enables the UE-RX 1 to avoid erroneous reception with the resources preempted for the communication between other UEs.

Upon receipt of the scheduling information from the S-UE, the UE-TX 2 schedules the SL communication with the UE-RX 2 according to the scheduling information, and performs the SL communication.

Consequently, the resources scheduled for the communication between the UE-TX 1 and the UE-RX 1 can be used for the SL communication between the UE-TX 2 and the UE-RX 2. The SL communication between the UE-TX 2 and the UE-RX 2 can be preferentially performed.

A method for transmitting the PI from the S-UE to the UE-TX 1 is disclosed. The S-UE should transmit the PI using the SL communication with the UE-TX 1. The SUE may transmit the PI via the signaling for the PC5 link or the signaling for the AS layer. The S-UE may transmit the PI, for example, via the RRC signaling. This enables the S-UE to notify many more pieces of information. Alternatively, the S-UE may transmit the PI via the MAC signaling. The retransmission process improves the reception quality. Alternatively, the S-UE may include the PI in the SCI and transmit the PI in the PSCCH. This enables the UE-TX 1 to receive the PI earlier. Consequently, the UE-TX 1 can receive the PI from the S-UE.

The following (1) to (10) are disclosed as specific examples of information to be included in the PI to be transmitted from the S-UE to the UE-TX 1.
(1) Information indicating that resources are preempted
(2) Allocation information on the resources to be preempted
(3) Information for identifying a target UE
(4) Information for identifying a source UE
(5) An offset from the reception of the PI to the preempted resources
(6) Information for identifying the target UE in the preempted SL communication
(7) Information for identifying the PC5 link in the preempted SL communication
(8) Information for identifying the SL bearer in the preempted SL communication
(9) Information for identifying the PC5 QoS flow in the preempted SL communication
(10) Combinations of (1) to (9) above

The information (2) may be, for example, information for identifying frequency resources and time resources. The frequency resources may be represented per, for example, subcarrier. The time resources may be represented per, for example, symbol, mini-slot, or slot.

The information (3) may be, for example, a UE identifier. The information (3) may be an identifier of the UE-TX 1. The information (3) may be a layer 2 ID (L2 ID) to be used by the UE-TX 1 in the SL communication. Alternatively, the information (3) may be a layer 2 ID (L2 ID) to be used by the UE-TX 1 in the SL communication.

The information (4) may be, for example, a UE identifier. The information (4) may be an identifier of the S-UE. The information (4) may be a layer 2 ID (L2 ID) to be used by the S-UE in the SL communication. Alternatively, the information (4) may be a layer 1 ID (L1 ID) to be used by the S-UE in the SL communication.

The information (5) may be, for example, the minimum time from when the UE-TX 1 receives the PI from the S-UE to the resources to be preempted. Instead of the time, the SFN, the slot number, or the symbol number may be used. When the S-UE schedules cyclical resources for the UE-TX 1, the number of the resources (a counter), for example, the number of the resources up to the resources to be preempted may be used.

The information (6) may be, for example, a UE identifier. The information (6) may be an identifier of the UE-RX 1. The information (6) may be a layer 2 ID (L2 ID) to be used by the UE-RX 1 in the SL communication. Alternatively, the information (6) may be a layer 1 ID (L1 ID) to be used by the UE-RX 1 in the SL communication.

The UE-TX 1 may notify the S-UE of processing capability of the UE-TX 1. Examples of the processing capability include the time from receipt of the scheduling information for the SL communication until the scheduling becomes possible, and the time from receipt of the PI until transmission is disabled. The UE-TX 1 may notify the S-UE of the processing capability of the UE-TX 1 prior to the preemption. The S-UE may calculate the offset, using the processing capability received from the UE-TX 1. This enables the SUE to perform the preemption in consideration of the processing capability of the UE-TX 1.

The S-UE notifies the UE-TX 2 of the scheduling information for the
SL communication to be performed with the UE-RX 2.

A method for transmitting the PI from the UE-TX 1 to the UE-RX 1 is disclosed. The UE-TX 1 should transmit the PI using the SL communication with the UE-RX 1. The method for transmitting the PI from the S-UE to the UE-TX 1 may be applied to the notification method. The aforementioned specific examples of the information to be included in the PI transmitted from the S-UE to the UE-TX 1 may be applied. The offset in (5) may be, for example, an offset to the preempted resources before the UE-RX 1 receives the PI from the UE-TX 1.

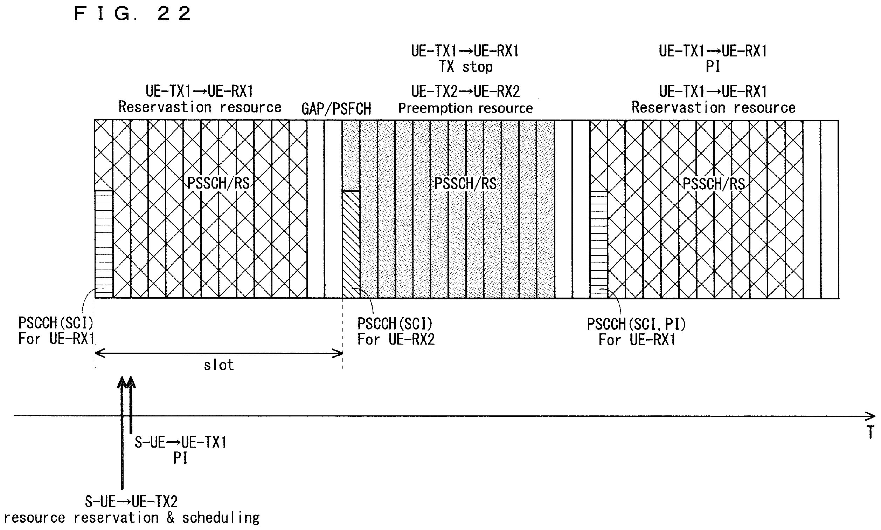

FIG. 22 illustrates an example method for transmitting the PI from the UE-TX 1 to the UE-RX 1 according to the second embodiment. The horizontal axis represents the time, and the vertical axis represents the frequency. FIG. 22 illustrates that the S-UE schedules the second slot for the SL communication between the UE-TX 2 and the UE-RX 2, in three slots scheduled for the SL communication between the UE-TX 1 and the UE-RX 1.

The first and third slots are used for the SL communication between the UE-TX 1 and the UE-RX 1. The UE-TX 2 performs the SL communication with the UE-RX 2 using the second slot, according to the scheduling information received from the S-UE. The UE-TX 2 transmits the SCI including the scheduling information in the PSCCH, and transmits data in the PSSCH. Furthermore, the UE-TX 1 stops transmission to the UE-RX 1 in the second slot, according to the PI received from the S-UE.

The UE-TX 1 transmits the PI to the UE-RX 1 in the PSCCH in a slot next to the preempted slot (the slot scheduled by the UE-TX 1 for the UE-RX 1). The UE-TX 1 includes the PI together with the SCI or in the SCI, and transmits the PI in the PSCCH. Consequently, the UE-RX 1 can receive the PI from the UE-TX 1. Upon receipt of the PI from the UE-TX 1, the UE-RX 1 can recognize that the second slot is preempted for the SL communication between the other UEs. The UE-RX 1 should discard the data received in the second slot. This enables the UE-RX 1 to avoid erroneous reception.

Information on beams may be notified together with the scheduling information from the UE-TX 1 to the UE-RX 1 and from the UE-TX 2 to the UE-RX 2. Examples of the information on beams include information on beams from the UE-TX to the UE-RX, information on beams from the UE-RX to the UE-TX, and information on association with these beams. This enables the UE-TX and the UE-RX to perform the SL communication using the beams.

The method disclosed in the second embodiment enables the S-UE to apply the resources scheduled for the SL communication between certain UEs to the SL communication between other UEs. The preemption by the S-UE can facilitate preemption processes in the SL communication between a plurality of UEs, particularly, the preemption in the SL communication between UEs including different UE-TXs performing the SL communication. Even when the SL communication between many UEs is performed, the SL communication can be performed with low latency for the V2X service requiring the low latency.

Furthermore, the UE-TX 2 only has to perform the SL communication according to the normal scheduling notified by the S-UE. Thus, the preemption processes should be performed only in the communication between UEs for which the scheduled resources are preempted. Thus, the complexity in the preemption processes can be avoided.

The first modification of the second embodiment

The first modification of the second embodiment discloses another method for solving the problem described in the second embodiment.

The UE-TX 2 transmits information on the preemption to the UE-RX 1. A method for transmitting the PI is disclosed. The PI should be transmitted using the SL communication between the UE-TX 2 and the UE-RX 2. The PI should be included in the PSCCH and transmitted as the notification method. The UE-TX 2 includes the PI in the PSCCH to be transmitted to the UE-RX 2, and transmits the PI. The UE-TX 1 may include the PI in the PSCCH together with the SCI for the SL scheduling for the UE-RX 1, and transmit the PI. Alternatively, the UE-TX 1 may include the PI in the SCI and transmit the PI in the PSCCH. The UE-TX 1 may include the PI in the PSCCH in which the scheduling information of the preempted resources is transmitted to the UE-RX 1, and transmit the PI. The specific examples of the information disclosed in the first embodiment may be applied as information to be included in the PI.

The PSCCH that the UE in the SL communication can receive is used as the PSCCH to be used for transmitting the PI. The SCI that the UE in the SL communication can receive may be used as the SCI to be used for transmitting the PI. Transmitting the PI using not the PSCCH or the SCI that only a specific UE (for example, the UE-RX 2 that performs the SL communication with the UE-TX 2) can receive but the PSCCH or the SCI that the UE that performs the SL communication can receive enables the UE-RX 1 that does not perform the SL communication with the UE-TX 2 to receive the PI.

The S-UE notifies the UE-TX 2 of information on the preemption. Information on the preemption to be notified from the S-UE to the UE-TX 2 may be information indicating that the resources scheduled for the SL communication between other UEs are preempted. The information may include the allocation information on the resources to be preempted. The methods for notifying the PI from the S-UE to the UE-TX 1, which are disclosed in the first embodiment, may be appropriately applied as the method for notifying the PI from the S-UE to the UE-TX 2.

The S-UE notifies the UE-TX 2 of the scheduling information. The S-UE may include the PI together with the scheduling information or in the scheduling information, and transmit the PI. Consequently, the S-UE can notify the UE-TX 2 of the PI without increasing the amount of signaling.

Upon receipt of the PI transmitted from the S-UE, the UE-TX 2 can recognize which resources are preempted resources. The UE-TX 2 may notify the UE-RX 1 of information on the preemption, using the PI information. The aforementioned methods should be applied to the notification of the PI from the UE-TX 2 to the UE-RX 1. This enables the UE-RX 1 to recognize that the resources already scheduled are preempted.

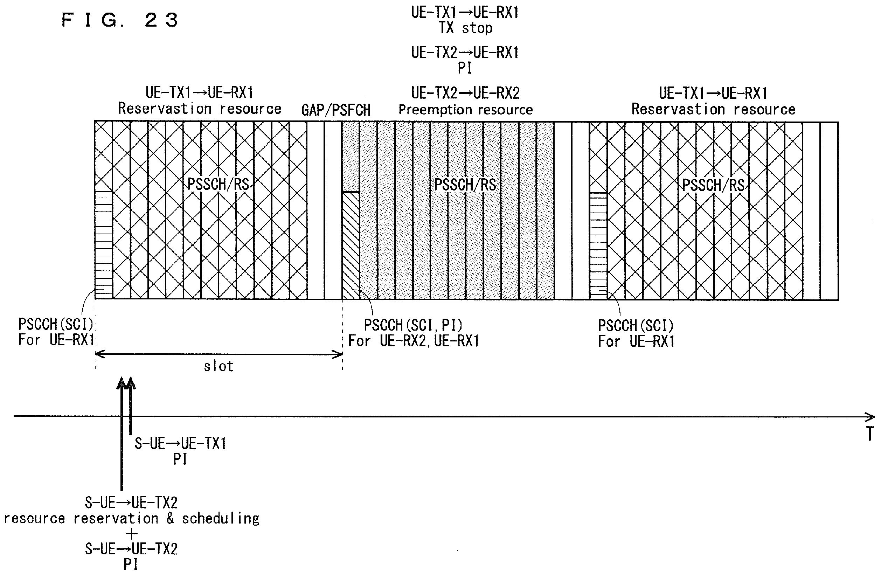

FIG. 23 illustrates an example method for transmitting the PI from the UE-TX 1 to the UE-RX 1 according to the first modification of the second embodiment. The horizontal axis represents the time, and the vertical axis represents the frequency. FIG. 23 illustrates that the S-UE schedules the second slot for the SL communication between the UE-TX 2 and the UE-RX 2, in three slots scheduled for the SL communication between the UE-TX 1 and the UE-RX 1. The description common to that for FIG. 22 is omitted.

The S-UE transmits, to the UE-TX 2, the scheduling information in the second slot to be preempted. The S-UE notifies information on the preemption (PI) indicating that the resources are preempted resources, together with the scheduling information. The S-UE may include the PI in the scheduling information, and notify the PI. This enables the UE-TX 2 to recognize that the resources in the second slot are preempted.

The UE-TX 2 performs the SL communication with the UE-RX 2 using the second slot, according to the scheduling information received from the S-UE. The UE-TX 2 transmits the SCI including the scheduling information in the PSCCH, and transmits data in the PSSCH. The UE-TX 2 includes the PI for the UE-RX 1 together with the SCI or in the SCI, and transmits the PI. The UE-TX 2 includes the PI for the UE-RX 1 in the PSCCH, and transmits the PI. The PSCCH to be used for transmitting the PI for the UE-RX 1 is the PSCCH that the UE performing the SL communication can receive.

Consequently, the UE-RX 1 can receive the PI from the UE-TX 2. Upon receipt of the PI from the UE-TX 1, the UE-RX 1 can recognize that the second slot is preempted for the SL communication between the other UEs. The UE-RX 1 does not receive data in the second slot. This enables the UE-RX 1 to avoid erroneous reception.

The method disclosed in the first modification of the second embodiment enables the S-UE to apply the resources scheduled for the SL communication between certain UEs to the SL communication between other UEs. The preemption by the S-UE can facilitate preemption processes in the SL communication between a plurality of UEs, particularly, the preemption in the SL communication between UEs including different UE-TXs performing the SL communication. Even when the SL communication between many UEs is performed, the SL communication can be performed with low latency for the V2X service requiring the low latency.

Moreover, the UE-RX 1 can early recognize the resources preempted for the SL communication between the other UEs. This can avoid the UE-RX 1 from temporarily receiving unnecessary data. Thus, the buffer capacity or discarding processes for unnecessary reception data can be reduced. Thereby, the complexity in the preemption processes in the UE-RX 1 can be avoided.

Another method for enabling the preemption processes is disclosed. The S-UE may provide the resources for transmitting information on the preemption (PI resources). The S-UE may notify the UE-TX of scheduling information for the PI resources. The PI resources may be, for example, cyclical resources. The PI resources may be, for example, frequency and time resources. The UE-TX receives scheduling information for the PI resources. The UE-TX notifies the UE-RX of the scheduling information for the PI resources. The UE-RX receives the scheduling information for the PI resources. The UE-RX receives the PI resources, using the received scheduling information for the PI resources.

The UE-TX transmits, to the UE-RX, information on the preemption with the PI resources. This enables the UE-RX that has received the PI resources to receive information on the preemption from the UE-TX.

The UE-TX for which the resources already scheduled are preempted should notify the UE-RX of the information on the preemption with the PI resources. This enables the preempted UE-RX to receive the information on the preemption.

The PI resources may be resources that all the UE-RXs can receive. For example, the PSCCH may be used. This enables the preempted UE-RX to receive the information on the preemption.

The S-UE may configure the PI resources dedicatedly for each UE-TX. This enables configuration of the PI resources for each UE-TX. The S-UE should dedicatedly notify each UE-TX of the PI resources.

The S-UE may configure the PI resources dedicatedly for each SL communication between the UE-TX and the UE-RX. This enables configuration of the PI resources for each SL communication between the UE-TX and the UE-RX. The S-UE should notify the UE-TX of the PI resources dedicatedly for each SL communication between the UE-TX and the UE-RX.

The UE-TX transmits, to the UE-RX, the information on the preemption with the PI resources dedicatedly configured. This enables the UE-RX that has received the PI resources to receive information on the preemption from the UE-TX.

This enables the preemption processes even when the S-UE performs the scheduling between other UEs. Provision of the PI resources can reduce malfunctions in the preemption processes between the UE-TX and the UE-RX. Even when the SL communication between many UEs is performed, the SL communication can be performed with low latency for the V2X service requiring the low latency.

In the methods disclosed in the second embodiment and the first modification of the second embodiment, the preemption processes for a plurality of SL communications between different pairs of the UE-TX and the UE-RX are disclosed. These methods may be appropriately applied to preemption processes for a plurality of SL communications to be performed by one UE-TX. These methods may be appropriately applied to, for example, preemption processes in the SL communication between the UE-TX 1 and the UE-RX 1 and the SL communication between the UE-TX 1 and the UE-RX 2. In the disclosed methods, the UE-TX 1 should replace the UE-TX 2. This can produce the same advantages as previously described.

The methods disclosed in the second embodiment and the first modification of the second embodiment may be appropriately applied to preemption processes for a plurality of SL communications to be performed by one UE-RX. These methods may be appropriately applied to, for example, preemption processes in the SL communication between the UE-TX 1 and the UE-RX 1 and the SL communication between the UE-TX 2 and the UE-RX 1. In the disclosed methods, the UE-RX 1 should replace the UE-RX 2. This can produce the same advantages as previously described.

The UE-TX 2 may notify the UE-RX 1 of the PI together with the scheduling information. For example, the S-UE notifies the UE-TX 2 of the scheduling information and the PI in the first modification of the second embodiment. The UE-TX 2 may notify the UE-RX 1 of both of the scheduling information and the PI. This enables the preemption processes. This can produce the same advantages as previously described.

As another method, when the UE-RX 1 receives the scheduling from the UE-TX 2 and the scheduled resources are identical to those scheduled by the UE-TX 1, the UE-RX 1 may determine that the resources scheduled earlier are preempted. Consequently, the UE-RX 1 can normally receive data from the UE-TX 2, without erroneously receiving data from the UE-TX 1.

The methods disclosed in the second embodiment and the first modification of the second embodiment may be appropriately applied to preemption processes for a plurality of SL communications between one UE-TX and one UE-RX. These methods may be appropriately applied to, for example, the preemption processes in a plurality of different SL communications between the UE-TX 1 and the UE-RX 1. In the disclosed methods, different SL communications between the UE-TX 1 and the UE-RX 1 should replace the SL communication between the UE-TX 1 and the UE-RX 1 and the SL communication between the UE-TX 2 and the UE-RX 2. This can produce the same advantages as previously described.

### The Third Embodiment

In the SL communication, not only the direct communication between UEs but also the indirect communication via a relay has been proposed (see Non-Patent Document 24). The relay between UEs is sometimes referred to as UE-to-UE relay or inter-UE relay. In this Description, the UE relaying data between UEs is sometimes referred to as a relay UE.

For example, when a plurality of platooning UEs are approaching an intersection, the UEs sometimes cannot perform direct communications therebetween due to obstruction of buildings, etc. Furthermore, the UEs sometimes need to communicate with not only neighboring UEs but also a plurality of more distant UEs. Here, a method of relaying data between UEs is applicable. However, only the unicast communication that is point-to-point communication is applied to communication from a transmitting UE (UE-TX) to the relay UE and communication from the relay UE to a receiving UE (UE-RX) in the relay between UEs which has been conventionally proposed. Thus, a problem of communication failures with a plurality of UEs occurs.

The third embodiment discloses a method for solving such a problem.

The groupcast communication is performed in relaying data between UEs. The UE performs the groupcast communication with a plurality of UEs through a relay UE. A method for communication between the UE-TX and the relay UE may be different from a method for communication between the relay UE and the UE-RXs. The specific method is to perform the unicast communication between the UE-TX and the relay UE and the groupcast communication between the relay UE and a plurality of UE-RXs. In this manner, the UE-TX communicates with the plurality of UE-RXs through the relay UE.

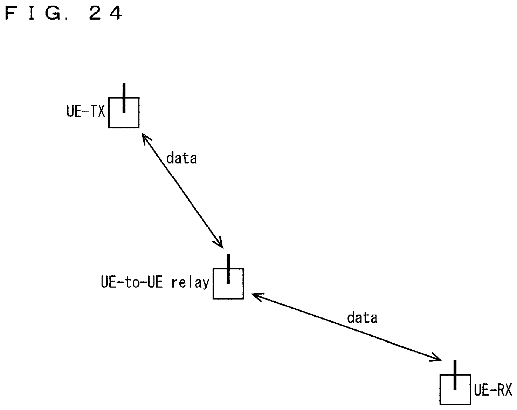

FIG. 24 is a conceptual diagram illustrating a conventional example of the unicast communication between the UE-TX and the UE-RX through the relay UE. The UE-TX and the relay UE perform the unicast communication therebetween, and the relay UE and the UE-RX perform the unicast communication therebetween.

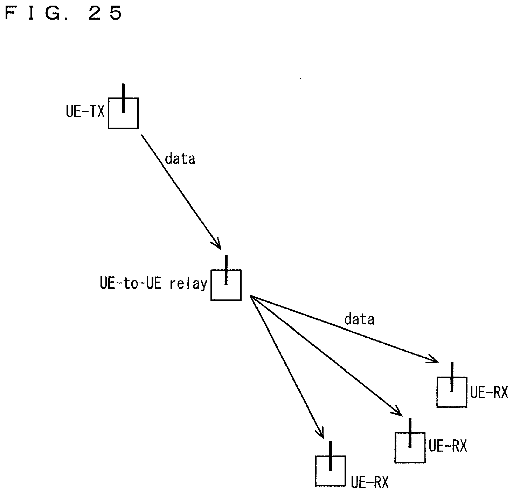

FIG. 25 is a conceptual diagram illustrating an example of the groupcast communication between the UE-TX and a plurality of UE-RXs through the relay UE according to the third embodiment. The UE-TX and the relay UE perform the unicast communication therebetween, and the relay UE and the plurality of UE-RXs perform the groupcast communication therebetween. In this manner, the UE-TX communicates with the plurality of UE-RXs through the relay UE.

A detailed method for the UE to perform the groupcast communication with a plurality of UEs through a relay UE is disclosed. The relay UE broadcasts information on a communication method that can be performed by its own relay UE. Broadcasting not information simply indicating that relay is possible but information on a communication method that can be performed by its own relay UE enables other UEs receiving the information to recognize the communication method that can be performed by the relay UE. The relay UE may transmit, to a specific UE, the information on the communication method that can be performed by its own relay UE. This is valid, for example, when the relay UE recognizes the UE to which the information is to be transmitted.

The method for transmitting the information to the specific UE may be notification via the PC5 signaling between the specific UE and the relay UE. The notification may be given when or after the PC5 link is established. Alternatively, the notification may be given via the RRC signaling. The notification may be given when or after the RRC connection is established.

Examples of the information on the communication method include unicast communication, groupcast communication, and broadcast communication.

The relay UE may broadcast information on the V2X service that can be implemented by its own relay UE. Alternatively, the relay UE may transmit the information to a specific UE. Furthermore, the relay UE may associate the information on the V2X service with the information on the communication method. The association may be not only one-to-one association but also one-to-multiple association, many-to-one association, and many-to-many association. The association enables identification and presentation of a communication method in the V2X service. For example, the association shows that the unicast communication is possible in a V2X service #1 and the groupcast communication is possible in a V2X service #2.

The relay UE may broadcast information on the number of UEs or the number of groups to which its own relay UE can relay data. Alternatively, the relay UE may transmit the information to a specific UE. Furthermore, the relay UE may associate the information on the V2X service with the information on the communication method. The information may be, for example, the number of communicable UEs in the unicast communication, and the number of communicable groups in the groupcast communication. This enables the UE-TX to recognize the number of UEs or the number of groups to which the relay UE can relay data.

Information on the relay may be provided as the capability of the UE. Examples of the information may include the communication method that can be performed, and the number of UEs or the number of groups to which the relay UE can relay data. The number of UEs or the number of groups to which the relay UE can relay data may be the maximum value. For example, the capability may be notified to other UEs, the S-UE, or the gNB. This enables the aforementioned nodes to recognize the capability of the relay UE.

The relay UE may broadcast a value obtained by subtracting the number of UEs or the number of groups to which the relay UE has already relayed data from the maximum value of the number of UEs or the number of groups to which its own relay UE can relay data, as information on the number of UEs or the number of groups to which its own relay UE can relay data. Alternatively, the relay UE may transmit the information to a specific UE. This enables the UE-TX to detect the UE that can relay data.

The UE-TX notifies the relay UE of information on a communication method in relaying data. For example, when the UE-TX requests the relay UE to perform the groupcast communication, the UE-TX transmits a request for relaying data between UEs to the relay UE. The UE-TX includes information on a communication method in relaying data, in the request for relaying data between UEs to be transmitted to the relay UE, and notifies the information. The groupcast communication should be configured as information on the communication method for requesting the groupcast communication. This enables the UE-TX to request, of the relay UE, a communication method between the relay UE and the UE-RXs. Furthermore, the relay UE may configure the received communication method. This enables the UE-TX to configure the communication method between the relay UE and the UE-RXs.

The UE-TX notifies the relay UE of information for identifying SL communication targets. Unlike the direct communication between UEs, the end SL communication targets are not the relay UE but the UE-RXs. Thus, the relay UE needs to identify relaying transmission targets. Thereby, the UE-TX should notify the relay UE of information for identifying the SL communication targets.

Unlike the unicast communication, the information for identifying the SL communication targets may be information for identifying a group of the SL communication targets. For example, when the UE-TX requests the relay UE to perform the groupcast communication, the UE-TX includes information for identifying the SL communication targets in the request for relaying data between UEs to be transmitted to the relay UE, and notifies the information. Alternatively, the UE-TX may notify the information in a process for establishing the PC5 link with the relay UE. Alternatively, the UE-TX may notify the information in implementing a relay service between UEs.

The information for identifying the SL communication targets may be, for example, an identifier of a target group. The information may be a target group identifier of the layer 2 (L2). This enables the UE-TX to transmit, to the relay UE, communication targets with which the relay UE performs a groupcast in the SL communication. Furthermore, the relay UE can recognize the SL communication targets. The relay UE can relay data to the group of the SL communication targets.

Upon receipt of the target group identifier, the relay UE may determine to perform the groupcast communication in relaying data. The UE-TX may transmit, to the relay UE, the target group identifier instead of information to be notified as a communication method in relaying data. The relay UE may determine whether to perform the groupcast, using the target group identifier. This can reduce notification on the communication method in relaying data from the UE-TX to the relay UE.

The relay UE notifies the UE-RXs of information for identifying an SL communication source. Unlike the direct communication between UEs, the SL communication source is not the relay UE but the UE-TX. Notification of information for identifying the SL communication source from the relay UE to the UE-RXs enables the UE-RXs to recognize a source of the relayed data.

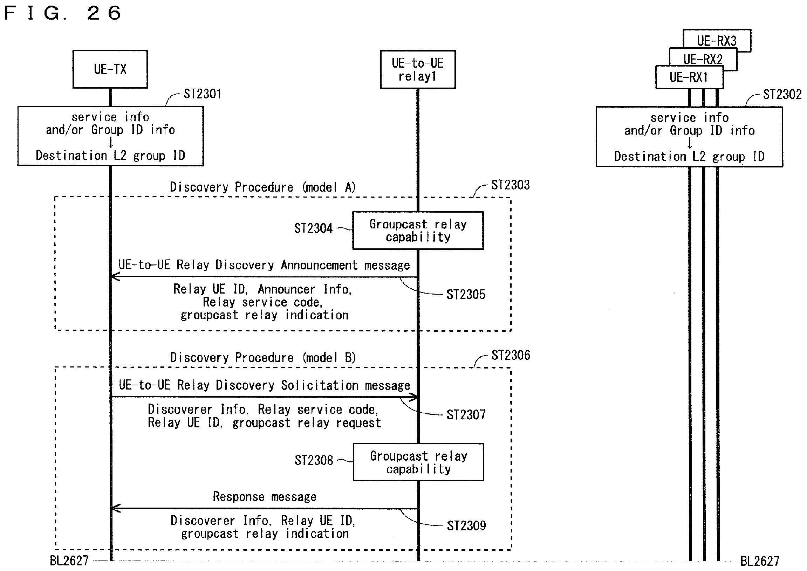

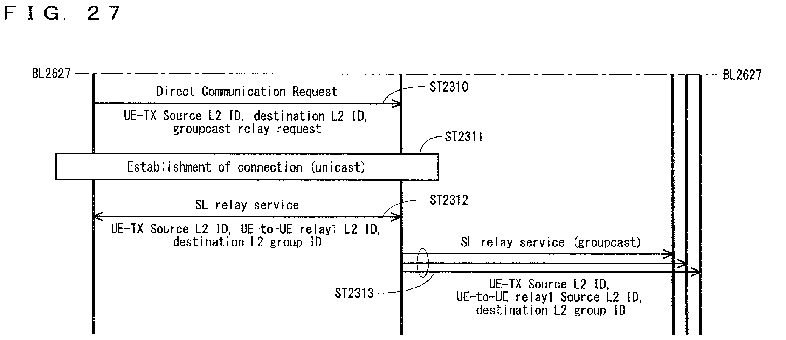

FIGS. 26 and 27 are sequence diagrams illustrating an example of the groupcast communication between a UE-TX and a plurality of UE-RXs through a relay UE according to the third embodiment. FIGS. 26 and 27 are connected across a location of a border BL2627. The UE-TX and the relay UE perform the unicast communication therebetween, and the relay UE and the plurality of UE-RXs perform the groupcast communication therebetween. In this manner, the UE-TX communicates with the plurality of UE-RXs through the relay UE.

The UE-TX detects the UE that can relay the groupcast communication. For enabling the detection, the relay UE broadcasts information on a communication method that can be performed by its own relay UE. In the method disclosed in FIGS. 26 and 27, the relay UE applies a discovery procedure (see Non-Patent Document 22) to broadcast the information on the communication method that can be performed by its own relay UE.

Step ST2303 is a sequence when a discovery procedure in model A is used. In Step ST2304, a relay UE 1 determines whether its own relay UE 1 can relay the groupcast communication. The relay UE 1 may make the determination in Step ST2304, based on the capability of its own relay UE 1. In Step ST2305, the relay UE 1 broadcasts an announcement message. The relay UE 1 includes information on the communication method for enabling the relay in the announcement message, and broadcasts the information. For example, when the relay UE 1 can relay the groupcast communication, the relay UE 1 should include information indicating that its own relay UE 1 can relay the groupcast communication in the announcement message, and notify the information. The number of the communication methods to be notified is not limited to one but may be two or more. For example, when the relay UE 1 can relay the unicast communication and the groupcast communication, the relay UE 1 should include information indicating that its own relay UE 1 can relay the unicast communication and the groupcast communication in the announcement message, and notify the information.

Step ST2306 is a sequence when a discovery procedure in model B is used. In Step ST2307, the UE-TX broadcasts a solicitation message to detect a relay that can relay the groupcast communication. The UE-TX may include, in the solicitation message, information requesting relaying the groupcast communication.

In Step ST2308, the relay UE 1 determines whether its own relay UE 1 can relay the groupcast communication. In Step ST2309, the relay UE 1 notifies the UE-TX of a response message. The UE-TX may include an identifier of the source UE in the solicitation message. The identifier of the source UE may be, for example, a layer 2 ID. The relay UE 1 should determine to which UE-TX the response message should be notified, using the identifier of the source UE included in the solicitation message.

The relay UE 1 includes information on the communication method for enabling the relay in the response message, and transmits the information. For example, when the relay UE 1 can relay the groupcast communication, the relay UE 1 should include information indicating that its own relay UE can relay the groupcast communication in the response message, and notify the information. The number of the communication methods to be notified is not limited to one but may be two or more.

Reception of the announcement message in Step ST2305 or the response message in Step ST2309 enables the UE-TX to obtain information on the communication method for enabling the relay which is included in these messages. The UE-TX can recognize the communication method in which the relay UE 1 can relay data. For example, upon receipt of information indicating that the groupcast communication can be relayed from a plurality of relay UEs, the UE-TX selects one of the relay UEs. Example selection criteria may include the communication quality between the UE-TX and each of the relay UEs. The communication quality may be the SL RSRP or the RSRQ. Another example selection criterion may be a distance between the UE-TX and each of the relay UEs.

In Step ST2310, the UE-TX notifies the selected relay UE (the relay UE 1 in FIGS. 26 and 27) of information on the communication method in relaying data. The groupcast communication is exemplified as the communication method in relaying data in the third embodiment. The UE-TX may include the information on the communication method in relaying data, in a communication request message for starting the unicast communication between UEs, and notify the information. The UE-TX can request the relay UE 1 to relay data or establish a relay configuration in the groupcast communication by transmitting, to the relay UE 1, information on the communication method in relaying data.

In Step ST2311, the UE-TX establishes a connection for the unicast communication with the relay UE 1. Establishment of the connection may be establishment of the PC5 link or establishment until the SL RRC connection. In Step ST2312, the UE-TX transmits, to the relay UE 1, data to be relayed in the service using the SL communication. The data communication of the service is performed by the unicast communication between the UE-TX and the relay UE 1.

Here, the UE-TX should transmit an identifier of the end SL communication target to the relay UE 1. Since the groupcast is performed from the relay UE 1 to the end SL communication target in the third embodiment, the identifier of the end SL communication target may be a group identifier. The group identifier may be a communication target group identifier of the layer 2.

The method for transmitting the identifier of the end SL communication target from the UE-TX to the relay UE 1 may be notification via the PC5 signaling between the UE-TX and the relay UE. The notification may be given when or after the PC5 link is established. Alternatively, the notification may be given via the RRC signaling. The notification may be given when or after the RRC connection is established. As another method, the notification may be given via the SL MAC signaling. For example, information on the end SL communication target may be provided as a CE of the SL MAC, and the notification may be given. As another method, the notification may be given via the L1 signaling. For example, information on the end SL communication target may be provided in the SCI, and the information may be notified in the PSCCH.

In Step ST2313, the relay UE 1 transmits data of the service using the SL communication which has been received from the UE-TX, to the end SL communication targets in the groupcast communication. The relay UE 1 should configure an identifier of an end SL communication target group which has been received from the UE-TX, as an identifier of a communication target when performing the groupcast communication. Furthermore, the relay UE 1 may transmit an identifier of the UE-TX when performing the groupcast communication.

When the identifier of the end SL communication target group for data relayed by the service using the SL communication coincides with the identifier of the SL communication target group corresponding to the SL communication service from which reception is desired, the UE-RXs receive the relayed data. Consequently, the UE-RXs can receive data from the UE-TX through the relay UE 1 in the groupcast communication.

Furthermore, the UE-RXs can identify a source of the groupcast communication by receiving the identifier of the UE-TX corresponding to the data relayed by the service using the SL communication.

This enables the groupcast communication from the UE-TX to the plurality of UE-RXs through the relay UE.

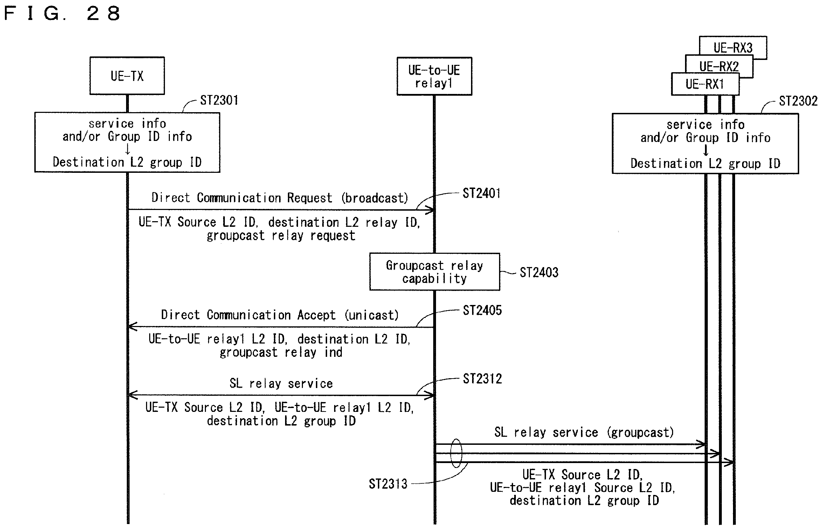

FIG. 28 is a sequence diagram illustrating another example of the groupcast communication between a UE-TX and a plurality of UE-RXs through a relay UE according to the third embodiment. The UE-TX and the relay UE perform the unicast communication therebetween, and the relay UE and the plurality of UE-RXs perform the groupcast communication therebetween. In this manner, the UE-TX communicates with the plurality of UE-RXs through the relay UE. In FIG. 28, the same step numbers are applied to the steps common to those in FIGS. 26 and 27, and the common description thereof is omitted.

FIGS. 26 and 27 disclose an example using the discovery procedures. FIG. 28 discloses an example without using the discovery procedures. In Step ST2401, the UE-TX broadcasts information on a communication method in relaying data. The groupcast communication is exemplified as the communication method in relaying data. The UE-TX may include the information on the communication method in relaying data, in a communication request message for starting the unicast communication between UEs, and broadcast the information. The UE-TX can request the relay UE 1 to relay data or establish a relay configuration in the groupcast communication by transmitting, to the relay UE 1, information on the communication method in relaying data.

The UE-TX may broadcast not only the information on the communication method in relaying data but also a communication target identifier indicating that the target is a relay. The UE-TX may include the communication target identifier indicating that the target is a relay, in the communication request message for starting the unicast communication between UEs, and broadcast the identifier. The communication target identifier indicating that the target is a relay may be an identifier of the L2 layer. The communication target identifier indicating that the target is a relay may be statically predetermined, for example, in a standard.

Alternatively, the communication target identifier indicating that the target is a relay may be preconfigured in the UE, for example, configured in the SIM. Alternatively, the communication target identifier indicating that the target is a relay may be provided from the CN as the V2X policy/parameter. Alternatively, the communication target identifier indicating that the target is a relay may be provided from another service function, for example, a service function such as a proximity service. The relay UE 1 can receive the communication request message addressed to the relay UE for starting the unicast communication between UEs, using the communication target identifier.

Upon receipt of the communication request message for starting the unicast communication between UEs in Step ST2401, the relay UE determines whether its own relay UE can relay the groupcast communication in Step ST2403. The relay UE 1 may make the determination in Step ST2403, based on the capability of its own relay UE 1. When determining that its own relay UE can relay the groupcast communication, the relay UE 1 notifies the UE-TX of a unicast communication request response message between UEs in Step ST2405. The relay UE 1 should determine to which UE-TX the unicast communication request response message between UEs should be notified, using an identifier of the source UE included in the unicast communication request message between UEs.

The relay UE 1 includes information on the communication method for enabling the relay in the unicast communication request response message between UEs, and transmits the information. For example, when the relay UE 1 can relay the groupcast communication, the relay UE 1 should include information indicating that its own relay UE can relay the groupcast communication in the unicast communication request response message between UEs, and notify the information. The number of the communication methods to be notified is not limited to one but may be two or more.

Upon receipt of the unicast communication request response message between UEs from the relay UE 1, the UE-TX may determine that the unicast communication with the relay UE 1 has been established. Upon receipt of information indicating that the groupcast communication can be relayed from a plurality of relay UEs, the UE-TX selects one of the relay UEs. Example selection criteria may include the communication quality between the UE-TX and each of the relay UEs. The communication quality may be the SL RSRP or the RSRQ. Another example selection criterion may be a distance between the UE-TX and each of the relay UEs.

In Step ST2312, the UE-TX transmits, to the relay UE 1 with which the unicast communication has been established, data to be relayed in the service using the SL communication. The data communication of the service is performed by the unicast communication between the UE-TX and the relay UE 1. In Step ST2313, the relay UE 1 transmits data of the service using the SL communication which has been received from the UE-TX, to end communication targets in the groupcast communication. The relay UE 1 should configure an identifier of an end SL communication target group which has been received from the UE-TX, as an identifier of a communication target in performing the groupcast communication. Furthermore, the relay UE 1 may transmit an identifier of the UE-TX when performing the groupcast communication.

The UE-RXs receive data from the UE-TX through the relay UE 1 in the groupcast communication, using an identifier of an SL communication target group corresponding to the SL communication service from which reception is desired. Furthermore, the UE-RXs may identify a source of the groupcast communication by receiving the identifier of the UE-TX corresponding to the data relayed by the service using the SL communication.

This enables the groupcast communication from the UE-TX to the plurality of UE-RXs through the relay UE. For example, when the UE-TX performs the groupcast communication with a group consisting of a plurality of UEs, the groupcast communication through a relay can enlarge a range of a plurality of UE-RXs that can communicate with the UE-TX. Furthermore, when there is an obstacle between the UE-TX and the plurality of UE-RXs, the groupcast communication through a relay can increase the communication quality between the UE-TX and the UE-RXs.

The examples disclosed in FIGS. 24 to 27 illustrate cases using one relay UE. The method disclosed in the third embodiment is not limited to the cases using one relay UE but is applicable to cases using a plurality of relay UEs. The unicast communication may be configured between the UE-TX and each of relay UEs. Each of relay UEs and a plurality of UE-RXs may relay data in the groupcast communication. This enables broader groupcast communication with distant UE-RXs.

The UE-TX may determine whether data is relayed. When determining that data is relayed, the UE-TX may appropriately apply the aforementioned methods to the relay UEs. Example criteria for the UE-TX to determine whether data is relayed may include a distance between the UE-TX and each of the UE-RXs. When the distance exceeds a certain distance, the UE-TX may determine to use the relay UEs. The example criteria may include the reception quality (may be received power) of each of the UE-RXs from the UE-TX. When the received power falls below a certain received power, the UE-TX may determine to use the relay UEs. The example criteria may include the radio propagation delay time of each of the UE-RXs from the UE-TX. When the radio propagation delay time exceeds a certain radio propagation delay time, the UE-TX may determine to use the relay UEs. The example criteria may include the number of Nacks from each of the UE-RXs. When the number of Nacks exceeds a certain number, the UE-TX may determine to use the relay UEs.

### The First Modification of the Third Embodiment

The first modification of the third embodiment discloses another method for solving the problem described in the third embodiment.

The groupcast communication is performed in relaying data between UEs. The UE performs the groupcast communication with a plurality of UEs through relay UEs. A method for communication between the UE-TX and the relay UEs may be different from a method for communication between the relay UEs and the UE-RXs. The specific method is to perform the groupcast communication between the UE-TX and the relay UEs and the unicast communication between each of the relay UEs and a corresponding one of UE-RXs. In this manner, the UE-TX communicates with the plurality of UE-RXs through the relay UEs.

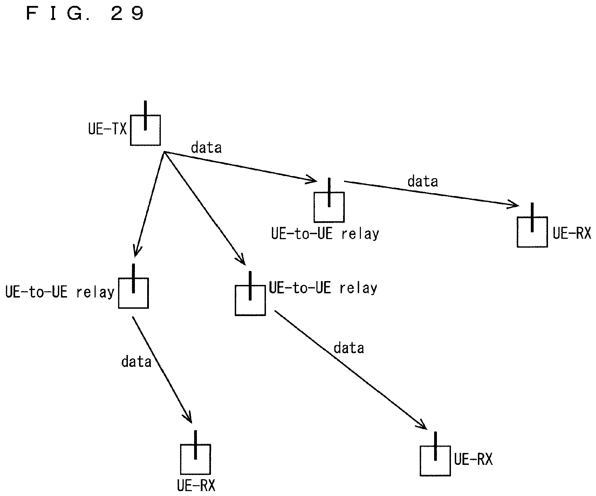

FIG. 29 is a conceptual diagram illustrating an example of the groupcast communication between a UE-TX and a plurality of UE-RXs through relay UEs according to the first modification of the third embodiment. The UE-TX and the relay UEs perform the groupcast communication therebetween, and each of the relay UEs and a corresponding one of the UE-RXs perform the unicast communication therebetween. In this manner, the UE-TX communicates with the plurality of UE-RXs through the relay UEs.

Each of the relay UEs receives the groupcast communication that its own relay UE can relay. For example, when the relay UE receives information for identifying an SL communication target group for the groupcast communication and the received information coincides with target identification information of the V2X service using the groupcast communication that its own relay UE can relay, the relay UE receives the groupcast communication. In this manner, each of the relay UEs can receive data transmitted from the UE-TX in groupcast.

When each of the relay UEs receives information for identifying the SL communication target group for the groupcast communication, the relay UE relays the received data to the SL communication target group, using the information for identifying the SL communication target group.

When the communication between each of the relay UEs and a corresponding one of the UE-RXs is unicast communication, the relay UE should detect the UE-RX, using the information for identifying the SL communication target group. When each of the UE-RXs receives information for identifying a desired SL communication target group, the UE-RX should establish the PC5 link with a corresponding one of the relay UEs to perform the unicast communication. The number of the UE-RXs with which the relay UEs perform the unicast communication may be one or more. This enables the groupcast communication between the UE-TX and the UE-RXs.

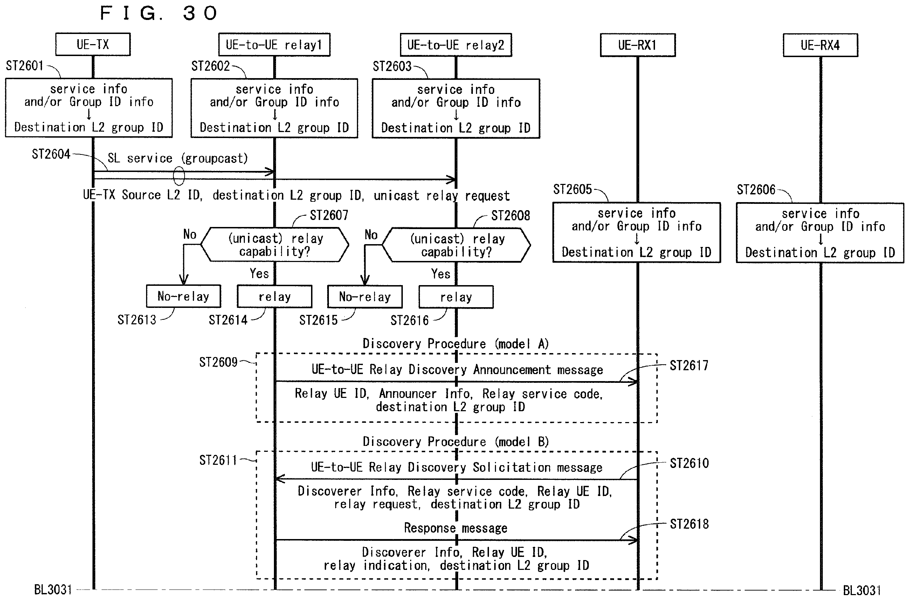

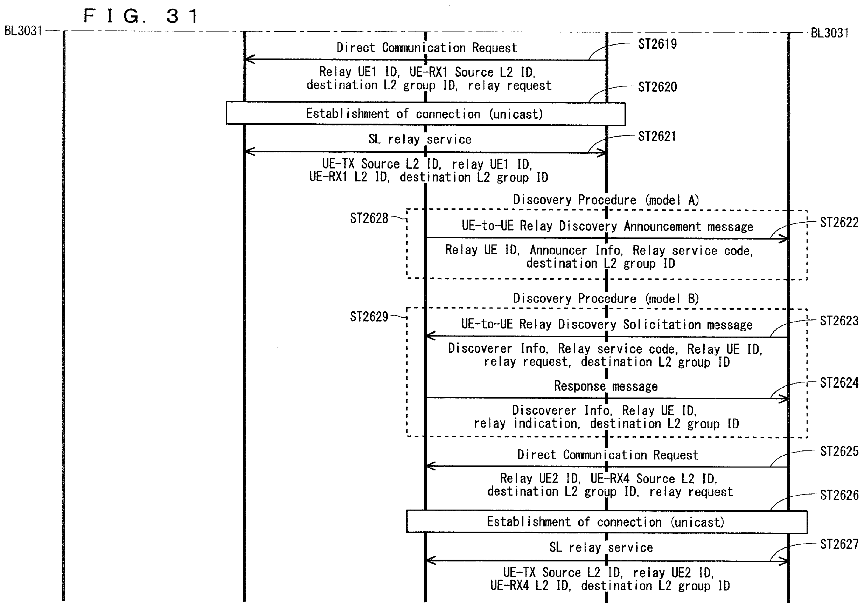

FIGS. 30 and 31 are sequence diagrams illustrating an example of the groupcast communication between the UE-TX and a plurality of UE-RXs through relay UEs according to the first modification of the third embodiment. FIGS. 30 and 31 are connected across a location of a border BL3031. The UE-TX and the relay UEs perform the groupcast communication therebetween, and each of the relay UEs and a corresponding one of the UE-RXs perform the unicast communication therebetween. In this manner, the UE-TX communicates with the plurality of UE-RXs through the relay UEs. In the example of FIGS. 30 and 31, the relay UEs and the UE-RXs use the discovery procedures.

The UE-TX in which data of the service using the SL communication has been generated performs the groupcast communication in the SL in Step ST2604. When performing the groupcast communication, the UE-TX notifies information on a communication method in relaying data. The unicast communication is exemplified as the communication method in relaying data in the first modification of the third embodiment. This enables request of relaying of data or establishment of a relay configuration in the unicast communication.

The UE-TX may include identifiers of communication targets in information on a communication method in relaying data, and transmit the identifiers in the groupcast communication in Step ST2604. The method for configuring an identifier of a communication target in the SL communication between the UE-TX and the relay UE 1, which is disclosed in the third embodiment, may be appropriately applied as a method for configuring identifiers of communication targets. In this manner, the relay UEs can receive the groupcast communication from the UE-TX.

Another method is disclosed in the example of FIGS. 30 and 31. The relay UE calculates identifiers of communication targets corresponding to the service that its own relay UE can relay. The calculation method may be statically predetermined, for example, in a standard. Alternatively, the calculation method may be preconfigured in the UE, for example, configured in the SIM. Alternatively, the calculation method may be provided from the CN as the V2X policy/parameter. Alternatively, the calculation method may be provided from another service function, for example, a service function such as a proximity service.

In Step ST2604, the UE-TX performs the groupcast communication. In the groupcast communication, the UE-TX should configure an identifier of a communication target group corresponding to a service using the SL communication, as an identifier of a communication target. The identifier of the communication target group may be an identifier of the L2 layer. When the identifier of the end communication target group for data of the service using the SL communication that is transmitted from the UE-TX coincides with an identifier of a communication target group corresponding to the SL communication service that its own relay UE can relay, the relay UEs receive the data. Consequently, the relay UEs can receive data from the UE-TX in in the groupcast communication.

In Steps ST2607 and ST2608, the relay UEs determine whether data can be relayed in the communication method received in Step ST2604. The relay UEs may make this determination based on the capability of its own relay UEs. When data can be relayed in the received communication method, the relay UEs determine to relay data in Steps ST2614 and ST2616. When data cannot be relayed in the received communication method, the relay UEs determine not to relay data in Steps ST2613 and ST2615. The example of FIGS. 30 and 31 discloses a case where the relay UEs 1 and 2 determine to relay data.

The relay UE 1 performs the discovery procedure to detect the UE that performs the unicast communication in Step ST2609. In Step ST2609, model A is used. In Step ST2617, the relay UE 1 transmits an announcement message. The relay UE 1 should configure, in the announcement message, an identifier of a communication target group corresponding to a service using the SL communication, as an identifier of a communication target.

The relay UE 1 may perform the discovery procedure to detect the UE that performs the unicast communication in Step ST2611. In Step ST2611, model B is used. In Step ST2610, the UE-RX transmits a solicitation message. The UE-RX should configure, in the message, an identifier of a communication target group corresponding to the service using the SL communication. Furthermore, the UE-RX may include, in the message, information requesting relaying the service.

Upon receipt of the solicitation message from the UE-RX 1, the relay UE 1 determines to perform the unicast communication with the UE-RX 1, using the identifier of the communication target group corresponding to the service using the SL communication and the information requesting the relay all of which are included in the message. For example, upon receipt of solicitation messages from a plurality of UE-RXs, the relay UE 1 may select one of the UE-RXs. Example selection criteria may include the communication quality between the relay UE and each of the UE-RXs. The communication quality may be the SL RSRP or the RSRQ. The other example selection criteria may include a distance, the radio propagation delay time, and the number of Nacks between the relay UE and each of the UE-RXs.

The relay UE 1 may select not one UE-RX but a plurality of UE-RXs. The relay UE 1 may perform the unicast communication with each of the UE-RXs. The relay UE 1 may relay SL communication data from the UE-TX to each of the UE-RXs, using the unicast communication. In FIGS. 30 and 31, the relay UE 1 determines to perform the unicast communication with the UE-RX 1. In Step ST2618, the relay UE 1 notifies the UE-RX 1 of a response message.

Upon receipt of response messages from a plurality of relay UEs, the UE-RX may select one of the relay UEs. As described above, example selection criteria may include the communication quality, a distance, the radio propagation delay time, and the number of Nacks between each of the relay UEs and the UE-RX.

The UE-RX may select a plurality of relay UEs. The UE-RX may be connected to a plurality of relay UEs. The UE-RX receives data from the UE-TX through the plurality of relay UEs. This can bring redundancy to a communication path. Thus, the reliability of the groupcast communication from the UE-TX to the UE-RXs can be enhanced.

When the UE-RX receives the same pieces of data from a plurality of relay UEs, the UE-RX may retain one of the pieces of the data, and discard the other pieces of the data. For example, the UE-RX may retain the first successfully received data, and discard data received later. Whether the pieces of data are the same may be determined using, for example, a sequence number (SN) given by the PDCP of the UE-TX to each of the pieces of data. When the SNs overlap, the pieces of data may be determined as the same data. Alternatively, sequence numbers may be given to V2X packets, and the determination may be made using the sequence numbers. When the sequence numbers of the V2X packets overlap, the pieces of data may be determined as the same data. Alternatively, the determination may be made using identifiers of the QoS flows and the SNs given by the PDCP. When both of the identifiers of the QoS flows and the SNs given by the PDCP overlap, the pieces of data may be determined as the same data. This enables the UE-RX to discard the data received later. Even when the UE-RX is connected to a plurality of relay UEs, the UE-RX can receive the groupcast communication data from the UE-TX.

In Step ST2619, the UE-RX 1 transmits a communication request message for starting the unicast communication between UEs to the selected relay UE (the relay UE 1 in FIGS. 30 and 31). The UE-RX 1 may include, in the message, information requesting the relay, and notify the information. Furthermore, the UE-RX 1 may include, in the message, an identifier of a communication target group corresponding to a service using the SL communication and an identifier of its own UE-RX 1, and notify the identifiers. These identifiers may be identifiers of the L2 layer.

In Step ST2620, the relay UE 1 establishes a connection for the unicast communication with the UE-RX. Establishment of the connection may be establishment of the PC5 link or establishment until the SL RRC connection. In Step ST2621, the relay UE 1 relay transmits, to the UE-RX 1, data of the service using the SL communication which has been received from the UE-TX. The relay transmission of the data of the service is performed by the unicast communication between the relay UE 1 and the UE-RX 1.

In Step ST2621, the relay UE 1 transmits, in unicast communication to the UE-RX 1, the data of the service using the SL communication which has been received from the UE-TX. When performing the unicast communication with the UE-RX 1, the relay UE 1 may configure an identifier of the UE-RX 1 as an identifier of a communication target. Alternatively, the relay UE 1 may configure an identifier of an end SL communication target group which has been received from the UE-TX, as an identifier of a communication target. Furthermore, the relay UE 1 may transmit an identifier of the UE-TX when performing the unicast communication.

The UE-RX 1 should receive data addressed to the identifier of its own UE-RX 1 as a communication target, in the relayed SL communication. Alternatively, when the identifier of the end SL communication target group for data relayed by the service using the SL communication coincides with the identifier of the SL communication target group corresponding to the SL communication service from which reception is desired, the UE-RX 1 may receive the relayed data. Consequently, the UE-RX can receive data from the UE-TX through the relay UE 1 in the groupcast communication.

Furthermore, the UE-RX 1 can identify a source of the groupcast communication by receiving the identifier of the UE-TX corresponding to the data relayed by the service using the SL communication.

When determining to relay the groupcast communication from the UE-TX, the relay UE 2 performs the discovery procedures, establishes a connection with the UE-RX (the UE-RX 4 in FIGS. 30 and 31) for the unicast communication, and relay transmits data of the service using the SL communication which has been received from the UE-TX, in Steps ST2622 to ST2627. The relay transmission of the data of the service is performed by the unicast communication between the relay UE 2 and the UE-RX 4. These are the same methods for the relay UE 1.

This enables the groupcast communication from the UE-TX to the plurality of UE-RXs through the relay UEs.

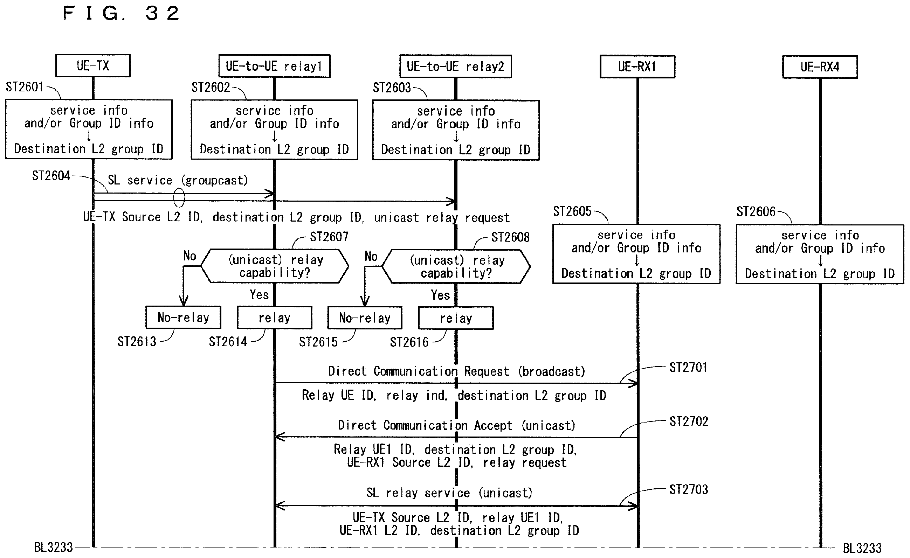

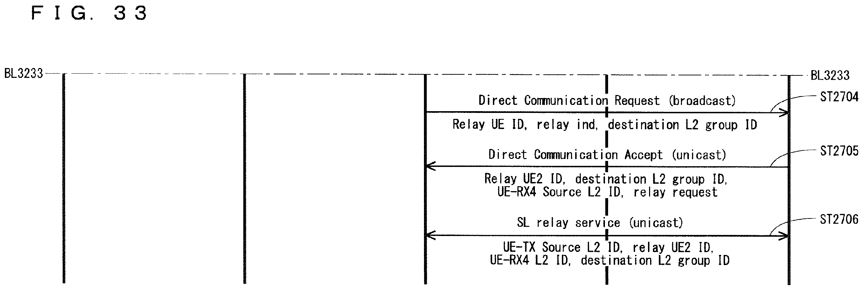

FIGS. 32 and 33 are sequence diagrams illustrating another example of the groupcast communication between a UE-TX and a plurality of UE-RXs through relay UEs according to the first modification of the third embodiment. FIGS. 32 and 33 are connected across a location of a border BL3233. The UE-TX and each of the relay UEs perform the unicast communication therebetween, and the relay UE and the plurality of UE-RXs perform the unipcast communication therebetween. In this manner, the UE-TX communicates with the plurality of UE-RXs through the relay UEs. In FIGS. 32 and 33, the same step numbers are applied to the steps common to those in FIGS. 30 and 31, and the common description thereof is omitted.

FIGS. 30 and 31 disclose an example using the discovery procedures between the relay UE and the UE-RX. FIGS. 32 and 33 disclose an example without using the discovery procedures. When determining to relay the groupcast communication from the UE-TX in Step ST2614, the relay UE 1 broadcasts a communication request message for starting the unicast communication between UEs in Step ST2701. The relay UE 1 may include, in the communication request message, information indicating execution of the relay, and notify the information. Furthermore, the relay UE 1 may include, in the communication request message, an identifier of a communication target group corresponding to a service using the SL communication and an identifier of its own relay UE 1, and notify the identifiers. These identifiers may be identifiers of the L2 layer.

The UE-RX (the UE-RX 1 in FIGS. 32 and 33) that has received the communication request message for starting the unicast communication between UEs from the relay UE 1 determines to perform the unicast communication with the relay UE 1 when the identifier of the communication target group which corresponds to the service using the SL communication and is included in the message coincides with the identifier of the SL communication target group corresponding to the SL communication service from which reception is desired.

In Step ST2702, the UE-RX 1 notifies the relay UE 1 of a unicast communication request response message between UEs. Upon receipt of the unicast communication request response message between UEs from the UE-RX 1, the relay UE 1 may determine that the connection for the unicast communication with the UE-RX 1 has been established. Establishment of the connection may be establishment of the PC5 link or establishment until the SL RRC connection. Upon receipt of unicast communication request response messages between UEs from a plurality of UE-RXs 1, the relay UE 1 may select one of the UE-RXs or the plurality of UE-RXs. When selecting the plurality of UE-RXs, the relay UE 1 should perform the unicast communication with each of the UE-RXs. The aforementioned selection criteria may be used for the selection.

In Step ST2703, the relay UE 1 relay transmits, to the UE-RX 1, data of the service using the SL communication which has been received from the UE-TX. The relay transmission of the data of the service is performed by the unicast communication between the relay UE 1 and the UE-RX 1.

In Step ST2703, the relay UE 1 transmits, in unicast communication to the UE-RX 1, the data of the service using the SL communication which has been received from the UE-TX. When performing the unicast communication with the UE-RX 1, the relay UE 1 may configure an identifier of the UE-RX 1 as an identifier of a communication target. Alternatively, the relay UE 1 may configure an identifier of an end SL communication target group received from the UE-TX, as an identifier of a communication target. Furthermore, the relay UE 1 may transmit an identifier of the UE-TX when performing the unicast communication.

The UE-RX 1 should receive data addressed to the identifier of its own UE-RX 1 as a communication target, in the relayed SL communication. Alternatively, when the identifier of the end SL communication target group for data relayed by the service using the SL communication coincides with the identifier of the SL communication target group corresponding to the SL communication service from which reception is desired, the UE-RX 1 may receive the relayed data. Consequently, the UE-RX can receive data from the UE-TX through the relay UE 1 in the groupcast communication.

Furthermore, the UE-RX 1 can identify a source of the groupcast communication by receiving the identifier of the UE-TX corresponding to the data relayed by the service using the SL communication.

When determining to relay the groupcast communication from the UE-TX, the relay UE 2 establishes a connection with the UE-RX (the UE-RX 4 in FIGS.32 and 33) for the unicast communication, and relay transmits data of the service using the SL communication which has been received from the UE-TX, in Steps ST2704 to ST2706. The relay transmission of the data of the service is performed by the unicast communication between the relay UE 2 and the UE-RX 4. These are the same methods for the relay UE 1.

This enables the groupcast communication from the UE-TX to the plurality of UE-RXs through the relay UEs. For example, when the UE-TX performs the groupcast communication with a group consisting of a plurality of UEs, the groupcast communication through relays can enlarge a range of a plurality of UE-RXs that can communicate with the UE-TX. Furthermore, when there is an obstacle between the UE-TX and the plurality of UE-RXs, the groupcast communication through relays can increase the communication quality between the UE-TX and the UE-RXs.

The communication between the UE-TX and relay UEs is performed in the groupcast communication. Thus, even when communication is interrupted due to inferior communication quality between one UE-TX and a relay UE, the groupcast communication from the UE-TX to UE-RXs in the group through other relay UEs is possible. This can enhance the redundancy and the reliability in the SL groupcast communication.

### The Second Modification of the Third Embodiment

The second modification of the third embodiment discloses another method for solving the problem described in the third embodiment.

The groupcast communication is performed in relaying data between UEs. The UE performs the groupcast communication with a plurality of UEs through relay UEs. A method for communication between the UE-TX and the relay UEs may be the same as the method for communication between each of the relay UEs and the UE-RXs. The specific method is to perform the groupcast communication between the UE-TX and the relay UEs and the groupcast communication between each of the relay UEs and a plurality of UE-RXs. In this manner, the UE-TX communicates with the plurality of UE-RXs through the relay UEs.

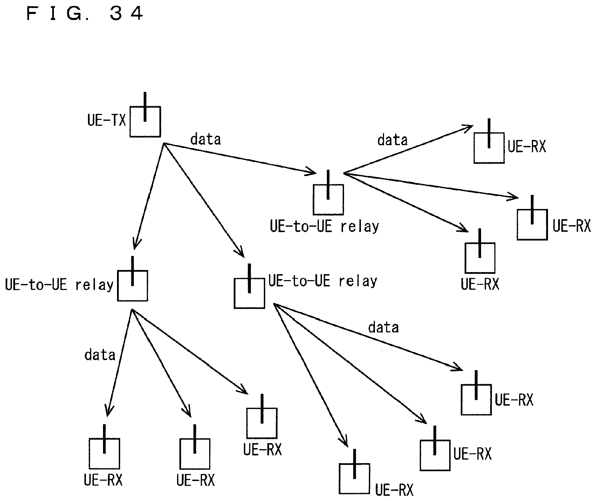

FIG. 34 is a conceptual diagram illustrating an example of the groupcast communication between a UE-TX and a plurality of UE-RXs through relay UEs according to the second modification of the third embodiment. The UE-TX and the relay UEs perform the groupcast communication therebetween, and each of the relay UEs and the plurality of UE-RXs perform the groupcast communication therebetween. In this manner, the UE-TX communicates with the plurality of UE-RXs through the relay UEs.

The relay UEs receive the groupcast communication that can be relayed by its own relay UEs. The method disclosed in the first modification of the third embodiment should be appropriately applied to this method. In this manner, each of the relay UEs can receive data transmitted from the UE-TX in groupcast.

When the relay UEs receive information for identifying an SL communication target group for the groupcast communication, the relay UEs relay the received data to the SL communication target group, using the information for identifying the SL communication target group.

Each of the relay UEs performs the groupcast communication with the UE-RXs for relaying data between UEs. The method disclosed in the first modification of the third embodiment should be appropriately applied so that each of the relay UEs determines whether to perform the groupcast communication with the UE-RXs. Each of the relay UEs may determine whether to perform the groupcast communication with the UE-RXs, using information on the communication method notified from the UE-TX. As another method, upon receipt of the information for identifying the SL communication target group for the groupcast communication from the UE-TX, each of the relay UEs may determine to perform the groupcast communication with the UE-RXs.

When the communication between each of the relay UEs and the UE-RXs is groupcast communication, the relay UEs transmit the information for identifying the SL communication target group. When the UE-RXs receive information for identifying the SL communication target group for the groupcast communication and the received information coincides with target identification information corresponding to the V2X service using a desired groupcast communication, the UE-RXs receive the groupcast communication. In this manner, the UE-RXs can receive data transmitted from the UE-TX in groupcast through the relay UEs.

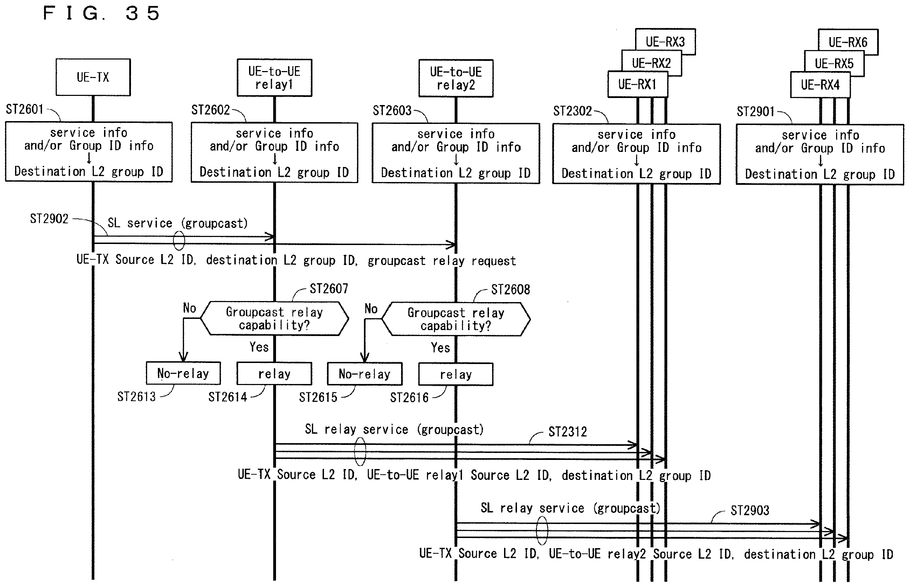

FIG. 35 is a sequence diagram illustrating an example of the groupcast communication between a UE-TX and a plurality of UE-RXs through relay UEs according to the second modification of the third embodiment. The UE-TX and the relay UEs perform the groupcast communication therebetween, and each of the relay UEs and the plurality of UE-RXs perform the groupcast communication therebetween. In this manner, the UE-TX communicates with the plurality of UE-RXs through the relay UEs. In FIG. 35, the same step numbers are applied to the steps common to those in FIGS. 26 and 27 and FIGS. 30 and 31, and the common description thereof is omitted.

The UE-TX in which data of the service using the SL communication has been generated performs the groupcast communication in the SL in Step ST2902. When performing the groupcast communication, the UE-TX notifies information on a communication method in relaying data. The groupcast communication is exemplified as the communication method in relaying data in the second modification of the third embodiment. This enables request of relaying of data or establishment of a relay configuration in the groupcast communication. The method disclosed in Step ST2604 should be appropriately applied to the communication method in relaying data. Consequently, the relay UEs can receive data from the UE-TX in the groupcast communication.

In Steps ST2607 and ST2608, the relay UEs determine whether data can be relayed in the communication method received in Step ST2902.

When determining to relay the groupcast communication from the UE-TX, the relay UEs 1 and 2 relay transmit, in Steps ST2312 and ST2903, respectively, data of the service using the SL communication which has been received from the UE-TX. The relay transmission of the data of the service is performed by groupcast communication between each of the relay UEs and the UE-RXs. These are the same methods for the relay UE 1. The method disclosed in Step ST2312 should be appropriately applied to these communication methods.

This enables the groupcast communication from the UE-TX to the plurality of UE-RXs through the relay UEs. For example, when the UE-TX performs the groupcast communication with a group consisting of a plurality of UEs, the groupcast communication through relays can enlarge a range of a plurality of UE-RXs that can communicate with the UE-TX. Furthermore, when there is an obstacle between the UE-TX and the plurality of UE-RXs, the groupcast communication through relays can increase the communication quality between the UE-TX and the UE-RXs.

The communication between the UE-TX and relay UEs is performed in the groupcast communication. Thus, even when communication is interrupted due to inferior communication quality between one UE-TX and a relay UE, the groupcast communication from the UE-TX to UE-RXs in the group through other relay UEs is possible. This can enhance the redundancy and the reliability in the SL groupcast communication. The use of the groupcast communication between each of the relay UEs and the UE-RXs enables transmission of data of the service using the SL communication which has been received from the UE-TX, even to a group including many more UE-RXs in the groupcast communication.

The methods disclosed in the third embodiment to the second modification of the third embodiment may be combined. For example, the UE-TX performs the groupcast communication with the UE-RXs through one or more relay UEs according to the method disclosed in the third embodiment, and further performs the groupcast communication with the UE-RXs through another one or more relay UEs according to the method disclosed in the first modification of the third embodiment. For example, when a communication method to be performed by a relay UE is limited to each relay UE, establishing a relay configuration appropriate for each of the communication methods enables efficient use of the relay UEs.

The UE-TX may perform the groupcast communication with the UE-RXs in UE-to-UE direct communication, and perform the groupcast communication with other UE-RXs through relay UEs in UE-to-UE indirect communication. The methods disclosed in the third embodiment to the second modification of the third embodiment should be appropriately applied to a method for performing the groupcast communication through relay UEs in the UE-to-UE indirect communication. For example, when the groupcast communication is required for UE-RXs other than UE-RXs capable of the UE-to-UE direct communication, the method for performing the groupcast communication through relay UEs in the UE-to-UE indirect communication should be applied. This enables broader groupcast communication with distant UE-RXs.

When the UE-TX performs the groupcast communication with the UE-RXs through relay UEs according to the disclosed method, each of the UE-RXs sometimes redundantly receives the same pieces of data from the UE-TX. This can maintain the redundancy in the UE-to-UE indirect communication between the UE-TX and the UE-RXs through the relay UEs, and enhance the reliability.

In such a case, for example, the UE-RX forwards the pieces of data redundantly received to the application layer of the V2X service. Here, the application layer cannot determine whether the received pieces of data overlap, and thus receive the same data a plurality of times. This sometimes causes a malfunction.

Thus, the application layer may discard the overlapping pieces of data. However, when the application layer cannot determine whether the received pieces of data overlap, the problem remains. For solving such a problem, the UE-RX may retain one of the pieces of the data, and discard the other pieces of the data. The data discarding method when the UE-RX receives the same pieces of data from a plurality of relay UEs, which is disclosed in the second modification of the third embodiment, should be appropriately applied to this method. This can produce the same advantages as previously described. This saves processes by the application layer, and can reduce malfunctions.

### The Fourth Embodiment

None discloses a method for configuring a radio bearer in performing the indirect communication through a relay UE in the SL. Unlike the conventional communication between the UE and a base station through the Uu interface or the UE-to-UE direct communication in the SL through the PC5 interface, the method for configuring a radio bearer is necessary in communication through a relay UE in the SL. The method for configuring a radio bearer between the source UE and the relay UE and between the relay UE and the target UE in the SL communication is necessary. The fourth embodiment discloses a method for configuring a radio bearer in performing the UE-to-UE indirect communication through a relay UE in the SL.

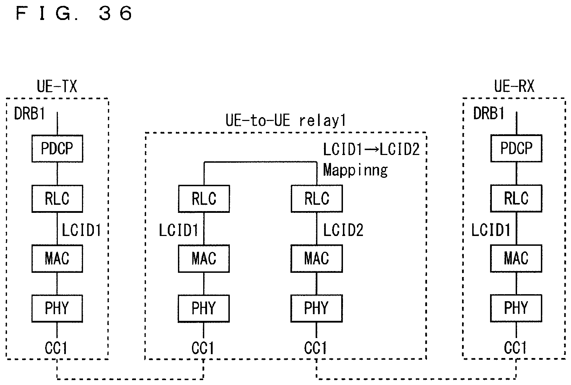

A protocol configuration of each node in performing the UE-to-UE indirect communication through a relay UE in the SL is disclosed. FIG. 36 illustrates an example protocol configuration of each node in performing the UE-to-UE indirect communication through a relay UE in the SL. The transmitting UE-TX that performs the SL communication transmits data to the relay UE 1 (UE-to-UE relay 1). The relay UE 1 relay transmits, to the receiving UE-RX, the data received from the UE-TX. The signaling transmitted from the UE-TX may be relay transmitted to the UE-RX through the relay UE 1. The relay UE 1 relays the signaling between the RLC and the PDCP. This saves the relay UE 1 from performing PDCP processes on data to be relayed. Thus, the relay UE 1 can relay data earlier. The UE-to-UE indirect communication through the relay UE in the SL can be implemented with low latency.

A method for configuring a radio bearer in a relay UE is disclosed.

The relay UE configures the RLC bearer between the relay UE and the UE-RX. The relay UE may configure the LCID between the relay UE and the UE-RX. The relay UE may configure the RLCs to the PHYs between the relay UE and the UE-RX. The UE-TX notifies the relay UE of a bearer configuration between the UE-TX and the relay UE. For example, the relay UE may establish a bearer configuration between the relay UE and the UE-RX, using the bearer configuration between the UE-TX and the relay UE which has been received from the UE-TX. The relay UE should notify the UE-RX of these configurations. In this manner, the relay UE can configure the bearer for the SL communication between the relay UE and the UE-RX. The relay UE can easily configure the bearer for the SL communication between the relay UE and the UE-RX, using a load state in its own relay UE or a radio propagation state between the relay UE and the UE-RX.

The UE-TX may notify the relay UE of a part or the entirety of the V2X policy/parameter of the V2X service to be implemented using the SL communication. For example, the relay UE may establish a bearer configuration between the relay UE and the UE-RX, using the V2X policy/parameter. For example, even when the V2X service is implemented in the UE-to-UE indirect communication between the UE-TX and the UE-RX through the relay UE, the UE-TX can provide the relay UE with the V2X policy/parameter required for the V2X service.

As another method, the UE-TX may configure the RLC bearer between the relay UE and the UE-RX. The UE-TX may configure the LCID between the relay UE and the UE-RX. The UE-TX may configure the RLCs to the PHYs between the relay UE and the UE-RX. The UE-TX should notify the UE-RX of these configurations. The UE-TX may notify the UE-RX of these configurations through the relay UE. The UE-TX notifies the relay UE of these configurations. Then, the relay UE notifies the UE-RX of the configurations. This enables, for example, the UE-TX to request, of the relay UE, the bearer configuration between the relay UE and the UE-RX. For example, the UE-TX can configure a bearer between the relay UE and the UE-RX according to the QoS required for the V2X service.

The PC5 signaling may be used as the notification method. For example, the UE-TX may give the notification to the relay UE in a process of establishing the PC5 link between the UE-TX and the relay UE. The relay UE may give the notification to the UE-RX in a process of establishing the PC5 link between the relay UE and the UE-RX. As another notification method, the SL RRC signaling may be used. The aforementioned configurations may be notified as the AS configurations.

Information indicating whether the relay UE decodes the signaling or data to be transmitted from the UE-TX to the UE-RX through the relay UE may be provided. For example, the UE-TX may include the information in the RLC PDU, and notify the relay UE of the information. This enables the UE-TX to instruct the relay UE to decode the signaling or the data.

When the UE-TX notifies, through the relay UE, the UE-RX of the bearer configuration between the relay UE and the UE-RX, the relay UE may decode the configuration. The UE-TX should set "decoding" as information indicating whether the decoding is performed, and notify the information. This enables the relay UE to recognize the bearer configuration between the relay UE and the UE-RX which has been configured by the UE-TX.

The configuration of the RLC bearer between the relay UE and the UE-RX need not be identical to that between the UE-TX and the relay UE. The configuration of the RLC bearer between the relay UE and the UE-RX may be different from that between the UE-TX and the relay UE. For example, only the configuration of the LCID between the relay UE and the UE-RX may be different from that between the UE-TX and the relay UE.

This enables establishment of the configuration of the RLC bearer between the relay UE and the UE-RX, irrespective of the configuration of the RLC bearer between the UE-TX and the relay UE. This also enables establishment of the configuration of the LCID between the relay UE and the UE-RX, irrespective of the configuration of the LCID between the UE-TX and the relay UE. The configurations of the UE-TX side and the UE-RX side can be changed depending on, for example, a load state in the relay UE.

The configurations of the RLCs to the PHYs between the relay UE and the UE-RX need not be identical to those between the UE-TX and the relay UE. The configurations of the RLCs to the PHYs between the relay UE and the UE-RX may be different from those between the UE-TX and the relay UE. Consequently, the configurations of the UE-TX side and the UE-RX side which include the configurations of the MAC to the PHY can be changed depending on, for example, a load state or the radio propagation environment in the relay UE.

The bearer configuration between the relay UE and the UE-RX may be established for each UE-TX. The identifier of the UE-TX and the bearer between the relay UE and the UE-RX may be associated with each other and configured. The identifier of the UE-TX and an identifier of the RLC bearer may be associated with each other and configured. When an identifier of the RLC channel of the RLC bearer is given, the identifier of the UE-TX and the identifier of the RLC channel may be associated with each other and configured. The identifier of the UE-TX and the LCID may be associated with each other and configured. The relay UE may relay the SL communications from a plurality of UE-TXs. This enables, for example, the UE-RX to which the bearer configuration has been notified to recognize for which UE-TX the bearer configuration is, even when the relay UE relays the SL communications from a plurality of UE-TXs. Thus, malfunctions in the UE-RX can be reduced.

FIG. 36 discloses an example where the configuration of the LCID between the UE-TX and the relay UE is different from that between the relay UE and the UE-RX. The LCID between the UE-TX and the relay UE 1 is set to 1, whereas the LCID between the relay UE 1 and the UE-RX is set to 2. The relay UE 1 maps the LCID 1 to the LCID 2. In the SL communication, the LCID 1 is used for data to be transmitted from the UE-TX to the relay UE 1. The relay UE 1 changes the LCID 1 to the LCID 2. The LCID 2 is used for data to be transmitted from the relay UE 1 to the UE-RX.

The configuration of the LCID to be used for the relay transmission between the relay UE 1 and the UE-RX is notified to the UE-RX in advance. This enables the UE-RX to receive data of the LCID 2.

The example of FIG. 36 enables configuration of the bearer for the SL communication between the relay UE and the UE-RX, according to a load state in the relay UE and a radio propagation state between the relay UE and the UE-RX.

An identifier of the radio bearer between the UE-TX and the relay UE may be the same as that between the relay UE and the UE-RX. In the example of FIG. 36, the ID of the DRB for the SL communication is set to 1. This can change the configuration of the LCID in the same DRB.

Another example method for configuring the RLC bearer is disclosed.

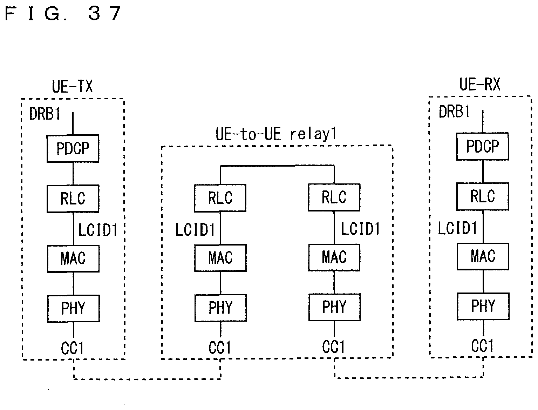

FIG. 37 illustrates an example where the configuration of the LCID between the UE-TX and the relay UE is consistent with that between the relay UE and the UE-RX. Since the protocol configuration of each node is the same as that in FIG. 36, the description is omitted. The LCID between the UE-TX and the relay UE 1 is set to 1, and the LCID between the relay UE 1 and the UE-RX is set to 1. In the SL communication, the LCID 1 is used for data to be transmitted from the UE-TX to the relay UE 1. The same LCID 1 is used for data to be transmitted from the relay UE 1 to the UE-RX.

The configuration of the LCID to be used for the relay transmission between the relay UE 1 and the UE-RX is notified to the UE-RX in advance. This enables the UE-RX to receive data of the LCID 1.

The UE-TX may request the relay UE to make the configuration of the LCID between the UE-TX and the relay UE consistent with that between the relay UE and the UE-RX. For example, information indicating whether the configuration of the LCID between the UE-TX and the relay UE is made consistent with that between the relay UE and the UE-RX may be provided. The UE-TX may notify the relay UE of the information. As another method, making the configuration of the LCID between the UE-TX and the relay UE consistent with that between the relay UE and the UE-RX may be statically predetermined, for example, in a standard.

The example of FIG. 37 can facilitate processes of configuring a bearer in the relay UE. Moreover, making the LCID between the UE-TX and the relay UE consistent with that between the relay UE and the UE-RX enables the UE-TX and the UE-RX to share the common LCID for the same data communication.

For example, a status report function for indicating a reception state of data and a polling function for requesting a status report may be provided for performing the UE-to-UE indirect communication through the relay UE using the SL communication. These functions may be provided as functions of the RLC. Example reception states of data include information indicating successfully received data and/or undelivered data and segment information in the RLC. These pieces of information may be associated with LCID information.

The relay UE may notify the UE-TX of a status report on data received from the UE-TX. The UE-TX may notify the relay UE of polling. Furthermore, the UE-RX may notify the relay UE of a status report on data received from the relay UE. The relay UE may notify the UE-TX of polling.

The relay UE may notify the UE-TX of a status report on data received from the UE-RX. This enables the UE-TX to receive the status report between the relay UE and the UE-RX. For example, the UE-TX can modify the bearer configuration between the relay UE and the UE-RX to satisfy the QoS required for the V2X service using the SL communication to be performed through the relay UE, using the status report between the relay UE and the UE-RX. The application of this method is valid when the UE-TX establishes the bearer configuration between the relay UE and the UE-RX.

When the LCID between the UE-TX and the relay UE is different from the LCID between the relay UE and the UE-RX, status reports on pieces of data before and after the relay cannot be associated with each other though the pieces of data are the same. As a method for solving such a problem, the relay UE may notify the UE-TX of information associating the LCID between the UE-TX and the relay UE with the LCID between the relay UE and the UE-RX. For example, the relay UE notifies the UE-TX of the LCIDs configured for the relay communication, and the mapping information on the LCIDs. The relay UE notifies the UE-TX of a status report corresponding to each of the LCIDs. This enables the UE-TX to receive the LCIDs and the status reports corresponding to the LCIDs. The UE-TX can recognize whether the notified status report is a status report between the UE-TX and the relay UE or a status report between the relay UE and the UE-RX.

Another method is disclosed. The status report between the UE-TX and the relay UE may include the status report between the relay UE and the UE-RX. Alternatively, these status reports may be merged. A data unit format allowing transmission of status reports of a plurality of SL communications inclusive may be provided. The relay UE includes the status report between the relay UE and the UE-RX in the status report between the UE-TX and the relay UE, and notifies the UE-TX of the status report. The status report should be a status report on data of the LCID configured between the UE-TX and the relay UE. This enables the UE-TX to receive each of the status reports.

Polling for requesting a status report between the UE-TX and the relay UE may be provided. The UE-TX may notify the relay UE of the polling. Polling for requesting a status report between the relay UE and the UE-RX may be provided. The relay UE may notify the UE-RX of the polling. Alternatively, polling for requesting a status report between the UE-TX and the relay UE and a status report between the relay UE and the UE-RX may be provided. The UE-TX may notify the relay UE of the polling. This can trigger various status reports.

The UE-RX may notify, through the relay UE, the UE-TX of a status report on data received from the relay UE. The aforementioned method performed by the relay UE for notifying the UE-TX of the status report on data received from the UE-RX may be applied to this notification method. The UE-TX may determine a total data communication state between the UE-TX and the relay UE and between the relay UE and the UE-RX, using the status report from the UE-RX.

This enables, for example, the UE-TX or the relay UE to configure a bearer according to a communication state between the UE-TX and the relay UE and a communication state between the relay UE and the UE-RX. The QoS required for the V2X service using the SL communication can be satisfied even in performing the UE-to-UE indirect communication through the relay UE.

In performing the UE-to-UE indirect communication through the relay UE using the SL communication, information on transmission and reception states of data in the relay UE may be provided. A function for notifying the information from the relay UE to the UE-TX may be provided. The following (1) to (7) are disclosed as specific examples of the information on transmission and reception states of data in the relay UE.
(1) Information on the PDCP that cannot be received
(2) Information on the PDCP successfully transmitted
(3) Information on the PDCP successfully retransmitted
(4) Information on a buffer size
(5) Information on a data rate
(6) Cause information
(7) Combinations of (1) to (6) above

The information (1) may be, for example, a sequence number of the PDCP PDU that the relay UE cannot receive from the UE-TX. The UE-TX can recognize the PDCP PDU that the relay UE cannot receive. The information (1) may be, for example, sequence number information on the PDCP PDU that cannot be received. Furthermore, the information (1) may be, for example, information on the smallest sequence number among the sequence numbers of the PDCP PDUs that cannot be received. Furthermore, the information (1) may be, for example, information indicating whether the PDCP PDU in a certain reception coverage (window) has been received. The information may be information indicated in bitmap for each PDCP PDU.

The information (2) may be, for example, a sequence number of the PDCP PDU successfully transmitted from the relay UE to the UE-RX. The UE-TX can recognize how many PDCP PDUs the relay UE has delivered to the UE-RX. The information (2) may be, for example, information on the highest sequence number among the PDCP PDUs successfully transmitted. The information (2) may be, for example, information on the highest sequence number among the PDCP PDUs successfully transmitted in order.

The information (3) may be, for example, a sequence number of the PDCP PDU successfully retransmitted from the relay UE to the UE-RX. The UE-TX can recognize how many PDCP PDUs the relay UE has delivered to the UE-RX. The information (3) may be, for example, information on the highest sequence number among the PDCP PDUs successfully retransmitted. The information (3) may be, for example, a sequence number of the PDCP PDU retransmitted to a lower layer than the PDCP in the relay UE. The information (3) may be, for example, the highest sequence number among the PDCP PDUs retransmitted to the lower layer than the PDCP.

The information (4) may be, for example, the data amount that can be buffered in the relay UE. The information (4) may be, for example, the amount of data that the UE-TX is requested to transmit. The UE-TX can recognize how much the data should be transmitted to the relay UE.

The information (5) may be, for example, a data rate at which the UE-TX is requested to perform transmission. The UE-TX can recognize at which data rate the data should be transmitted to the relay UE.

The information (6) may be, for example, information on a link state between the relay UE and the UE-RX. The information (6) may be, for example, information on a PC5 link state, information on a radio state, or information on an RRC state. These pieces of information may be detected by the relay UE or reported by the UE-RX. The UE-TX can recognize the link state between the relay UE and the UE-RX.

The relay UE notifies the UE-TX of the information on transmission and reception states of data in the relay UE. The relay UE may associate the information with the LCID information. Furthermore, the UE-TX may notify the relay UE of information indicating a request for the information. Upon receipt of the request information, the relay UE notifies the UE-TX of the information on transmission and reception states of data in the relay UE.

This enables the UE-TX to recognize the transmission and reception states of data in the relay UE including transmission and reception states of data between the relay UE and the UE-RX. For example, the UE-TX can modify the bearer configuration between the relay UE and the UE-RX to satisfy the QoS required for the V2X service using the SL communication to be performed through the relay UE, using the status report between the relay UE and the UE-RX. The application of this method is valid when the UE-TX establishes the bearer configuration between the relay UE and the UE-RX.

When the LCID between the UE-TX and the relay UE is different from the LCID between the relay UE and the UE-RX, a problem occurs: it is uncertain that the information on the transmission and reception states of data in the relay UE corresponds to information on transmission and reception states of which RLC bearer. As a method for solving such a problem, the relay UE may notify the UE-TX of information associating the LCID between the UE-TX and the relay UE with the LCID between the relay UE and the UE-RX. For example, the relay UE notifies the UE-TX of the LCIDs configured for the relay communication, and the mapping information on the LCIDs. The relay UE notifies the UE-TX of the information on the transmission and reception states of data in the relay UE, using the LCID configured between the UE-TX and the relay UE and the LCID configured between the relay UE and the UE-RX.

This enables the UE-TX to recognize whether the information on the transmission and reception states of data which has been received from the relay UE is information between the UE-TX and the relay UE or information between the relay UE and the UE-RX.

Another method is disclosed. The relay UE notifies the UE-TX of the information on the transmission and reception states of data in the relay UE including the transmission and reception states of data between the relay UE and the UE-RX, as information on the transmission and reception states of data in the relay UE which corresponds to the LCID configured between the UE-TX and the relay UE. The relay UE should include the transmission and reception states of data between the relay UE and the UE-RX in the information on the transmission and reception states of data in the relay UE which corresponds to the LCID configured between the UE-TX and the relay UE, based on mapping the LCID between the UE-TX and the relay UE to the LCID between the relay UE and the UE-RX which is performed by its own relay UE. This enables the UE-TX to receive the information on the transmission and reception states of data in the relay UE including the transmission and reception states of data between the relay UE and the UE-RX.

In the SL communication, the UE-RX may establish the PC5 link with the relay UE or the relay UE may establish the PC5 link with the UE-TX so that the status report for indicating a reception state of data or the information on transmission and reception states of data is transmitted from the UE-RX to the relay UE or from the relay UE to the UE-TX. The PC5 link may be established when the UE-TX establishes the PC5 link with the relay UE or the relay UE establishes the PC5 link with the UE-RX.

The status report for indicating a reception state of data or transmission and reception states of data may be notified from the UE-RX to the relay UE or from the relay UE to the UE-TX via the PC5 signaling in the PC5 link. Alternatively, the notification may be given via the RRC signaling or the MAC signaling. Consequently, the status report for indicating a reception state of data or the information on transmission and reception states of data can be transmitted from the UE-RX to the relay UE or from the relay UE to the UE-TX in the SL communication.

This enables, for example, the UE-TX or the relay UE to configure a bearer according to a communication state between the UE-TX and the relay UE and a communication state between the relay UE and the UE-RX. The QoS required for the V2X service using the SL communication can be satisfied even in performing the UE-to-UE indirect communication through the relay UE.

An example method for configuring a radio bearer is disclosed.

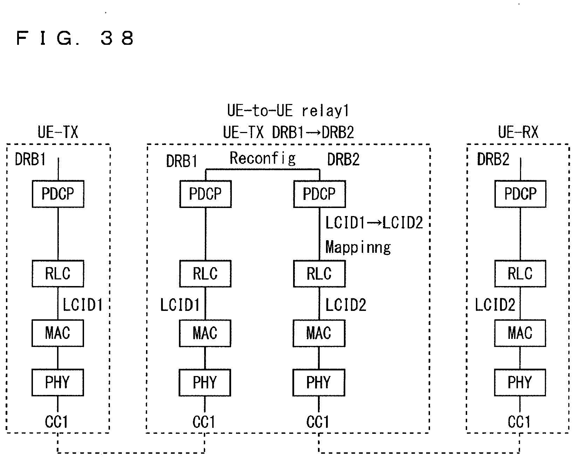

FIG. 38 illustrates another example protocol configuration of each node in performing the UE-to-UE indirect communication through a relay UE in the SL. The relay UE 1 (UE-to-UE relay1) relays data between the SDAP and the PDCP. This enables the relay UE 1 to relay data before processes in the PDCP. Thus, the relay UE 1 can configure a radio bearer between the relay UE 1 and the UE-RX. The relay UE 1 can configure a radio bearer according to a load state of the relay UE 1.

A method for configuring a radio bearer in the relay UE is disclosed.

The relay UE configures a radio bearer between the relay UE and the UE-RX. The radio bearer may be the SRB or the DRB. The relay UE should notify the UE-RX of the configuration of the radio bearer. In this manner, the relay UE can configure the bearer for the SL communication between the relay UE and the UE-RX. The relay UE can easily configure the bearer for the SL communication between the relay UE and the UE-RX, using a load state in its own relay UE or a radio propagation state between the relay UE and the UE-RX.

As another method, the UE-TX may configure a radio bearer between the relay UE and the UE-RX. The UE-TX notifies the UE-RX of the configuration of the radio bearer. The UE-TX may notify the UE-RX of the configuration through the relay UE. The UE-TX notifies the relay UE of the configuration of the radio bearer. Then, the relay UE notifies the UE-RX of the configuration of the radio bearer. This enables, for example, the UE-TX to request, of the relay UE, the bearer configuration between the relay UE and the UE-RX. For example, the UE-TX can configure a bearer between the relay UE and the UE-RX according to the QoS required for the V2X service.

The aforementioned notification method disclosed on the method for configuring the RLC bearer should be appropriately applied to a method for notifying the configuration.

The configuration of the radio bearer between the relay UE and the UE-RX need not be identical to that between the UE-TX and the relay UE. The configuration of the radio bearer between the relay UE and the UE-RX may be different from that between the UE-TX and the relay UE. For example, only an identifier of the radio bearer between the relay UE and the UE-RX and the configuration of the LCID used in the RLC bearer may be different from an identifier of the radio bearer between the UE-TX and the relay UE and the configuration of the LCID used in the RLC bearer.

This enables the configuration of the radio bearer between the relay UE and the UE-RX, irrespective of the configuration of the radio bearer between the UE-TX and the relay UE. This also enables the configuration of the identifier of the radio bearer and the LCID between the relay UE and the UE-RX, irrespective of the configuration of the identifier of the radio bearer and the LCID between the UE-TX and the relay UE. The configurations of the UE-TX side and the UE-RX side can be changed depending on, for example, a load state in the relay UE.

The configurations of the RLCs to the PHYs between the relay UE and the UE-RX need not be identical to those between the UE-TX and the relay UE. The configurations of the RLCs to the PHYs between the relay UE and the UE-RX may be different from those between the UE-TX and the relay UE. Consequently, the configurations of the UE-TX side and the UE-RX side which include the configurations of the MACs to the PHYs can be changed depending on, for example, a load state or the radio propagation environment in the relay UE.

FIG. 38 discloses an example where the configuration of the DRB between the UE-TX and the relay UE is different from that between the relay UE and the UE-RX. The DRB 1 is configured between the UE-TX and the relay UE 1, whereas the DRB 2 is configured between the relay UE 1 and the UE-RX. The relay UE 1 maps the DRB 1 to the DRB 2. The LCID 1 is configured in the DRB 1 between the UE-TX and the relay UE 1, whereas the LCID 2 is configured in the DRB 2 between the relay UE 1 and the UE-RX. In the SL communication, the LCID 1 for the DRB 1 is used for data to be transmitted from the UE-TX to the relay UE 1. The relay UE 1 changes the LCID 1 for the DRB 1 to the LCID 2 for the DRB 2. The LCID 2 for the DRB 2 is used for data to be transmitted from the relay UE 1 to the UE-RX.

A DRB identifier and the configuration of the LCID to be used for the relay transmission between the relay UE 1 and the UE-RX are notified to the UE-RX in advance. This enables the UE-RX to receive data of the LCID2 for the DRB 2.

The example of FIG. 38 enables configuration of the bearer for the SL communication between the relay UE and the UE-RX, according to a load state in the relay UE and a radio propagation state between the relay UE and the UE-RX.

The relay UE may map a plurality of radio bearers to one RLC bearer. The relay UE should include an identifier of a corresponding one of the radio bearers as a bearer configuration between the relay UE and the UE-RX. This can reduce the number of RLC bearers configured by the relay UE, and simplify the configuration.

Relaying data between the SDAP and the PDCP is disclosed as the protocol configuration of each node in performing the UE-to-UE indirect communication through a relay UE in the SL. As another configuration, data may be relayed between the SDAP and the V2X layer. The PC5 QoS flow-based data can be relayed.

In the SDAP, the PC5 QoS flow is mapped to the radio bearer. Mapping the PC5 QoS flow to the bearer between the UE-TX and the relay UE may be different from that between the relay UE and the UE-RX. The QoS flow is mapped to the radio bearer in the relay UE, according to the mapping method configured between the relay UE and the UE-RX. The relay UE or the UE-TX may configure mapping of the QoS flow to the bearer between the relay UE and the UE-RX. The aforementioned methods for configuring the DRB should be appropriately applied to the configuration method.

This enables the relay UE or the UE-TX to configure mapping of the QoS flow to the radio bearer for the SL communication between the relay UE and the UE-RX, using, for example, a load state in the relay UE or a radio propagation state between the relay UE and the UE-RX.

The aforementioned methods for configuring the DRB may be combined. For example, the configuration of the DRB and the mapping of the PC5 QoS flow to the DRB between the UE-TX and the relay UE may be different from those between the relay UE and the UE-RX. This enables more flexible configurations.

The method disclosed in the fourth embodiment enables the SL communication according to the QoS required for the V2X service in the UE-to-UE indirect communication through the relay UE.

In performing the indirect communication through the relay UE in the SL, the relay UE may hold data for a certain period. A timer may be provided as the certain period. The relay UE holds data to be relayed, until the timer expires. The relay UE may perform retransmission processes on data to be relayed, until the timer expires. The relay UE discards the data when the timer expires. The relay UE may notify the UE-TX that the data has been discarded. The relay UE may notify which data has been discarded. Information on the discarded data may be added to the transmission and reception states of data in the relay UE. The discarded data may be represented by, for example, the PDCP sequence number.

The UE-TX may configure the timer, and notify the relay UE of the configuration. Alternatively, the relay UE may configure the timer. When the relay UE configures the timer, the relay UE may notify the UE-TX or the UE-RX of the configuration of the timer. Alternatively, the configuration of the timer may be statically determined, for example, in a standard. This enables the relay UE to recognize the configuration of the timer.

Consequently, even when the timing to receive data from the UE-TX does not coincide with the timing to transmit and receive data to and from the UE-RX in the relay UE, malfunctions in processes of transmitting and receiving the data in the relay UE can be reduced.

### The First Modification of the Fourth Embodiment

For enhancing the reliability in the communication between a base station and a device, the packet duplication technology for duplicating one piece of data and transmitting and receiving the duplicated pieces of data through different paths exists (Non-Patent Document 16). In the packet duplication, a path or a protocol used in each path is sometimes referred to as a leg. The SL communication requires enhancing the reliability in the SL communication, using various services. However, none discloses a packet duplication method in the SL communication, particularly, a packet duplication method in performing the indirect communication through relay UEs in the SL communication.

The first modification of the fourth embodiment discloses a packet duplication method in performing the UE-to-UE indirect communication through relay UEs in the SL.

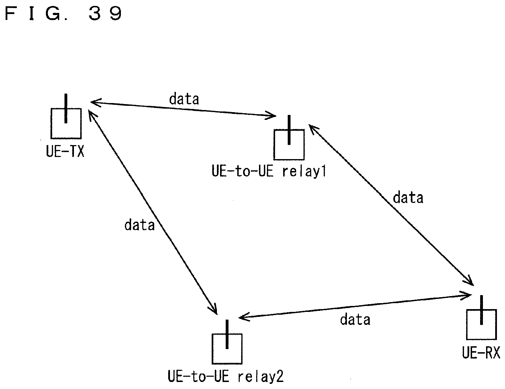

FIG. 39 is a conceptual diagram illustrating packet duplication in performing the indirect communication through relay UEs in the SL communication according to the first modification of the fourth embodiment. The UE-TX duplicates a packet, and transmits duplicated pieces of the data to the UE-RX through different relay UEs (relay UEs 1 and 2). The UE-RX receives the duplicated pieces of data from the relay UEs 1 and 2. When the piece of data received from one of the relay UEs is identical to that already received from the other relay UE, the UE-RX may discard the piece of data received later.

In the SL communication using a plurality of carriers (carrier frequencies), a relay configuration is established for each of the carriers. The UE-TX and the UE-RX may perform the SL communication using carrier aggregation (CA). A relay configuration may be established for each carrier of the CA. The same relay UE may be used for one or more carriers. A relay configuration need not be established for one or more carriers. In the SL communication using a plurality of carriers, the UE-to-UE direct communication or the UE-to-UE indirect communication through relay UEs may be configured for each of the carriers. For example, the method disclosed in Non-Patent Document 24 or the method disclosed in the fourth embodiment may be used as a method for establishing a relay configuration for each carrier.

The carrier between the relay UE and the UE-RX should be configured in the same manner as the carrier between the UE-TX and the relay UE. The same should apply to establishing a relay configuration for each carrier of the CA. The UE-TX or the relay UE may configure these. Alternatively, the gNB may configure these. Alternatively, the SUE may configure these. For example, if a node that performs scheduling configures a carrier, relay processes can be facilitated.

As another method, using the same carrier between the relay UE and the UE-RX as that between the UE-TX and the relay UE may be statically determined, for example, in a standard. Since this saves notification or signaling of information for establishing the configuration, the relay processes can be further facilitated.

The carrier between the relay UE and the UE-RX may be different from that between the UE-TX and the relay UE. In this case, the carrier between each of the relay UEs and the UE-RX should vary. The same should apply to establishing a relay configuration for each carrier of the CA. The UE-TX, the gNB, or the S-UE may configure these. This enables varying the carriers between each of the relay UEs and the UE-RX.

Consequently, the UE-TX can perform the UE-to-UE indirect communication with the UE-RX through relay UEs over different carriers. The use of different carriers between the UE-TX and each relay UE and different carriers between each of the relay UEs and the UE-RX enables the avoidance of the interference between resources to be used for the SL communication. Thus, the SL communication using a plurality of carriers (carrier frequencies) can be implemented with high communication quality and low latency.

A relay configuration may be established for each path in the packet duplication in the SL communication. The same relay UE may be used in one or more paths. Alternatively, a relay configuration need not be established in one or more paths. In the SL communication using a plurality of paths, the UE-to-UE direct communication or the UE-to-UE indirect communication through relay UEs may be configured for each of the paths. For example, the method disclosed in Non-Patent Document 24 or the method disclosed in the fourth embodiment may be used as a method for establishing a relay configuration for each path.

The packet duplication may be implemented using the CA in the SL communication. A relay configuration may be established for each carrier of the CA in the packet duplication using the CA. The method for establishing a relay configuration for each carrier of the CA and the method for establishing a relay configuration for each path may be combined, and may be appropriately applied as a method for establishing a relay configuration for each carrier of the CA.

For example, the carrier between the relay UE and the UE-RX may be configured in the same manner as the carrier between the UE-TX and the relay UE for each path in the packet duplication using the CA. The UE-TX or the relay UE may configure these. Alternatively, the gNB may configure these. Alternatively, the S-UE may configure these. For example, if a node that performs scheduling configures a carrier, relay processes can be facilitated.

To duplicate a packet in the SL, the UE-TX and the UE-RX configure, for each radio bearer, RLC bearers as many as the packets to be duplicated. The duplicated pieces of data are transmitted and received using each of the RLC bearers. For example, when the number of packets to be duplicated is 2, one DRB is configured for data communication in duplicating the packet, and two RLC bearers are configured in the DRB. Different LCIDs are assigned to the RLC bearers.

When a relay configuration is established for each path and a packet is duplicated in the SL communication, the UE-to-UE indirect communication through a relay UE is performed in the path. Thus, the RLC bearer between the UE-TX and the relay UE and the RLC bearer between the relay UE and the UE-RX should be configured.

When a relay configuration is established for each path and a packet is duplicated in the SL communication, for example, in the case where the LCID between the UE-TX and the relay UE is different from that between the relay UE and the UE-RX and further the LCID between the relay UE 1 and the UE-RX is the same as that between the relay UE 2 and the UE-RX, the UE-RX receives pieces of data with the same LCID. In such a case, the UE-RX cannot determine whether the received pieces of data correspond to the duplicated packets. Specifically, the normal packet duplication is impossible.

For solving such a problem, the same LCID should be assigned to the RLC bearer between the UE-TX and the relay UE and the RLC bearer between the relay UE and the UE-RX. Assignment of the same LCID enables the UE-RX to recognize which received pieces of data correspond to the duplicated packets. Since the LCID configured by the UE-TX side is used, the UE-RX can recognize which received pieces of data correspond to the duplicated packets, in the packet duplication using a path in which a relay configuration has been established and a path in which a relay configuration is not established.

The UE-TX or the relay UE may configure these. Alternatively, the gNB may configure these. Alternatively, the S-UE may configure these. For example, a node configuring the RLC bearer for the packet duplication may configure these. The configuration can be facilitated. For example, the relay UE may configure these. The relay UE may assign the LCID of the RLC bearer between the UE-TX and its own relay UE to the LCID of the RLC bearer between the relay UE and the UE-TX.

The method for configuring the bearer in the UE-to-UE indirect communication through relay UEs, which is disclosed in the fourth embodiment, should be appropriately applied to methods for configuring the RLC bearer and assigning the LCID in the path in which a relay configuration has been established. For example, the method disclosed in FIG. 37 may be appropriately applied.

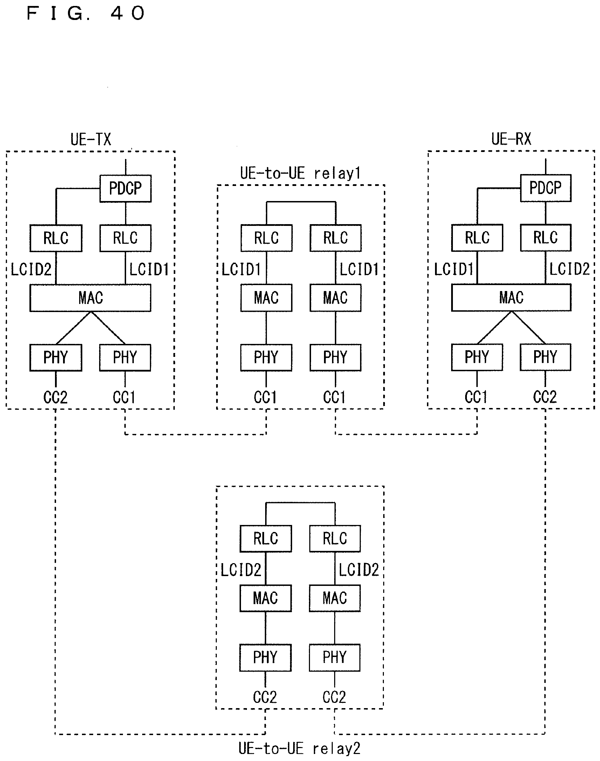

FIG. 40 illustrates an example protocol configuration for the packet duplication in performing the indirect communication through relay UEs in the SL communication. FIG. 40 discloses the packet duplication when a relay configuration is established in a path for each carrier of the CA. FIG. 40 discloses a case where the number of packets to be duplicated is 2. The relay UE 1 is configured in a carrier CC1 path, whereas the relay UE 2 is configured in a carrier CC2 path.

The PDCP of the UE-TX duplicates a packet. Two RLC bearers are configured as radio bearers for the packet duplication. The LCID 1 and the LCID 2 are assigned to the two RLC bearers. The pieces of data duplicated by the PDCP are transmitted to RLC channels of the RLC bearers, and received by the RLCs. The LCID 1 is assigned to the duplicated pieces of data processed by the RLCs. Then, the duplicated pieces of data are processed by the MAC. In the MAC, the duplicated pieces of data are mapped to different carriers. The association of mapping is predetermined, and controlled by the MAC. Here, the pieces of data mapped to the different carrier (here, the carriers CC1 and CC2 are used) are processed by the PHYs, and transmitted via the carriers. The LCID 2 is assigned to the duplicated pieces of data processed by the RLC. Then, the duplicated pieces of data are processed by the MAC. In the MAC, the duplicated pieces of data are mapped to different carriers. The association of mapping is predetermined, and controlled by the MAC. Here, the pieces of data mapped to the different carriers (here, the carriers CC1 and CC2 are used) are processed by the PHYs, and transmitted via the carriers.

The SL communication through the relay UE 1 is performed via the carrier CC1 between the UE-TX and the relay UE 1 and between the relay UE 1 and the UE-RX. The relay UE 1 receives the duplicated piece of data from the UE-TX, and performs the processes up to the RLC. The RLC bearer is configured between the relay UE 1 and the UE-RX. The LCID of the RLC bearer between the UE-TX and the relay UE 1 is assigned to the LCID of this RLC bearer. Consequently, the relay UE 1 can transmit, to the RLC channel at the transmission side to which the LCID 1 is assigned, the duplicated piece of data to which the LCID 1 is assigned at the reception side and which is output from the RLC channel.

The relay UE 1 feeds the duplicated piece of data to the RLC channel at the transmission side. Then, the RLC processes the duplicated piece of data. The LCID 1 is assigned to the duplicated piece of data processed by the RLC. Then, the duplicated pieces of data are processed by the MAC. The duplicated piece of data processed by the MAC is processed by the PHY, and transmitted via the carrier CC1. The UE-RX receives the duplicated piece of data from the relay UE, and performs the processes up to the RLC. The UE-RX processes, in the RLC, the duplicated piece of data to which the LCID 1 is assigned, outputs the duplicated piece of data to the RLC channel, and feeds the duplicated piece of data to the PDCP. The PDCP of the UE-RX can recognize that the received piece of data is the duplicated one upon its receipt from the RLC channel configured for the packet duplication.

The SL communication through the relay UE 2 is performed via the carrier CC2 between the UE-TX and the relay UE 2 and between the relay UE 2 and the UE-RX. This SL communication is performed similarly to the method for performing the SL communication through the relay UE 1 via the carrier CC1.

The UE-RX processes, in the PDCP, the duplicated piece of data output from the RLC channel of the RLC bearer which has been configured for the packet duplication, and feeds the duplicated piece of data from the PDCP to the SDAP. The PDCP of the UE-RX determines whether the duplicated piece of data fed from the RLC is identical to the piece already received. When determining that the duplicated piece of data fed from the RLC is identical to the piece already received, the PDCP of the UE-RX may discard the duplicated piece of data received later.

Assignment of the LCID between the UE-TX and the relay UE 1 to the LCID between the relay UE 1 and the UE-RX enables the UE-RX to normally duplicate a packet. This enables the packet duplication in performing the indirect communication through relay UEs in the SL communication. Consequently, the reliability of the SL communication can be enhanced.

The aforementioned example discloses assignment of the LCID between the UE-TX and the relay UE 1 to the LCID between the relay UE 1 and the UE-RX. Another example is disclosed. The LCID between the UE-TX and the relay UE may be different from the LCID between the relay UE and the UE-RX. Here, the LCID corresponding to the RLC bearer configured in a path between each relay UE and the UE-RX varies. The UE-TX, the gNB, or the S-UE may configure this. This enables varying the LCID of the RLC bearer between the relay UE and the UE-RX in each path for the packet duplication.

A node that has configured this notifies the UE-RX of this configuration. The node may notify this configuration through the relay UE. This enables the UE-RX to configure the RLC bearer and the LCID to be used in the packet duplication. Consequently, the UE-RX can normally duplicate a packet.

As described above, varying the LCID corresponding to the RLC bearer to be configured in a path between each of the relay UEs and the UE-RX and notifying the UE-RX of this configuration in the packet duplication enables the UE-RX to normally duplicate a packet. Consequently, the packet duplication in performing the indirect communication through relay UEs in the SL communication becomes possible. Thus, the reliability of the SL communication can be enhanced.

The UE-TX may notify the relay UE to cancel the configuration of the packet duplication. Alternatively, cancellation of the configuration of the packet duplication may be notified from the UE-TX to the relay UE and from the relay UE to the UE-RX. This enables cancellation of the configuration of the packet duplication in the UE-TX. Since this enables cancellation of transmission processes in the UE-TX and the bearer configurations for the packet duplication in the relay UE and the UE-RX, transmission and reception processes in the relay UE and reception processes in the UE-RX can be simplified.

The UE-TX may notify the UE-RX of information indicating whether to start or terminate the packet duplication. The UE-TX may notify the relay UE of information indicating whether to start or terminate the packet duplication. The information may be, for example, information indicating whether to activate or deactivate the packet duplication. The UE-TX may notify the information together with or separately from the configuration of the bearer in the packet duplication. For example, when the information indicates start of the packet duplication, the relay UE or the UE-RX starts the packet duplication processes. When the information indicates termination of the packet duplication, the relay UE or the UE-RX terminates the packet duplication processes.

This enables the UE-TX to recognize whether the relay UE or the UE-RX starts or terminates the packet duplication processes. This also enables termination of the packet duplication while the configuration of the packet duplication is maintained. Since the packet duplication processes need not be performed during the termination of the packet duplication, transmission processes in the UE-TX, transmission and reception processes in the relay UE, and reception processes in the UE-RX can be simplified. Since the packet duplication need not be configured in transitioning from termination to start of the packet duplication, the packet duplication can be started earlier. The SL communication using the packet duplication can be started with low latency.

The example of FIG. 40 discloses the packet duplication when a relay configuration is established in a path for each carrier of the CA. Another example of the packet duplication in performing the indirect communication through relay UEs in the SL communication is disclosed. The same carrier is used in a plurality of paths for the packet duplication. A relay UE is configured in each path for the packet duplication using the same carrier.

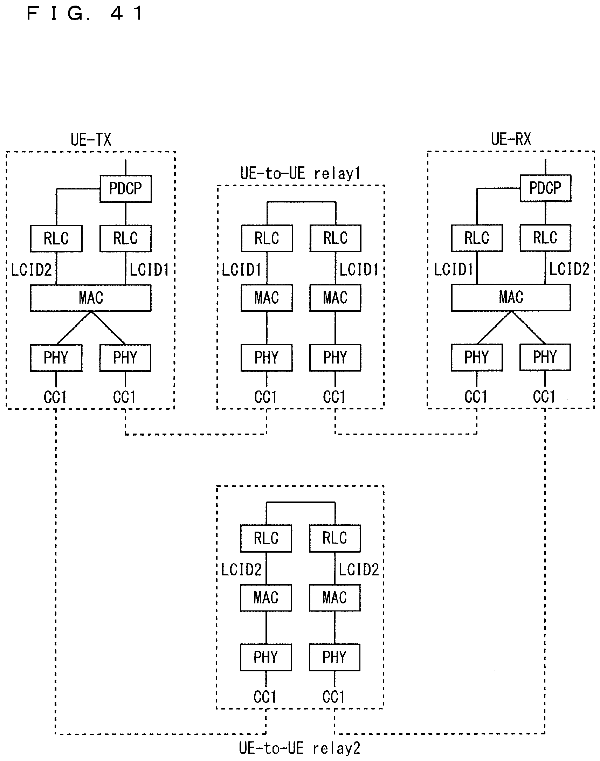

FIG. 41 illustrates another example protocol configuration for the packet duplication in performing the indirect communication through relay UEs in the SL communication. FIG. 41 discloses the packet duplication when the same carrier is used in paths for the packet duplication. FIG. 41 discloses a case where the number of packets to be duplicated is 2. The carrier CC1 is used in two paths for the packet duplication. The relay UE 1 is configured in one of the paths, and the relay UE 2 is configured in the other path.

Since the configurations of the RLC bearer and the LCID and the packet duplication processes in each node in the packet duplication are identical to those in FIG. 40, the description is omitted.

When the same carrier is used in the paths, resources to be used for the SL communication interfere with each other between the UE-TX and the relay UEs and between the relay UEs and the UE-RX. Thus, the collision in the resources sometimes increases the latency time of the SL communication or causes a communication interruption. A method for solving such problems is disclosed.

Different resources are configured in each path for the packet duplication. The resources may be handled as an RP. Alternatively, the resources may be resources to be reserved or selected for the SL communication. This enables the avoidance of the interference between resources to be used for the SL communication. The resources may be associated with the RLC channel or the LCID of the RLC bearer configured in each path for the packet duplication, and configured.

An identifier may be assigned to each path for the packet duplication. The identifiers of the paths and the resources may be associated with each other and configured. The UE-TX, the gNB, or the S-UE may configure these. This enables varying the LCID of the RLC bearer between the relay UE and the UE-RX in each path for the packet duplication.

The UE-TX or the relay UE may configure these. Alternatively, the gNB may configure these. Alternatively, the S-UE may configure these. For example, a node configuring the RLC bearer for the packet duplication may configure these. A node that has configured these notifies the relay UE and/or the UE-RX of these configurations. The node may notify the UE-RX of the configurations through the relay UE when notifying the UE-RX of these configurations. Upon receipt of the configurations, the node implements the configurations for the RLC bearer of its own node.

This enables the avoidance of the interference between resources even when the same carrier is used in paths for the packet duplication. Consequently, the UE-RX can receive the duplicated pieces of packet data at a lower error rate. This can prevent increase in the latency time of the SL communication, and reduce communication interruptions. When the indirect communication through relay UEs is performed in the SL communication, the packet duplication can enhance the reliability of the SL communication.

The UE-RX may notify the UE-TX of a request for the packet duplication. The UE-RX may notify, through relay UEs, the UE-TX of the request for the packet duplication. The UE-RX may notify information on an SL communication state between the relay UE and the UE-RX, together with the request for the packet duplication. The UE-RX may notify, for example, communication quality information between the relay UE and the UE-RX, or information on a data reception state in the UE-RX. For example, when the number of pieces of data successfully received through the relay UE falls below a certain value, the UE-RX notifies the UE-TX of a request for the packet duplication. Upon receipt of the request for the packet duplication from the UE-RX, the UE-TX may determine whether to duplicate a packet for the UE-RX, using the request. This enables the packet duplication in consideration of a data reception state in the UE-RX.

The relay UE may notify the UE-TX of a request for the packet duplication. The relay UE may notify information on an SL communication state between the relay UE and the UE-RX, together with the request for the packet duplication. The relay UE may notify, for example, communication quality information between the relay UE and the UE-RX, or information on a data transmission state from the relay UE to the UE-RX. Furthermore, the relay UE may notify, for example, communication quality information between the relay UE and the UE-TX, or information on a data reception state from the UE-TX to the relay UE.

For example, when the number of pieces of data successfully transmitted to the UE-RX falls below a certain value, the relay UE notifies the UE-TX of a request for the packet duplication. For example, when the number of pieces of data successfully received from the UE-TX falls below a certain value, the relay UE notifies the UE-TX of a request for the packet duplication. Upon receipt of the request for the packet duplication from the relay UE, the UE-TX may determine whether to duplicate a packet for the UE-RX, using the request. This enables the packet duplication in consideration of data transmission and reception states in the relay UE.

The method disclosed in the first modification of the fourth embodiment enables the packet duplication even in performing the UE-to-UE indirect communication through relays in the SL communication. This can bring the redundancy in the UE-to-UE indirect communication through relays, and enhance the reliability in various services using the SL communication.

The UE-TX may notify the relay UE of a request for the packet duplication between the relay UE and the UE-RX. The UE-TX notifies the request for the packet duplication between the relay UE and the UE-RX, in the SL communication to be performed with the UE-RX through the relay UE. Upon receipt of the request, the relay UE configures the packet duplication between the relay UE and the UE-RX, and duplicates a packet. The relay UE may notify the UE-TX of execution of the packet duplication between the relay UE and the UE-RX. The relay UE may give the notification as the acknowledgment to the request for the packet duplication. This can bring the redundancy in the communication between the relay UE and the UE-RX, even when the communication quality between the relay UE and the UE-RX is inferior. Consequently, the reliability of the communication can be enhanced.

Although the UE-TX requests the relay UE to duplicate a packet between the relay UE and the UE-RX in the aforementioned method, the relay UE may determine whether to duplicate a packet between the relay UE and the UE-RX as another method. The relay UE configures the packet duplication with the UE-RX, and duplicates a packet. This enables the packet duplication without waiting for the request from the UE-TX. This can bring the redundancy in the communication between the relay UE and the UE-RX earlier, and enhance the reliability in the communication.

The second modification of the fourth embodiment

In the UE-to-UE indirect communication through a relay in the SL, a plurality of UE-TXs sometimes transmit pieces of data to one UE-RX through one relay. Here, when the relay UE dedicatedly relays each of the pieces of transmission data from the UE-TXs to the UE-RX, the processes in the relay UE or in the UE-RX become complicated.

The second modification of the fourth embodiment discloses a method for solving such a problem.

The relay UE concatenates the pieces of data transmitted from a plurality of UE-TXs, and transmits the concatenated data to one UE-RX.

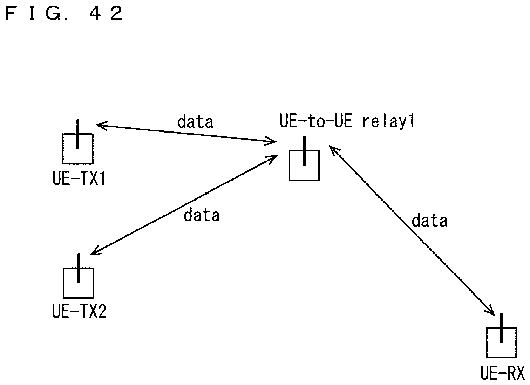

FIG. 42 is a conceptual diagram illustrating an example where the relay UE concatenates the pieces of data and relays the concatenated data in the SL communication according to the second modification of the fourth embodiment. Indirect communication between the UE-TX 1 and the UE-RX and indirect communication between the UE-TX 2 and the UE-RX all through the relay UE 1 are performed in the SL. The relay UE 1 concatenates the pieces of data transmitted from the UE-TXs 1 and 2 to the same UE-RX, and relays the concatenated data to the UE-RX.

However, the plurality of UE-TXs independently configure the RLC bearers and the LCIDs. Thus, the LCIDs of the RLC bearers between the UE-TXs and the relay UE sometimes overlap. Since the same LCID is assigned to the pieces of data transmitted from the plurality of UE-TXs, the MAC of the relay UE transmits the pieces of data without distinction in the transmission from the relay UE to the UE-RX. Furthermore, since the same LCID is assigned to the received pieces of data, the MAC of the UE-RX cannot distinguish from which UE-TX each of the pieces of data is. Thus, the UE-RX has a problem of failing to sort the pieces of data into the UE-TXs and normally receive the pieces of data.

A method for solving such a problem is disclosed. When the RLC bearer between the relay UE and the UE-RX is configured, a different LCID is assigned for each UE-TX.

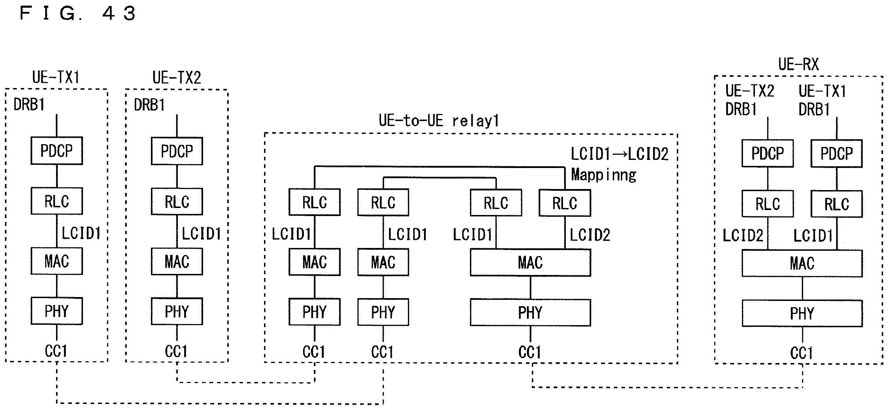

FIG. 43 illustrates the first example protocol configuration for the relay UE to concatenate the pieces of data and relay the concatenated data in the SL communication. Indirect communication between the UE-TX 1 and the UE-RX and indirect communication between the UE-TX 2 and the UE-RX all through the relay UE 1 are performed in the SL. FIG. 43 discloses an example where the relay UE 1 concatenates the pieces of data transmitted from the UE-TXs 1 and 2 to the same UE-RX and relays the concatenated data to the UE-RX.

The data generated by the UE-TX 1 is processed by the PDCP to the PHY configured by the radio bearer DRB 1, and transmitted via the carrier CC1. The relay UE 1 receives the data transmitted from the UE-TX 1, and performs the processes in the PHY to the RLC. The LCID 1 is assigned as the LCID corresponding to the RLC bearer between the UE-TX 1 and the relay UE 1. Similarly, the relay UE 1 receives the data generated by the UE-TX 2. A case where the same LCID 1 is assigned as the LCID corresponding to the RLC bearer between the UE-TX 2 and the relay UE 1 is disclosed.

The relay UE should configure the MAC for each UE-TX. The relay UE may configure a different RLC bearer for each UE-TX. This enables the relay UE to sort the pieces of data transmitted from the plurality of UE-TXs even when the same LCID is assigned to the pieces of data transmitted from the plurality of UE-TXs.

Identifier information on the UE-TXs may be provided. The identifier information on the UE-TXs may be included in the configuration of the RLC bearer. Each of the UE-TXs includes the identifier information on its own UE-TX in the configuration of the RLC bearer, and notifies the relay UE of the information. The relay UE can recognize for which UE-TX the configuration of the RLC bearer is.

The RLC bearer for each UE-TX may be associated with the radio bearer for each UE-TX, and configured. The configuration of the radio bearer between the relay UEs for each UE-TX may include the identifier information on the UE-TXs. Each of the UE-TXs includes the identifier information on its own UE-TX in the configuration of the radio bearer, and notifies the relay UE of the information. The relay UE can recognize for which UE-TX the configuration of the RLC bearer is.

The identifier of the UE-TX may be an L2 layer ID of the source. The UE-TX notifies the L2 layer ID of the source when notifying the relay UE of the configuration of the radio bearer or the configuration of the RLC bearer. The relay UE can identify the UE-TX from the L2 layer ID of the source that has established the configuration.

The relay UE 1 and the UE-RX configure the RLC bearer for transmitting data from the UE-TX 1 and the RLC bearer for transmitting data from the UE-TX 2. The relay UE 1 and the UE-RX establish the configurations so that the LCID of the RLC bearer for transmitting data from the UE-TX 1 is different from that for transmitting data from the UE-TX 2. The LCID to be configured later should be configured differently from the LCID configured earlier.

Since the LCID 1 is assigned as the LCID of the RLC bearer between the UE-TX 1 and the relay UE 1 in the example of FIG. 43, the LCID 1 is assigned to the LCID of the RLC bearer between the relay UE 1 and the UE-RX. The same LCID 1 is assigned as the LCID corresponding to the RLC bearer between the UE-TX 2 and the relay UE 1. Thus, the LCID 2 is assigned to the LCID of the RLC bearer between the relay UE 1 and the UE-RX so that the LCIDs are different from each other.

The relay UE 1 may configure these. Alternatively, when the gNB or the S-UE performs scheduling for both of the UE-TXs 1 and 2, the gNB or the S-UE may configure these. A node that has configured these notifies the relay UE 1 and/or the UE-RX of these configurations. The node may notify the UE-RX of the configurations through the relay UE 1. This enables the relay UE 1 and the UE-RX to configure the bearer.

The relay UE 1 feeds the data received from the UE-TX 1, to the RLC channel of the RLC bearer configured between the relay UE 1 and the UE-RX for the transmission data from the UE-TX 1. Here, the LCID 1 is assigned. The relay UE 1 feeds the data received from the UE-TX 2, to the RLC channel of the RLC bearer configured between the relay UE 1 and the UE-RX for the transmission data from the UE-TX 2. Here, the LCID 2 different from the LCID 1 is assigned.

The MAC processes the pieces of data fed to the RLCs. The MAC concatenates the pieces of data transmitted to the same UE-RX. For example, the relay UE may determine whether to concatenate the pieces of data, using L2 layer IDs of targets. For example, when the L2 layer IDs of the targets are identical, the MAC concatenates the pieces of data. When the L2 layer IDs of the targets are different, the MAC does not concatenate the pieces of data. Since the different LCIDs are assigned to the pieces of transmission data from the UE-TXs, the targets of the pieces of transmission data can be sorted even when the pieces of transmission data are concatenated by the MAC. The number of transmitting MACs of the relay UE may be one. The transmitting MACs of the relay UE may be as many as the UE-RXs to which the relay UE transmits the pieces of transmission data. This can facilitate the concatenation and the transmission for each of the UE-RXs.

The PHY processes and transmits the data concatenated by the transmitting MAC of the relay UE 1. The UE-RX processes, in the PHY and the MAC, the pieces of data received from the relay UE. The UE-RX sorts the pieces of data concatenated by the MAC. The UE-RX determines whether each of the pieces of data is of the RLC bearer configured for the transmission data from the UE-TX 1 or of the RLC bearer configured for the transmission data from the UE-TX 2, using the LCID assigned to the piece of data. The received piece of data to which the LCID 1 is assigned is sorted as the data of the RLC bearer configured for the transmission data from the UE-TX 1, is fed to the RLC of the RLC bearer for the UE-TX 1, is processed by the RLC, is fed to the PDCP, is processed by the PDCP, and is output to the SDAP. The received piece of data to which the LCID 2 is assigned is sorted as the data of the RLC bearer configured for the transmission data from the UE-TX 2, is fed to the RLC of the RLC bearer for the UE-TX 2, is processed by the RLC, is fed to the PDCP, is processed by the PDCP, and is output to the SDAP.

Consequently, the UE-RX can sort the pieces of data for each UE-TX. The UE-RX can normally receive the pieces of data from the UE-TXs which have been concatenated by the relay UE.

FIG. 43 discloses a case where the LCID of the RLC bearer between the UE-TX 1 and the relay UE which is configured by the UE-TX 1 is identical to the LCID of the RLC bearer between the UE-TX 2 and the relay UE which is configured by the UE-TX 2.

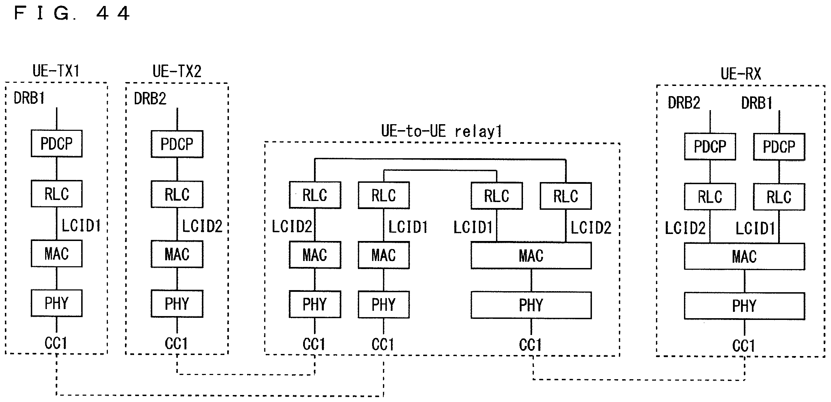

FIG. 44 illustrates the second example protocol configuration for the relay UE to concatenate the pieces of data and relay the concatenated data in the SL communication. An example where the LCID of the RLC bearer between the UE-TX 1 and the relay UE which is configured by the UE-TX 1 is different from the LCID of the RLC bearer between the UE-TX 2 and the relay UE which is configured by the UE-TX 2 is disclosed.

The relay UE 1 and the UE-RX configure the RLC bearer for transmitting data from the UE-TX 1 and the RLC bearer for transmitting data from the UE-TX 2. The relay UE 1 and the UE-RX establish the configuration so that the LCID of the RLC bearer for transmitting data from the UE-TX 1 is different from that for transmitting data from the UE-TX 2. The LCID to be configured later is configured differently from the LCID configured earlier.

Since the LCID 1 is assigned as the LCID of the RLC bearer between the UE-TX 1 and the relay UE 1 in the example of FIG. 44, the LCID 1 is assigned to the LCID of the RLC bearer between the relay UE 1 and the UE-RX. Since the LCID 2 is assigned as the LCID corresponding to the RLC bearer between the UE-TX 2 and the relay UE, this LCID is different from that of the RLC bearer between the UE-TX 1 and the relay UE. Thus, the LCID 2 is assigned as the LCID of the RLC bearer between the relay UE 1 and the UE-RX as it is.

Thus, when the RLC bearer between the relay UE and the UE-RX is configured, a different LCID can be assigned for each UE-TX. Since the processes for concatenating the pieces of data at each node of the relay UE are identical to those in FIG. 43, the description is omitted. Consequently, the UE-RX can sort the pieces of data for each UE-TX, and normally receive the pieces of data from the UE-TXs which have been concatenated by the relay UE.

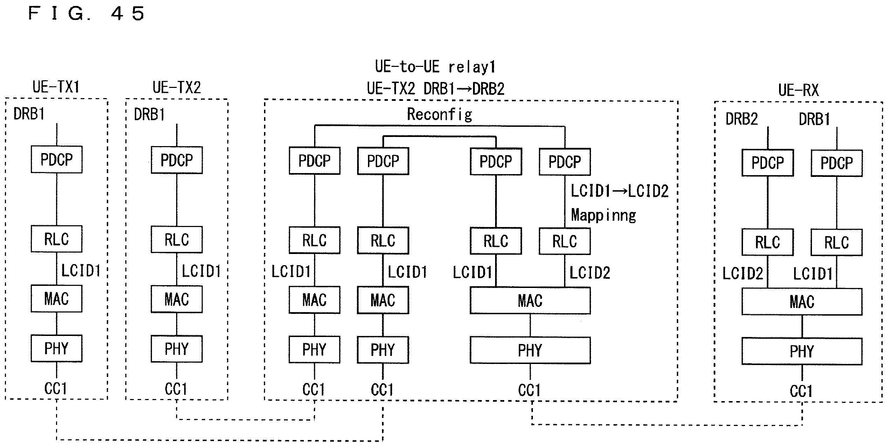

FIG. 45 illustrates the third example protocol configuration for the relay UE to concatenate the pieces of data and relay the concatenated data in the SL communication. The relay UE 1 (UE-to-UE relay1) relays data between the SDAP and the PDCP. FIG. 45 discloses an example where the configuration of the DRB between the UE-TXs and the relay UE is different from that between the relay UE and the UE-RX.

The radio bearer between the UE-TX 1 and the relay UE is set to the DRB 1, and the LCID of the RLC bearer is set to the LCID 1. The radio bearer between the UE-TX 2 and the relay UE is set to the DRB 1, and the LCID of the RLC bearer is set to the LCID 1. The same identifier of the radio bearer and the same LCID of the RLC bearer are configured both between the UE-TX 1 and the relay UE and between the UE-TX 2 and the relay UE.

The relay UE 1 and the UE-RX configure the radio bearer for transmitting data from the UE-TX 1 and the radio bearer for transmitting data from the UE-TX 2. The relay UE 1 and the UE-RX establish the configuration so that the identifier and the LCID of the radio bearer for transmitting data from the UE-TX 1 are different from those for transmitting data from the UE-TX 2. The identifier of the radio bearer and the LCID to be configured later should be configured differently from those configured earlier.

In the example of FIG. 45, the DRB 1 is configured as the identifier of the radio bearer between the UE-TX 1 and the relay UE, and the LCID 1 is configured as the LCID of the RLC bearer. Thus, the DRB 1 is configured as the identifier of the radio bearer between the relay UE 1 and the UE-RX, and the LCID 1 is configured as the LCID of the RLC bearer. The same DRB 1 is configured as the identifier of the radio bearer between the UE-TX 2 and the relay UE, and the same LCID 1 is configured as the LCID corresponding to the RLC bearer. Thus, the DRB 2 is configured as the identifier of the radio bearer between the relay UE 1 and the UE-RX, and the LCID 2 is configured as the LCID of the RLC bearer so that the identifiers of the radio bearers and the LCIDs are different from each other.

This enables the configuration of a different identifier of a radio bearer and a different LCID for each UE-TX in configuring a bearer between the relay UE and the UE-RX. Since the processes for concatenating the pieces of data at each node of the relay UE are identical to those in FIG. 43, the description is omitted. Consequently, the UE-RX can sort the pieces of data for each UE-TX, and normally receive the pieces of data from the UE-TXs which have been concatenated by the relay UE.

Another method for a relay UE to concatenate the pieces of data transmitted from a plurality of UE-TXs and transmit the concatenated data to one UE-RX is disclosed. The relay UE may map a plurality of radio bearers to one radio bearer and relay the plurality of radio bearers. The relay UE may assign identifiers to different radio bearers in the mapping. The UE-TX or the relay UE may assign these. The identifiers of the radio bearers may be associated with identifiers of the UE-TXs. For example, even in relaying data between the SDAP and the PDCP, the relay UE can concatenate the pieces of data transmitted from a plurality of UE-TXs, and transmit the concatenated data to one UE-RX.

Another method for a relay UE to concatenate the pieces of data transmitted from a plurality of UE-TXs and transmit the concatenated data to one UE-RX is disclosed. The relay UE may map a plurality of QoS flows to one QoS flow and relay the plurality of QoS flows. Alternatively, the relay UE may map a plurality of QoS flows to one radio bearer and relay the plurality of QoS flows. The relay UE may assign identifiers to different QoS flows in the mapping. The UE-TX or the relay UE may assign these. The identifiers of the QoS flows may be associated with identifiers of the UE-TXs. For example, even in relaying data between the SDAP and the V2X layer, the relay UE can concatenate the pieces of data transmitted from a plurality of UE-TXs, and transmit the concatenated data to one UE-RX.

The method disclosed in the second modification of the fourth embodiment enables a plurality of UE-TXs to transmit pieces of data to one UE-RX through one relay in the UE-to-UE indirect communication through the relay in the SL. The relay UE and the UE-RX need not establish a plurality of PC5 links or the RRC connection. The processes for the UE-to-UE indirect communication from a plurality of UE-TXs to one UE-RX through a relay UE can be simplified.

### The Fifth Embodiment

An exceptional resource pool (exceptional RP) exists as a resource pool to be used during the HO in the SL communication (see Non-Patent Document 1). For example, when many UEs simultaneously perform the HOs, all the UEs perform the SL communications using the exceptional RP. Due to the congestion in the exceptional RP, resources for the SL communications cannot be reserved, and the delay until the communication or a communication interruption occurs. For solving such problems, introduction of a validity area has been proposed (see Non-Patent Document 25).

A validity area is configured as an area in which an RP is available. The validity area is configured in a range larger than the coverage of one cell. A system information area ID (systemInformationAreaID) to be broadcast from the cell as system information is used in configuring the validity area (see Non-Patent Document 26). The system information area ID indicates which system information area the cell belongs to, and is assigned to each SIB. The system information area ID should be assigned to each SIB per which an RP is configured.

The use of the system information area ID as a validity area enables the use of the RP in a larger range. For example, when the HO is performed between cells to which the same system information area ID has been assigned, the exceptional RP need not be used. Thus, the congestion in the exceptional RP can be reduced.

However, even when the system information area ID is used, the exceptional RP needs to be used in the HO between validity areas. Thus, when many UEs simultaneously perform the HOs, the congestion in the exceptional RP causes the delay until the communication or a communication interruption as described above.

The fifth embodiment discloses a method for solving such a problem.

One or more system information area IDs are assigned to one cell. The cell broadcasts system information with the one or more system information area IDs. When system information area IDs are assigned to a plurality of cells, combinations of the plurality of cells to which the system information area IDs are assigned may be various. For example, the system information area IDs should be assigned by avoiding any change in all the system information area IDs during the HO between the cells.

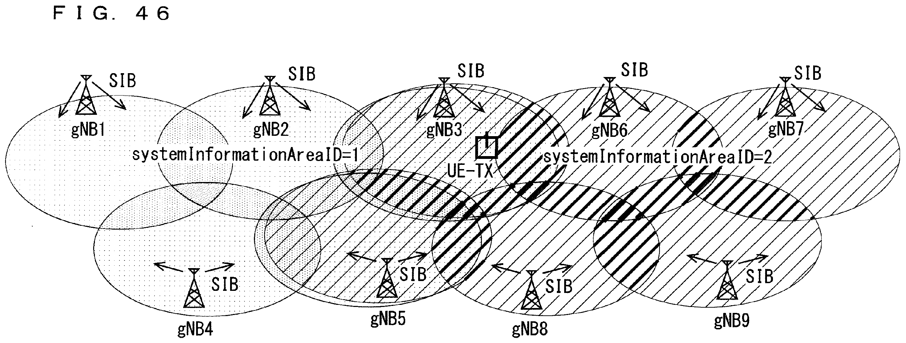

FIG. 46 illustrates an example of assigning a plurality of system information area IDs to one cell according to the fifth embodiment. 1 is assigned to certain SIBs of the gNBs 1 to 5 as a system information area ID. Furthermore, 2 is assigned to certain SIBs of the gNBs 3 and 5 to 9 as a system information area ID. The certain SIBs may be any of a part or all the SIBs to be broadcast by the cell.

1 is assigned to certain SIBs broadcast by the gNBs 1, 2, and 4 as the system information area ID. 2 is assigned to certain SIBs broadcast by the gNBs 6 to 9 as the system information area ID. 1 and 2 are assigned to certain SIBs broadcast by the gNBs 3 and 5 as the system information area IDs. This enables assignment of a plurality of system information area IDs to one cell, for example, each of the gNBs 3 and 5.

A conventional method for configuring the SIB and the system information area ID is assigning a system information area ID to an SIB. Thus, even when a plurality of system information area IDs are assigned to the SIB, a plurality of values cannot be assigned to the SIB. A method for solving such a problem is disclosed.

A plurality of SIBs with one or more different pieces of information within an SIB are provided in one SIB including pieces of information of the same kind. For example, a SIB18-1 and a SIB18-2 with different pieces of information are provided in an SIB 18. The system information area IDs should be assigned to such SIBs. A different system information area ID should be assigned to each of the SIBs with different pieces of information. This enables assignment of each system information area ID to the SIB with a different piece of information.

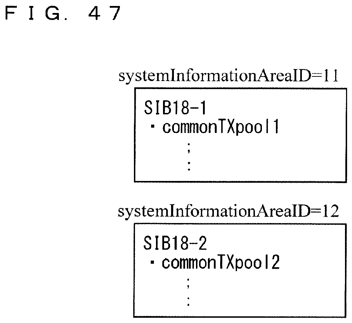

FIG. 47 illustrates an example of providing a plurality of SIBs with one or more different pieces of information in one SIB including pieces of information of the same kind according to the fifth embodiment. The SIB 18-1 and the SIB 18-2 with values of different pieces of information are provided, in the SIB 18 with common TX pools (commonTXpool) to be used in the SL as pieces of information of the same kind. A common TX pool 1 (commonTXpool1) is configured for the SIB18-1, and a common TX pool 2 (commonTXpool2) is configured for the SIB18-2.

The system information area ID is assigned to each of the SIB18-1 and the SIB 18-2. 11 is assigned to the SIB18-1 as the system information area ID, and 12 is assigned to the SIB18-2 as the system information area ID. The cell broadcasts the system information area IDs assigned to the SIB18-1 and the SIB 18-2.

This enables the cell to associate a plurality of pieces of system information with the system information area IDs and broadcast the plurality of pieces of system information. Upon receipt of the pieces of system information broadcast from the cell, the UE can recognize the pieces of system information associated with a plurality of system information area IDs.

Another method is disclosed. In one SIB including pieces of information of the same kind, a system information area ID is assigned to each of pieces of information within an SIB. This enables assignment of a plurality of system information area IDs to each of pieces of information in one SIB. This enables configuration of different pieces of information to the system information area IDs in one SIB.

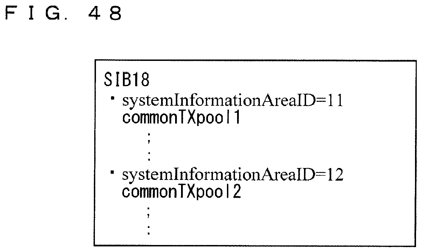

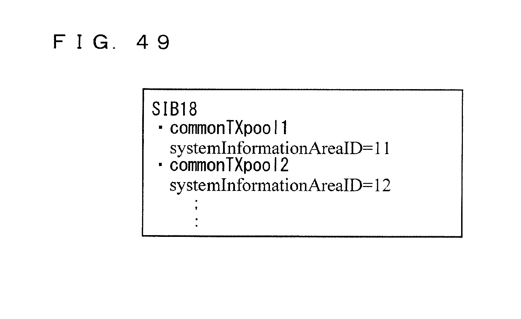

FIGS. 48 and 49 illustrate example configurations of different pieces of information to system information areas ID in one SIB according to the fifth embodiment. In the first example of FIG. 48, a plurality of system information area IDs are assigned in the SIB 18. The common TX pool 1 (commonTXpool1) is configured for the configuration of the system information area ID = 11, and the common TX pool 2 (commonTXpool2) is configured for the configuration of the system information area ID = 12.

In the second example of FIG. 49, a system information area ID is assigned to each of pieces of information in the SIB 18. The system information area ID = 11 is assigned to the common TX pool 1 (commonTXpool1), and the system information area ID = 12 is assigned to the common TX pool 2 (commonTXpool2).

This enables configuration of the different pieces of information and the system information area IDs corresponding to the pieces of information on the SIB.

A method for configuring the RP for the SL communication is disclosed.

One cell configures one or more validity areas. When validity areas are configured in a plurality of cells, combinations of the plurality of cells in which the validity areas are configured may be various. Target areas in which one cell configures one or more validity areas may be limited to validity areas of RPs for the SL. The validity areas may be configured so that all the validity areas between adjacent cells are consistent.

A validity area of the RP should be configured using the system information area ID. The validity area should be associated with the system information area ID. The cell should configure validity areas of one or more RPs, using the system information area IDs. Alternatively, the method for assigning the system information area ID may be appropriately applied to configuring the validity area of the RP. Validity area IDs may be provided. The validity area IDs may be used instead of the system information area IDs. The cell should broadcast validity areas of one or more RPs configured for a SIB. This enables configuration of a plurality of validity areas for one cell.

The UE that performs the SL communication (UE-TX) should search for all the RPs configured in the SIB to select resources to be used for the SL communication. When a plurality of system information area IDs are assigned, the UE-TX should search for all the RPs corresponding to the assigned system information area IDs. The UE-TX searches for and selects, in a target cell during the HO, the resources to be used for the SL communication from the RP to which the system information area ID identical to that of a source cell is assigned, and schedules the SL communication.

When the HO is initiated, for example, upon receipt of a HO command from the source cell, the UE-TX may search for all the RPs configured in the SIB. Alternatively, when the communication quality with a cell deteriorates, the UE-TX may search for all the RPs configured in the SIB. For example, when the communication quality with the cell falls below a certain threshold, the UE-TX may search for all the RPs configured in the SIB. Searching for all the RPs saves the UE-TX from changing the RP in the cell in which the HO is performed.

After the completion of the HO, the UE-TX searches for all the RPs configured in the SIB to select, in the target cell, the resources to be used for the SL communication. When a plurality of system information area IDs are assigned, the UE-TX should search for all the RPs corresponding to the assigned system information area IDs. Consequently, the UE-TX need not change the RP during the HO. After the completion of the HO, the UE-TX can perform the SL communication in the target cell, using the RP different from that used during the HO.

The cell may notify the UE of the system information area ID via dedicated signaling. Consequently, a system information area can be configured dedicatedly for each UE. The cell may notify the UE of the validity area via dedicated signaling. Consequently, a validity area can be configured dedicatedly for each UE.

The system information area ID may be activated/deactivated. Information indicating activation/deactivation of the system information area ID may be provided. The validity area may be activated/deactivated. Information indicating activation/deactivation of the validity area may be provided.

For example, the cell broadcasts a plurality of system information area IDs to the UE-TX. The cell activates a certain system information area ID, and notifies the UE-TX of the configuration via UE-dedicated signaling. Through this notification, the UE-TX may validate the activated system information area ID, and use the SIB. When notified of the deactivation, the UE-TX invalidates the deactivated system information area ID, and does not use the SIB. The number of certain system information area IDs may be one or more. Consequently, the system information area configured for the UE can be flexibly changed.

For example, the cell broadcasts a plurality of validity areas to the UE-TX. The cell activates or deactivates a certain validity area, and notifies the UE-TX of the configuration via UE-dedicated signaling. The UE-TX may validate the activated validity area, and use the RP. When notified of the deactivation, the UE-TX invalidates the deactivated validity area, and does not use the RP. Consequently, the RP configured for the UE can be flexibly changed.

What is disclosed is that the cell notifies the UE-TX of a system information area ID or a validity area, or its activation/deactivation via UE-dedicated signaling. The signaling may be the RRC signaling. This enables configuration of many more pieces of information. Alternatively, the MAC signaling may be used. The cell may include the aforementioned information in a MAC CE, and notify the information. This can support the HARQ, and enables the cell to give the notification earlier with low reception errors. Alternatively, the cell may include the information in the DCI, and notify the information. This enables the cell to give the notification much earlier.

The method disclosed in the fifth embodiment prevents the resources for the SL communication from concentrating on the exceptional RP even when many UEs simultaneously perform the HOs. The method can reduce an increase in the latency time until the communication or communication interruptions all of which are caused by the congestion in the RP.

The embodiments and the modifications are mere exemplifications of the present invention, and can be freely combined within the scope of the present invention. The arbitrary constituent elements of the embodiments and the modifications can be appropriately modified or omitted.

For example, a subframe in the embodiments and the modifications is an example time unit of communication in the fifth generation base station communication system. The subframe may be configured per scheduling. The processes described in the embodiments and the modifications as being performed per subframe may be performed per TTI, per slot, per sub-slot, or per mini-slot.

For example, the methods disclosed in the embodiments and its modifications may be applied not only to the vehicle-to-everything (V2X) services but also to services using the SL communication. The methods disclosed in the embodiments and its modifications may be applied to the SL communication to be used in various services, for example, the proximity-based service, public safety, communication between wearable devices, and Device-to-Device communication in factories.

While the present invention is described in detail, the foregoing description is in all aspects illustrative and does not restrict the present invention. Therefore, numerous modifications and variations that have not yet been exemplified can be devised without departing from the scope of the present invention.

### Description of References

- 200: communication system
- 202: communication terminal device
- 203: base station device
- 210: communication system.

## Claims

1. A communication system, comprising:
- a base station; and
- a plurality of communication terminals configured to perform communication with the base station and perform Device-to-Device communication,
- wherein a first communication terminal transmits, to a third communication terminal, a scheduling request for performing the Device-to-Device communication with a second communication terminal, the first, second, and third communication terminals being included in the plurality of communication terminals,
- wherein the third communication terminal transmits, to the base station, the scheduling request received from the first communication terminal,
- wherein in response to the scheduling request received from the third communication terminal, the base station generates scheduling information on the Device-to-Device communication between the first communication terminal and the second communication terminal, and transmits the scheduling information to the third communication terminal, and
- wherein the third communication terminal transmits, to the first communication terminal, the scheduling information received from the base station.

2. The communication system according to claim 1,
wherein the first communication terminal provides information relevant to the Device-to-Device communication with the second communication terminal to a host device of the base station through the base station, prior to transmitting the scheduling request, and
wherein the base station obtains the information from the host device, and generates the scheduling information using the information.

3. A communication terminal configured to perform communication with a base station and perform Device-to-Device communication,
wherein the communication terminal transmits, to another communication terminal, a scheduling request for performing the Device-to-Device communication, and
wherein the communication terminal receives, from the other communication terminal, scheduling information generated in response to the scheduling request.

4. A communication terminal configured to perform communication with a base station and perform Device-to-Device communication,
wherein the communication terminal receives, from another communication terminal, a scheduling request for performing the Device-to-Device communication with the other communication terminal, and transmits the scheduling request to the base station, and
wherein the communication terminal receives, from the base station, scheduling information generated by the base station in response to the scheduling request, and transmits the scheduling information to the other communication terminal.

5. A base station configured to perform communication with communication terminals,
wherein the base station receives, from a third communication terminal, a scheduling request for performing Device-to-Device communication between a first communication terminal and a second communication terminal,
wherein in response to the scheduling request, the base station generates scheduling information on the Device-to-Device communication between the first communication terminal and the second communication terminal, and
wherein the base station transmits the scheduling information to the third communication terminal.
